# EUROPEAN PATENT SPECIFICATION

(11) **EP 2 000 485 B1**
(45) Date of publication and mention of the grant of the patent: **11.08.2010**
(21) Application number: 07109152.4
(22) Date of filing: 29.05.2007
(51) Int. Cl.: C08F 220/56

(54) **Formaldehyde-free emulsion polymer dispersion composition including fully hydrolyzed polyvinyl alcohol as colloidal stabilizer provding improved heat resistance**
Formaldehydfreie Emulsionszusammensetzung mit Polymerdispersion und vollständig hydrolisiertem Polyvinylalkohol als Kolloidstabilisator für verbesserte Wärmebeständigkeit
Composition de dispersion de polymères d'émulsion dépourvue de formaldéhydes y compris un alcool polyvinylique entièrement hydrolysé en tant que stabilisateur colloïdal fournissant une résistance à la chaleur améliorée.

(43) Date of publication of application: 10.12.2008
(73) Proprietor: Wacker Chemical Corporation, Adrian, MI 49221-9397 (US)
(72) Inventor: Zecha, Helmut, 84489, Burghausen (DE); Weissgerber, Rudolf, 84489, Burghausen (DE)
(74) Representative: Schwabe, Hans-Georg

(56) References cited:
- EP-A- 1 170 311
- EP-A- 1 777 241

## Description

### Field of the Invention

This invention relates to formaldehyde-free aqueous polymer dispersions obtainable by emulsion polymerization in the presence of polyvinyl alcohol. More specifically this invention relates to an aqueous polymer dispersion composition containing vinyl ester based copolymer particles stabilized in the presence of fully hydrolyzed polyvinyl alcohol. In particular, this invention relates to the use of (meth)acrylic acid amide(s) as comonomer(s) for providing improved heat resistance of material bonds made with such aqueous polymer dispersions. This invention further allows for a formaldehyde free adhesive formulation incorporating said aqueous polymer dispersion, and relates to the use of said adhesive formulation for binders, especially for wood adhesives or wood glues and for paper and packaging adhesives. Especially this invention provides water resistant and heat resistant wood glues that avoid discoloration of wood due to bonding which is especially important for veneer gluing. This invention additionally relates to a process of emulsion polymerization to obtain the aqueous polymer dispersion of the invention.

### Background of the Invention

There are different ways of stabilizing dispersions, obtained by emulsion polymerization to prevent coagulation of the polymer particles: conventionally, this is achieved by the use of ionic or nonionic surfactants or by the use of charged initiators, resulting in electrostatic repulsion of the respective particles. Another way of stabilizing aqueous polymer dispersions is the use of protective colloids, which has attracted some attention in the recent past and which traditionally strictly separates between the use of fully hydrolyzed protective colloids, and partially hydrolyzed protective colloids, due to differing requirements and performance.

A vinyl ester based emulsion polymer, especially such based on vinyl acetate (VAC), obtained by free radical polymerization in aqueous phase in the presence of standard polyvinyl alcohol (S-PVOH) has been described some time ago, e.g. in DE 727 955. The use of such polyvinyl acetate emulsion in adhesives is reviewed e.g. by H.L. Jaffe, F.M. Rosenblum and W. Daniels in Handbook of Adhesives, ISBN 0-442-28013-0, ed. by Irving Skeist, Van Nostrand Reinhold, New York, 1990, p. 381 - 407 (Reference [1]). Several advantages of the use of polyvinyl alcohol particle protection are reported, such as good machinability, easy clean up, good wet tack, rapid setting speed, rapid thickening response, good heat resistance, low degree of blocking, and crosslinkability. Additional advantages are mentioned such as good (thixotropic) flow behavior, non-slinging, non-spitting or non-throwing behavior on machine, better water resistance than surfactant stabilized VAC emulsion polymer films, good adhesion to cellulosic substrates such as wood or paper, good open time of the adhesive film. Further, polyvinyl alcohol improves cohesive strength of a polymer film and creep resistance of a bond.

A trade-off conventionally associated with the advantages of polyvinyl alcohol in wood adhesives is water sensitivity of polymer films and of the adhesive wood bond. This appears to be due to the fact that polyvinyl alcohol itself is a water soluble polymer.

For wood adhesives the cohesion strength of the dry bond, in particular under ambient temperature, is of paramount importance. In addition, there are further demands for high quality wood adhesives, among which the water resistance of the bond, as well as its heat and creep resistance play a significant role. Therefore, standard test procedures exist for water resistance (DIN EN 204/205), for heat resistance or WATT (DIN EN 14257) and for creep resistance (B.S. 3544).

Further requirements for wood adhesives are related to their rheological properties, such as viscosity and its shear rate dependence, their shelf life or stability, including their colloidal stability in general and their viscosity stability in particular. Additionally, the adhesive shall provide a high setting speed of wood bond on the one hand, and on the other hand it shall provide a sufficient long open time.

It is generally accepted in the art, that many of the important and desired properties of a wood adhesive depend on
(i) the choice of kind and/or amount of polyvinyl alcohol compound or its blend, including modified polyvinyl alcohol (X-PVOH);
(ii) the polymer composition, in particular kind and/or amount of the used monomers in emulsion polymerization.
In addition, it is known that
(iii) the process of emulsion polymerization;
(iv) kind and amount of additional compounds used during emulsion polymerization, e.g. for initiation, chain transfer, additional colloidal stabilization, or for other purpose;
(v) kind and amount of compounds used as post adds in the formulation of the adhesive may have a major influence on the properties of the adhesive. In most cases fusion or coalescing agents to adjust minimum film formation temperature of the adhesive are necessary. Compounds causing crosslinking either of the emulsion polymer or of the polyvinyl alcohol, including modified polyvinyl alcohol (X-PVOH), or of both, often play a dominant role. Further additives are described e.g. in Reference [1], p. 381 - 400.

### Degree of hydrolysis of PVOH used in polymerization

The term S-PVOH as used here defines an unmodified or standard polyvinyl alcohol obtained by hydrolysis or saponification of vinyl acetate homopolymer, as described e.g. by F.L. Marten and C.W. Zvanut in "Polyvinyl Alcohol - Developments", C.A. Finch (Ed.), Wiley, Chichester, 1992 (Reference [2]). Initiator end groups resulting from the used radical forming compounds in earlier vinyl acetate polymerization are mostly neglected if they do not include special functionality.
The term X-PVOH as used here defines a polyvinyl alcohol obtained by hydrolysis of a vinyl acetate copolymer including at least one comonomer X or special functional compounds X such as functional radical forming compounds or initiators or chain transfer compounds. Examples for the comonomers X have been given e.g. by T. Okaya in Reference [2], p. 77 - 103, or by M. Maruhashi in Reference [2], p. 157 - 194. Examples for special functional compounds X have been described by T. Okaya and T. Sato in Reference [2], p. 105 - 156. Reference is made also to D.B. Farmer in Reference [2], p. 433 - 468.

Among the X-PVOH compounds, modified polyvinyl alcohols containing ethylene units of less than about 15 mol% enjoy growing interest in vinyl ester emulsion polymerization, as described in JP 911002. X-PVOH, that has been exclusively or inter alia modified by ethylene units within the polymer chain is referred to as E-PVOH in the sense of the present invention. Another interesting group of modified polyvinyl alcohol is such PVOH containing acetoacetyl groups which is referred to as A-PVOH. The term PVOH includes both S-PVOH and X-PVOH, which in turn includes E-PVOH or A-PVOH.

PVOH compounds differ in molecular weight or molecular weight distribution, in degree of hydrolysis or in hydrolysis distribution, or in other words in residual content of acetyl groups, and in sequence-length distribution or "blockiness" of residual acetyl groups and, in the case of X-PVOH also in amount and sequence-length distribution of the modifying X-group. This names the main differences, others are described e.g. by F.L. Marten and C.W. Zvanut in Reference [2], p. 31 - 76.

Industrial PVOH grades mainly include fully hydrolyzed PVOH, in particular with a degree of hydrolysis of ≥ 98 mol%, as well as intermediate hydrolyzed (93 - 97 mol%) and partially hydrolyzed (85 - 92 mol%) forms of PVOH.

Partially hydrolyzed (in particular 87 - 89 mol%) PVOH grades are commonly used as a protective colloid in the industrial emulsion polymerization of vinyl esters, especially of VAC, whereas fully hydrolyzed PVOH grades are normally not used during industrial emulsion polymerization. Rather, they may be added after the polymerization is complete to increase the water resistance of the latex films; compare e.g. H.Y. Erbil in "Vinyl Acetate Emulsion Polymerization and Copolymerization with Acrylic Monomers", CRC Press, Boca Raton, London, New York, Washington D.C., 2000, (Reference [3]), p. 150 - 154. Also according to Reference [3], p. 84 - 86, partially hydrolyzed PVOH grades comprising about 12 mol% acetate groups are preferred in emulsion polymerization because of their better balance of hydrophilic and hydrophobic properties. According to US 3,827,996 the use of PVOH with an average residual acetate content of less than 3 mol%, i.e. with a degree of hydrolysis above 97 mol%, results in dispersions with deficient stability. Also, according to US 5,434,216 it is generally agreed that with increasing degree of hydrolysis of the polyvinyl alcohol above 88%, its ability to perform as an effective protective colloid decreases. US 5,434,216 therefore relies on the use of a blend of fully hydrolyzed S-PVOH having a degree of hydrolysis of 95 to 99.5% and a partially hydrolyzed S-PVOH being 88% hydrolyzed.

GB 1228380 as an example for a multitude of comparable patents claims that fully or nearly fully hydrolyzed PVOH can be used as a post addition ingredient, eventually in combination with further compounds, i.e. after the emulsion polymerization of a vinyl ester is complete. EP 0 851 015 B1 discloses vinyl ester - ethylene copolymers polymerized in the presence of partially hydrolyzed PVOH followed by addition of 85 - 100 mol% hydrolyzed PVOH for use as an adhesive. US 5,932,647 discloses wood glue powders comprising 70 - 90 wt.% of one or more vinyl ester homopolymer(s) or copolymer(s) and 10 - 30 wt.% of one or more fully hydrolyzed vinyl alcohol homopolymer(s) or copolymer(s). DE 199 41 904 A1 discloses an adhesive for particulate boards comprising a blend of one or more carboxylic group-containing VAC polymers, and one or more PVOH with a degree of hydrolysis of 95 to 100 mol%, and water soluble metal salts. US 3,925,289 discloses an aqueous adhesive composition consisting of (i) a PVOH containing VAC based dispersion, (ii) persulfate, and (iii) a multifunctional compound, e.g. N-methylol acrylamide (NMA), wherein the PVOH, the persulfate and the multifunctional compound are post-added to a VAC based dispersion. The PVOH can be fully hydrolyzed or partially hydrolyzed. GB 1 228 380 teaches that an adhesive composition containing a water soluble nitrogen containing polymer, particularly poly acrylamide, or PVOH having a degree of hydrolysis of at least 96 wt.% gives a substantial improvement over known compositions in its performance under wet conditions.

Apparently, a general agreement exists that the principal water sensitivity of a polymer film caused by the PVOH is somewhat reduced with increasing degree of PVOH hydrolysis (see e.g. Reference [1]). Several attempts have thus been made to use fully hydrolyzed PVOH in emulsion polymerization despite the accepted poor colloidal stabilizer properties of such PVOH grades.

A research study was made by Hayashi (Polym. Plast. Technol. Eng., 27(1998),61; quoted by Farmer in Reference [2]). There, 98.8 mol% hydrolyzed PVOH was used in an amount of 5 wt.% based on total poly vinyl acetate emulsion of 50 wt.% solids, and hydrogen peroxide was used as an initiator in the presence of tartaric acid. Due to the low fraction of PVOH such product is not suitable as wood adhesive in terms of sufficient bond strength. Furthermore, such product reveals poor heat resistance and stability.

Noro (Br. Polymer Journal 2(1970)128; quoted in [3], p. 283) reports that when fully hydrolyzed PVOH was used as a protective colloid in VAC polymerization in order to improve water resistance, the storage stability was poor.

A couple of scientific studies comparing grafting of the VAC monomer onto partially hydrolyzed PVOH and onto fully hydrolyzed PVOH have been reported. Methods used to identify "grafting" are as different as the reported results, compare e.g. Farmer in [2]. None of the disclosed recipes so far, however, including only fully hydrolyzed PVOH, is suitable as a wood adhesive.

### Fully hydrolyzed PVOH

US 2,892,802 discloses an aqueous phase reaction medium useful in emulsion polymerization of ethylenically unsaturated monomers to produce polymer-in-water coating compositions which comprise a water soluble, nonionic protective colloid, the essential component of which is PVOH of at least 95%, preferably more than 98% hydrolyzed quality, a non-ionic surfactant and a symmetrical, acetylenic ditertiary di-alcohol such as dimethyl hexyne diol or dimethyl octyne diol.

US 3,644,257 discloses a corrugating adhesive composition curable at a pH below about 6, and characterized by high water resistance when cured. The composition is an acidic mixture comprising an aqueous solution of high molecular weight polyvinyl alcohol at least 96 percent hydrolyzed in aqueous solution, an aqueous latex of a copolymer of vinyl acetate with a minor amount of co-reactive olefinically unsaturated carboxylated monomer, in particular acrylic acid. Such product suitable for corrugated paperboard will cause discoloration when used as wood adhesive. Due to the high total amount of PVOH, the water resistance of the bond will be insufficient.

DE 2 139 262 discloses a process to prepare stable latexes of copolymers of VAC and NMA, containing a fully hydrolyzed PVOH and a surfactant. The PVOH has a degree of hydrolysis of at least 91%, preferred of at least 97% and in particular greater than 99%. US 3,730,933 again discloses a process of emulsion polymerization of VAC/NMA, for water resistance but here apart from fully hydrolyzed PVOH no surfactant is needed as stabilizing agent. The PVOH used has a degree of hydrolysis of at least about 93% or 95%, preferred at least 97% and in particular greater than 99%. Obtained products are used for bonding wood, but heat resistance property is not considered. As is known, such copolymers, containing NMA, require high temperature pressing or acid catalysis for cross-linking to provide water resistance of bonded wood, both gluing conditions will cause discoloration of wood.

US 5,434,216 discloses a water resistant emulsion for woodworking adhesive based on a VAC/NMA polymer, prepared in the presence of a blend of 88% hydrolyzed and 95-99.5%, or above, hydrolyzed PVOH. The product shows improved water resistance of the wood bond when formulated with a phenolic resin and acidic aluminum chloride.

WO 94/22671 discloses a surfactant free, formaldehyde-free PVOH graft copolymer binder emulsion for nonwoven products comprising 12 to 35 wt.% of PVOH based on weight of solids, wherein at least 75% of the PVOH is at least 98% hydrolyzed and about 65 to 88% of a vinyl and/or an acrylic monomer by weight of solids, which is graft copolymerized with the PVOH through emulsion polymerization. The vinyl and/or acrylic monomer is chosen from the group consisting of C1-C8 acrylate and methacrylate esters, VAC, styrene, acrylamide, and mixtures thereof. A specific combination of a vinyl ester and an acrylic acid amide, however, is not disclosed. Again, such product does not provide sufficient water resistance due to the high amount of used PVOH.

US 4,521,561 describes the emulsion polymerization of VAC/ethylene (VAC/E) in the presence of both partially and fully hydrolyzed PVOH. The resulting latex provides enhanced plasticizer thickening when blended with a partially- or fully-hydrolyzed PVOH after polymerization.

US 5,633,334 also discloses VAC or VAC/E emulsion polymerization using a blend of a 80% hydrolyzed, a 88% hydrolyzed and a 96% hydrolyzed PVOH grade providing a product compatible with a post added fully hydrolyzed PVOH.

EP 0 484 822 B1 is directed to VAC/E emulsion polymerization using a PVOH blend consisting of a low molecular weight, partially hydrolyzed PVOH; a medium molecular weight, partially hydrolyzed PVOH; and a medium molecular weight, or high molecular weight, fully hydrolyzed PVOH, or mixtures thereof. The product provided both high wet tack and improved tack range properties.

US 4,043,961 teaches the need for employing a surfactant for emulsion polymerization of VAC/E in the event that fully hydrolyzed PVOH is used as the sole PVOH, in order to obtain good emulsion stability. The total PVOH used contains at least 20 wt.% of a special modified X-PVOH containing from about 1 to 10 wt.% of methyl methacrylate.

JP 2002265506 A discloses a process of a two stage emulsion polymerization of VAC where within a first stage 5 - 20 wt.% based on total monomer of a PVOH having a degree of saponification of at least 95 mol% is used, and in the second stage 10 - 50 wt.% based on total monomer of a PVOH having a degree of saponification of less than 95 mol% is applied. The resulting product is superior in aqueous dilution property, avoiding particle settlement. In this prior art document the total amount of PVOH used is 15 - 50 wt.%, preferably 20 to 45 wt.%, based on total monomer. It is therefore not applicable or relevant for woodworking.

No binder dispersions are presently commercially available that exclusively employ fully hydrolyzed PVOH due to the associated problems with stability of the polymer particles or lack of colloidal stability and viscosity stability.

### Modified PVOH (X-PVOH; E-PVOH)

The use of fully hydrolyzed PVOH in emulsion polymerization of acrylic or styrene/acrylic systems as described in US 2005/0197441 refers to a fully hydrolyzed X-PVOH; EP 0 812 863 discloses the limits of using PVOH as a stabilizer in acrylic systems and specifically discloses the use of a combination of fully and partially hydrolyzed S-PVOH in the presence of a chain transfer agent for acrylic emulsion polymerization.

Recently the use of E-PVOH, such polyvinyl alcohol having ethylene units in an amount of mainly less than 15 mol% in the chain, has received growing interest in emulsion polymerization of vinyl esters, often such E-PVOH grades are nearly fully or fully hydrolyzed.

The use of E-PVOH (degree of hydrolysis > 95 mol% up to > 99 mol%), as dispersant in emulsion polymerization of vinyl ester monomers, preferred VAC, was disclosed e.g. in US 6,451,898, EP 0 692 494 B1, JP 2001172591 A; JP 3563189 B2; JP 1998226774 A; JP 2001106855; JP 20044002888; KR 1020020022592 A; JP 10226774 A; JP 09227748 A; JP 2002241411; US 6,780,931 B2; and JP 2001261913. These documents teach improvement of water resistance - estimated in different ways - when compared with standard polyvinyl alcohol (S-PVOH), especially when comparison is made with partially hydrolyzed S-PVOH, and improved viscosity stability of the obtained aqueous dispersion products.

All of these references report the polymerization of vinyl acetate, and although in general terms the option of a comonomer is mentioned in some of the references, there is no disclosure of a specific comonomer, let alone (meth)acrylamide as potential comonomer of a specified composition. Furthermore, none of these references mentions or meets the requirements of heat resistance quality for bonded wood. In contrast, it is shown that such products provide poor heat resistance in terms of WATT 91.

Furthermore, commercially available E-PVOH, known for instance as EXCEVAL® from Kuraray Co. Ltd., is significantly more expensive than S-PVOH, which is one of the main reasons that attempts have been made to use blends of E-PVOH and partially hydrolyzed S-PVOH (EP 1 493 793 A1 and JP 2001261912).

According to US 6,451,898 B1 aqueous dispersions containing fully hydrolyzed PVOH have relatively good water resistance and fluidity at high speed coating, but they are problematic in that their viscosity greatly increases and they therefore soon gel when left at low temperatures. On the other hand, an aqueous dispersion, containing partially hydrolyzed PVOH has improved properties in that its viscosity increase and gelling tendency at low temperatures is retarded. However water resistance is poor. No attempt has succeeded so far in realizing aqueous PVOH containing dispersions of good water resistance and good low temperature viscosity stability. Although E-PVOH has been proposed for use in aqueous emulsions, dispersions containing E-PVOH show only insufficient high temperature viscosity stability. This situation has been discussed also in US 5,599,870, JP 2001172591A, JP 2002241411, US 2002/0065361 A1.
The prior art thus teaches that if fully hydrolyzed S-PVOH is used as a sole colloidal stabilizer in vinyl ester dispersions, such products will suffer from viscosity instability especially at low temperatures.

EP 1 493 793 B1 suggests an adhesive formulation based on an aqueous VAC emulsion polymer prepared in the presence of E-PVOH, and of a second PVOH. The use of this second PVOH leads to an improvement of the rheological properties of the adhesive, providing a homogeneous adhesive film and an adhesive without tendency of coagulum formation. However, E-PVOH, used as the only protective colloid in emulsion polymerization of VAC (EP 1 493 793 B1) resulted in dispersions showing bad flow behavior and increased amounts of coagulum, which could not be sufficiently improved by the addition of additional surfactant. Based on these findings it was expected that industrial aqueous dispersion products may not be obtained using only E-PVOH as a protective colloid. Therefore attempts have been made to combine E-PVOH with partially hydrolyzed S-PVOH.

JP 2001261912 describes an aqueous emulsion which comprises, as the dispersoid, a polymer having vinyl ester monomer units, and, as the dispersant, a composition comprising an E-PVOH having a degree of saponification of at least 95 mol% in combination with partially hydrolyzed S-PVOH in order to solve the viscosity problem. The document, however, is silent about heat resistance properties of wood bond and the tendency of grit formation during polymerization.

As already mentioned, in addition to a good water resistance there are many other objects which a high performance wood adhesive should fulfill. Among these objects the following properties are important: low coagulum or grit content; certain shear thinning behavior at the desired viscosity level excluding any shear thickening; sufficient storage stability in terms of colloidal stability and viscosity constancy; fast setting speed which is a high speed of bond strength formation, sufficient heat resistance of the bond, high creep resistance of the bond, sufficient hard wood adhesion, and low or no discoloration of the wood due to bonding.

JP 2001261912 and EP 1 493 793 B are silent regarding several important properties of a wood glue such as regarding setting speed or heat resistance of the bond.

### Acrylamide as comonomer

It is also well known that in vinyl ester emulsion polymerization, such as in VAC emulsion polymerization, various comonomers can be used. VAC/E copolymers have special industrial importance. These are of less relevance for D3 type wood glues but are widely used in paper and packaging adhesives.

Various comonomers are listed in JP 2001261912, US 6,451,898, JP 2001172591 A, JP 1998226774 A, JP 1998036801 A, JP 2002241411 A, and also in US 3,644,257.

Emulsion polymerization of VAC using acrylamide type comonomers has been described in GB 835,651, GB 1,092,030, US 3, 941,735, US 4,115,306, US 4,219,455, US 4,339,552, US 3,365,409, and in US 3,577,376.

GB 835,651, GB 1,092,030, US 3,365,409 and US 3,577,367 describe the copolymerization of vinyl acetate and acrylamide (VAC/AMD) in the presence of optionally a surfactant but without using any PVOH as protective colloid. As stated in US 4,219,455, these products are not suitable as wood adhesives.

US 3,941,735 describes the use of 0.5 to 15% of a C1-C8 alcohol ether of an N-methylol derivative of an allyl carbamate in vinyl ester emulsion copolymerization in the presence of an hydroxyl functional protective colloid such as partially hydrolyzed PVOH. Further optionally comonomers are ethylene and mono-ethylenic maleate or fumarate alcohol diester. Similarly, US 4,115,306 and US 4,219,455 disclose a (meth)allyl carbamate as a comonomer with vinyl ester, in order to improve water resistance. US 4,219,455 states an improvement of dry wood bond strength at ambient temperature due to the incorporation of allyl carbamate but is silent regarding heat resistance of a material bond.

US 4,339,552 describes the emulsion polymerization of vinyl ester, such as VAC, with ethylene in the presence of a hydroxy functional protective colloid, such as partially hydrolyzed PVOH, by the inclusion in the copolymer of an amide monomer, especially acryl amide (AMD) to provide a product with increased gel content, improved adhesion and in general terms, superior resistance to cold flow. US 4,339,552 is completely silent regarding heat resistance of a material bond. The described product additionally has an unfavorably low viscosity.

From US 4,219,455 and US 4,339,552 follows that it is to be expected that a product including less than 1.2% of amide group containing monomers will provide insufficient water resistance.

The use of acrylamide monomer is known to be advantageous with respect to increased rigidity and to provide opportunities for crosslinking (US 3,365,409), but on the other hand large amounts of acrylamide have poor water resistance (GB 835,651).

JP 1998036801 A discloses a water based adhesive, constituted by an aqueous emulsion containing a copolymer of VAC and at least one monomer selected from (meth)acrylic acid, glycidyl (meth)acrylate, meth(acrylamide), N-methylol (meth)acrylamide, fumaric acid or its esters, maleic acid or its esters, and vinyl esters of tertiary carboxylic acids. Further, a water based adhesive is described, which in addition contains S-PVOH as the emulsifier. The product provides an adhesive with high speed of set, making it useful for adhering various substrates together (e.g., paper, wood, plastics, metals, etc., in particular porous substrates). The product of JP 1998036801 A, however, does not provide D3 type quality and sufficient heat resistance, especially when adhesives containing the base dispersions of the emulsion polymerization process are formulated.

US 6,890,975 B2 discloses the use of water re-dispersible polymer powders in cementitious applications. The polymer is prepared by emulsion polymerization in the presence of a protective colloid, such preferably partially hydrolyzed S-PVOH or mixtures thereof, containing 0.2 to 1.5 wt.% based on the vinyl ester polymer of auxiliary monomers having a water solubility higher than VAC, such as e.g., acrylic acid, acrylamide, N-methylol acrylamide, 2-acrylamido-2-methylpropane sulfonic acid, vinyl-sulfonic acid, maleic anhydride, acrylamido-glycolic acid, and itaconic acid. It was found, that better tensile bond strength of a cement containing formulation is observed, when hydrophilic water-soluble monomers are used. US 6,890,975 B2 is silent regarding a use of such emulsion polymerization products in woodworking adhesives.

JP2001302709 A describes the emulsion polymerization of a core-shell-type polymer in the presence of S-PVOH, comprising VAC as the core-forming monomer, and a mixture of VAC/acrylic acid-based monomer, forming the shell. The product possesses excellent film forming properties but does not provide a suitable heat resistance of wood bond.

JP 57190010 discloses VAC copolymerization with an acrylamide derivative, such as NMA in the presence of a protective colloid of an 88 to 91% hydrolyzed X-PVOH, based on a polymer of vinyl acetate containing acrylic acid or its derivatives.

US 3,870,673 discloses a process for the preparation of a polymer dispersion being free from emulsifiers in which a vinyl ester, ethylene and an acrylamide compound are polymerized in aqueous dispersion in the presence of a radical-forming catalyst. No surfactant and no PVOH are used in this prior art. Such product again does not provide a suitable heat resistance of wood bond.

US 4,449,978 discloses the combined use of NMA and acrylamide in emulsion polymerization of surfactant stabilized VAE copolymerization to reduce the formaldehyde content of a nonwoven binder, which would be of limited use as a woodworking adhesive.

The prior art also teaches the use of preformed water soluble acrylamide polymer as a stabilizer for vinyl ester emulsion (co)polymerization, wherein the acrylamide polymer is used as sole protective colloid or in combination with other water soluble polymer or surfactant:

US 4,439,574 and US 4,440,896 disclose a process of emulsion polymerization of VAC alone or with at least one olefin and optionally further comonomer in the presence of preformed polyacrylamide and polyethylene glycol. JP 57078404 describes VAC emulsion polymerization in the presence of water soluble polymer of acrylamide derivatives, such as of acrylamide, or of NMA without the presence of PVOH.

### Discoloration

With respect to aqueous wood adhesives it is general prior art and accepted (US 3,301,809, US 3,563,851, DE 2 620 738, EP 433 957, DE 196 49 419, EP 1 505 085, EP 1 304 339) that water resistant glues fulfilling demands of water resistance class D3 according to DIN EN 204/205 are aqueous copolymers of preferably vinyl acetate (VAC) and N-methylol acrylamide (NMA), prepared in the presence of polyvinyl alcohol (PVOH). These copolymers are formulated with an acidic or Lewis-acidic catalyst, such as metal salts, e.g. aluminum chloride, whereby these so called catalysts act as well as a complexing agent for the PVOH (EP 1 240 268 B1), and additionally as acidic catalyst of a post-crosslinking of the NMA functionality. Such products have the immanent disadvantage, that their viscosity stability is deficient after storage well above of ambient temperature, e.g. at 50 degrees C. Due to start of the crosslinking reaction of N-methylol groups, their viscosity may increase dramatically and irreversibly as shown in DE 103 35 673 B4. DE 103 35 673 B4 therefore tries to reduce the amount of the NMA content and compensates for decreasing water resistance by the addition of e.g. cyclic ethyleneureas. Various commercial products following such composition strategy are available, providing D3 type water resistance. Such wood adhesives may provide not only D3 type water resistance but also sufficient heat resistance or WATT of the bond in terms of WATT 91 according to DIN EN 14257 of at least 6 N/mm². An example of such commercial products is, e.g. VINAC® DPN 15. Nevertheless these products have further the disadvantage in that they cause wood discoloration due to the bonding process, as described in DE 169 49 419, which is evident especially when used in veneer gluing for wood species such as e.g. beech, cherry, pine or maple.

It is well known that the main reason for such wood discoloration due to bonding is caused by the acidic character of the wood adhesive (K. Pfuhl, in: Holz- und Kunststoffverarbeitung, 7-8(2004)80-83; DRW-Verlag, Weinbrenner GmbH & Co. KG, Leinfelden-Echterdingen).

Therefore EP 1 493 793 B1 specifies a pH range of 5.5 to 7.5 to avoid a discoloration of wood. However, the obtained products according to EP 1 493 793 B1 suffer from insufficient heat resistance.

Different approaches to avoid or reduce discoloration of wood can be found in JP 10121017 A, EP 1 240 268 B1 and DE 169 49 419. However, these approaches apply low pH value of less than 4, and will thus always have a tendency to wood discoloration.

Summarizing, while involving fully hydrolyzed PVOH as a colloidal stabilizer in vinylester polymerization has been reported to have beneficial effects on water resistance, as compared to employing partially hydrolyzed PVOH, such effect is generally associated with decreased heat resistance and deficient colloidal and/or viscosity stability of the resulting aqueous polymer dispersion. Solutions to this problem considered in the prior art involve formaldehyde generating comonomers and/or initiator compounds. In addition, the solutions provided in the prior art raise the problem of discoloration of wood upon curing.

Furthermore, the use of (meth)acrylic acid amides, excluding N-alkylol amide derivatives, has not been specifically contemplated in the art for use as a comonomer in vinylester polymerization with a fully hydrolyzed PVOH colloidal stabilizer. Moreover, no influence on heat resistance of a material bond provided by an aqueous polymer dispersion obtained by copolymerization of vinyl esters and (meth)acrylic amide derivatives has been reported in the art.

### Objects of the invention

The present invention therefore aims at overcoming the numerous drawbacks identified in the prior art in providing an aqueous polymer dispersion, useful as a binder, providing improved heat resistance of a material bond, as well as in particular, improved heat and water resistance in different applications, e.g. as a wood adhesive or as an adhesive for paper and packaging. It is an essential object of this invention to provide an aqueous polymer dispersion binder, useful as wood glue, which does not cause discoloration of wood due to the bonding process. In particular, it is an object of the invention to provide a binder, in particular a wood adhesive, containing PVOH as colloidal stabilizer which provides a water resistance of the bond measured as D3/3 value according to DIN EN204/205 of at least 1.5 N/mm², more preferably of at least 2.0 N/mm², thereby fulfilling the class D3 requirements of water resistance. The binder must furthermore also provide improved heat resistance in terms of WATT 91, best of at least 6 N/mm², ideally without using an acidic catalyst or any crosslinking compound. The aqueous polymer dispersion binder should in addition show improved viscosity stability even after storage at temperatures well below and well above ambient temperature. The shear thinning factor SF should preferably be positive. The polymer dispersion binder of present invention shall further not contain formaldehyde or formaldehyde releasing compounds. The particle size characterized as median of volume distribution function x_{3,50} of the aqueous dispersion should be kept low, best below 1500 nm. Grit content above 40 µm should be low, in particular less than 1000 ppm based on aqueous polymer dispersion.

A further object of the present invention is to provide an aqueous polymer dispersion which enables the formulation of paper and packaging adhesives which can be screened off from the waste paper recycling pulp and do not or only at reduced level contribute to the build up of stickies in the process of fabrication of new paper from waste paper recycling pulp.

It is a further object of the invention to provide a binder formulation making use of the advantages of the aqueous polymer dispersion for bonding porous or semi-porous substrates together or to other substrates including wood, wood fiberboard, paper, cardboard, corrugated card board, foamed plastic, cement, plaster, leather, textile, nonwoven, and the like.

It is a further object of the invention to provide a process of emulsion polymerization to provide the aqueous polymer dispersions of the invention.

These and other objects solved by the present invention will become apparent from the present specification and examples.

### Brief Summary of the Invention

Thus, the present invention is constituted by the use of (meth)acrylic acid amide(s) as comonomer(s) (b) for providing improved heat resistance by a formaldehyde-free aqueous polymer dispersion obtained by emulsion copolymerization of at least
(a) vinyl ester monomer(s) and
(b) comonomer(s) comprising said acrylic and/or methacrylic amide(s) derivatives in the presence of at least
(c) fully hydrolyzed polyvinyl alcohol (PVOH), having an average degree of hydrolysis above 95.00 mol%,
wherein the polymerization does not comprise comonomers derived from N-alkylol(meth)acrylic acid amides,
and wherein the heat resistance, measured as WATT 91 value according to DIN EN 14257, is larger than the heat resistance obtained without using acrylic and/or methacrylic amide(s) derivatives (b).

Improvement of heat resistance in the sense of the present invention means that the heat resistance provided by the formaldehyde-free aqueous polymer dispersion according to the invention, measured as WATT 91 value according to DIN EN 14257, is larger than the heat resistance of an aqueous polymer dispersion obtained with identical composition and by the identical process except that the polymerization is carried out without using acrylic and/or methacrylic amide(s) derivatives (b). The present invention in particular provides a convenient means for obtaining heat resistance measured as WATT 91 value according to DIN EN 14257 of at least 6 N/mm².

The object(s) of the invention is/are further solved by a formaldehyde-free aqueous polymer dispersion obtainable by emulsion copolymerization of vinyl ester monomer(s) (a) in the presence of fully hydrolyzed polyvinyl alcohol (PVOH) (c), using comonomer(s) (b), the comonomer(s) (b) comprising (meth)acrylic acid amide(s) for obtaining a formaldehyde-free aqueous polymer dispersion providing improved heat resistance, measured as WATT 91 value according to DIN EN 14257 according to any one of claims 1 to 10, comprising
2 to less than 12 wt.%, based on total used monomer, of fully hydrolyzed polyvinyl alcohol (PVOH) (c),
wherein the fully hydrolyzed PVOH has an average degree of hydrolysis above 98.00 mol% up to 99.95 mol%,
wherein the polymerization does not comprise comonomers derived from N-alkylol(meth)acrylic acid amides,
wherein the polymerization does not involve partially hydrolyzed PVOH having an average degree of hydrolysis up to 95 mol%,
the polymer dispersion providing
- a water resistance, measured as D3/3 value of a wood bond according to DIN EN 204/205 of D3/3 of at least 1.5 N/mm²,
- a heat resistance measured as WATT 91 value of a wood bond according to DIN EN 14257 of at least 6 N/mm².

The invention further relates to a binder formulation, comprising an aqueous polymer dispersion according to the invention. The adhesive formulation according to the invention thus provides a water resistance of wood bond of a D3/3 value according to DIN EN 204/205 of at least 1.5 N/mm², preferably of at least 2.0 N/mm², thereby being a D3 Type wood glue.

The invention further relates to a process for providing an aqueous polymer dispersion according to the invention, providing
- a water resistance measured as D3/3 value of a wood bond according to DIN EN 204/205 of D3/3 of at least 1.5 N/mm²,
- a heat resistance measured as WATT 91 value of a wood bond according to DIN EN 14257 of at least 6 N/mm²,
the process comprising emulsion copolymerization of at least
(a) vinyl ester monomer(s),
(b) comonomer(s), comprising (meth)acrylic acid amide(s),
(c) 2 to less than 12 wt.%, based on total used monomer, of fully hydrolyzed polyvinyl alcohol (PVOH),
wherein the fully hydrolyzed PVOH has an average degree of hydrolysis above 98.00 mol% up to 99.95 mol%,
wherein the polymerization does not comprise comonomers derived from N-alkylol(meth)acrylic acid amide,
wherein the polymerization does not involve partially hydrolyzed PVOH having an average degree of hydrolysis up to 95 mol%.

The polymer dispersion, the adhesive formulation and the process according to the invention offer improved heat resistance due to the involvement of (meth)acrylic acid amide(s) in the polymerization. They further offer improved water resistance due to stabilization of the emulsion during polymerization by fully hydrolyzed PVOH. Further, the aqueous polymer dispersion binder being free of N-alkylol derivatives of acrylic or methacrylic acid amides, avoids the need of employing acidic additives such as acidic metal salts as crosslinkers of PVOH, or of other crosslinking agents as described e.g. in DE 10335673, DE 19949332, DE 4420484, EP 826008, EP 778315, EP 778290, EP 892509. Further, the need to employ resins such as resorcinol-formaldehyde resins, urea-formaldehyde resins, melamine-formaldehyde resins, phenol-formaldehyde resins is avoided, thereby providing a discoloration-free adhesive which shows considerable long-term stability upon storage and which is free of formaldehyde and/or formaldehyde-releasing compounds. The polymer dispersions of the invention furthermore show excellent creep resistance, sufficient hard wood adhesion, and also very fast setting speed.

### Detailed Description of the Invention

The vinyl ester monomer (a) may comprise vinyl formate, vinyl acetate (VAC), vinyl propionate, vinyl butyrate, vinyl pivalate, vinyl capronate, vinyl caprylate, vinyl laurate, vinyl stearate, vinyl 2-ethyl hexanoate, dibutyl maleate, dioctyl maleate, diisopropyl maleate, diisopropyl fumarate, vinyl versatate (C₉₋₁₃), preferably vinyl versatate (C₉₋₁₀), or mixtures thereof. Preferred vinyl ester monomer (a) is VAC, or vinyl versatate, or mixtures thereof, and most preferred is VAC. In principal there are no special limits of the relative amount of the vinyl ester monomer (a) based on total amount of monomers. Generally, any amount of (meth)acrylic amide(s) derivatives will serve in improving heat resistance. The upper limit of total vinyl ester monomer(s) will be the balance. In particular, it is possible to use up to 99.9 wt.% of vinyl ester(s) based on total used monomer, but an amount within the range of 50 to 99.9 wt.%, preferably 70 to 99.9 wt.% based on total monomers is preferred. In particular the vinyl ester monomer (a) is used in an amount of 95.0 to 99.9 wt.% based on total used monomer, preferred in an amount of 97.5 to 99.9 wt.%, and even more preferred in an amount of 98.8 to 99.3 wt.%.

The comonomer(s) (b) may comprise any monomer or monomer mixture different from N-alkylol derivatives of (meth)acrylic acid amides, copolymerizable with the vinyl ester monomer (a).

Ethylenically unsaturated comonomers particularly suitable for preparing the emulsion polymers used in accordance with the invention and copolymerizable with the vinyl esters comprise 3,2-unsaturated acids, examples being acrylic acid and methacrylic acid, and esters thereof with primary and secondary saturated monohydric alcohols having 1 to 32 carbon atoms, examples being methanol, ethanol, propanol, butanol, 2-ethylhexyl alcohol, cycloaliphatic or polycyclic alcohols and relatively long-chain fatty alcohols. It is also possible as well to use 3,2-unsaturated dicarboxylic acids, examples being maleic acid, fumaric acid, itaconic acid and citraconic acid, and their monoesters or diesters with saturated monohydric aliphatic alcohols having 1 to 28 carbon atoms. The fraction of these comonomers as a proportion of the total monomer amount is, if they are present, usually up to 25% by weight, preferably up to 15% by weight.

Further comonomers particularly suitable for preparing the emulsion polymers used in accordance with the invention include ethylenically unsaturated hydrocarbons, such as ethylene or α-olefins having 3-28 carbon atoms, examples being propylene and/or butylene, or vinylaromatic hydrocarbons, such as styrene, vinyltoluene and/or vinylxylene, and halogenated unsaturated aliphatic hydrocarbons, examples being vinyl chloride, vinyl fluoride, vinylidene chloride and/or vinylidene fluoride. The fraction of these comonomers as a proportion of the total monomer amount is, if they are present, usually up to 50% by weight, preferably up to 25% by weight.

Further comonomers particularly suitable for preparing the emulsion polymers used in accordance with the invention include comonomers with polyethylenic unsaturation, and hence with a crosslinking action, examples being diallyl phthalate, diallyl maleate, triallyl cyanurate, tetraallyloxyethane, divinylbenzene, butane-1,4-diol dimethacrylate, triethylene glycol dimethacrylate, divinyl adipate, allyl (meth)acrylate, vinyl crotonate, methylenebisacrylamide, hexanediol diacrylate, pentaerythritol diacrylate and trimethylolpropane triacrylate or mixtures of two or more compounds from this group may be present in the polymer. The fraction of these comonomers as a proportion of the total monomer amount is, if they are present, usually up to 5% by weight, preferably up to 2% by weight.
Further comonomers particularly suitable for preparing the emulsion polymers used in accordance with the invention include hydroxy-functional esters of unsaturated carboxylic acids, such as hydroxyethyl (meth)acrylate, hydroxypropyl (meth)acrylate and adducts thereof with ethylene oxide or propylene oxide. The fraction of these comonomers as a proportion of the total monomer amount is, if they are present, usually up to 25% by weight, preferably up to 15% by weight.
Further comonomers particularly suitable for preparing the emulsion polymers used in accordance with the invention include comonomers which are self-crosslinking or crosslinkable by way of carbonyl groups, from the group consisting of diacetoneacrylamide, allyl acetoacetate, vinyl acetoacetate and acetoacetoxyethyl (meth)acrylate. The fraction of these comonomers as a proportion of the total monomer amount is, if they are present, usually up to 10% by weight, preferably up to 5% by weight.

A further group of suitable comonomers comprises monomers from the group of the unsaturated sulfonic acids and salts thereof, preferably vinylsulfonic acid, 2-acrylamido-2-methylpropanesulfonic acid, epoxy-functional comonomers, such as glycidyl methacrylate and glycidyl acrylate, and silicon-functional comonomers, such as acryloyloxypropyl-tri(alkoxy)silanes and methacryloyloxypropyltri(alkoxy)silanes, vinyltrialkoxysilanes and vinylmethyldialkoxysilanes, in which the alkoxy groups present may be, for example, ethoxy and ethoxypropylene glycol ether radicals, for example. The fraction of these comonomers as a proportion of the total monomer amount is, if they are present, usually up to 10% by weight, preferably up to 5% by weight.

Preferred comonomer(s) (b) are selected from the group comprising ethylenically unsaturated hydrocarbons, such as ethylene, or α-olefins having 3 - 28 carbon atoms, such as propylene, or halogenated unsaturated aliphatic hydrocarbons, such as vinyl chloride or vinylidene chloride, C3-C8 acrylate and methacrylate esters, ethylenically unsaturated acid monomers, acrylamide compounds, 2-acrylamido-2-methylpropane sulfonic acid, vinylsulfonic acid, acrylonitrile, and mixtures thereof. More preferred is the use of ethylenically unsaturated acid monomers and their anhydrides and of acrylamide compounds and of acrylonitrile, and of mixtures thereof.

The ethylenically unsaturated acid monomers include for instance, acrylic acid, methacrylic acid, fumaric acid, maleic acid, maleic acid anhydride, crotonic acid, itaconic acid, and their respective derivatives, especially their esters, acrylonitrile, methacrylonitrile, trimethyl(3-acrylamido-3-dimethylpropyl)ammonium chloride, acrylamido-2-methacrylamido-2-methylpropanesulfonic acid and its alkali metal salt, alkyl vinyl ethers, N-vinylpyrrolidone, vinyl halogenides, especially vinyl chloride and vinylidene chloride, vinyl sulfonate and its alkali metal salts, allyl sulfonate and its alkali metal salts, ethylene, propylene, and mixtures thereof.

The acrylamide compounds or (meth)acrylic acid amide derivatives include compounds of the general formula

CH₂ = CX - CO - NHY,

where X is hydrogen or a methyl group, Y is hydrogen or the group - (CH₂)ₙ - O - Z,
where n is an integer, preferably in the range of 1 to 3, and Z is different from hydrogen, but preferred an alkyl or acyl group having up to 4 carbon atoms. By choosing Z different from hydrogen, N-alkylol acrylamides which are crosslinkable under acidic conditions, are excluded. In the simplest case this (meth)acrylic acid amide compound is (meth)acrylamide.
The term (meth)acrylic acid includes acrylic acid and methacrylic acid, and the term (meth)acrylamide includes acrylamide and methacrylamide, respectively.

In principle there are no special limits of the amount of comonomer(s) used. Preferably the amount of comonomer(s) (b) is up to 50 wt.%, based on total used monomers, more preferably 0.01 up to 30.0 wt.%, still more preferably up to 15.0 wt.% or up to 10.0 wt.% or 0.1 up to 5.0 wt.%. In particular the amount of (meth)acrylic acid amide(s), comprised within comonomer(s) (b) may be in the range of 0.1 to 2.5 wt.%, preferably in the range of 0.2 to 1.25 wt.%, more preferably in the range of 0.3 to 1.0 wt.%, even more preferably in the range of 0.3 to 0.8 wt.%, and in particular in the range of 0.3 to 0.7 wt.% based on total used monomers .

The function of the (meth)acrylic acid amide compound(s) included within the inventive composition is a surprising and significant improvement of heat resistance, measured as WATT 91 value according to DIN EN 14257. A heat resistance of WATT 91 of at least 6 N/mm² may be achieved according to the invention. WATT 91 performance of bonded wood provided by the dispersions of the invention is further supported by a selection of defined process conditions as described below, and very surprisingly additionally by post addition of urea to the aqueous polymer dispersion.

By avoiding the use of acidic crosslinkable N-alkylol acrylamides, such as NMA, color stability of the wood is achieved, surprisingly without sacrificing water and heat resistance of the dispersion. Furthermore, avoiding N-alkylol acrylamides surprisingly solves additional problems regarding viscosity stability of the aqueous dispersion or of the binder formulation, in particular as a wood adhesive, even at neutral pH as shown by Viscosity Stability Trials, or VS-Trials 25 and 27 below.

The (meth)acrylamide derivative(s) may furthermore beneficially be employed together with other comonomers: e.g. 2-acrylamido-2-methylpropane sulfonic acid and/or vinyl sulfonic acid or salts thereof.

The fully hydrolyzed PVOH (c) has an average degree of hydrolysis above 95.00 mol%, ideally above 98.00 mol% up to 99.95 mol%, preferably in the range of 98.1 to 99.95 mol%, more preferably in the range of 98.1 to 99.1 mol%.

Partially hydrolyzed PVOH (c) may be present in addition to fully hydrolyzed PVOH (c) when (meth)acrylic amide(s) derivative(s) are used for improving heat resistance according to the invention. However, the aqueous polymer dispersion according to the invention ideally contains essentially no partially hydrolyzed PVOH (c). Thus, in a preferred embodiment of the invention, the aqueous polymer dispersion contains no partially hydrolyzed PVOH having a degree of hydrolysis up to 95 mol%, in particular contains no partially hydrolyzed PVOH having a degree of hydrolysis up to 98 mol%. This means no such partially hydrolyzed PVOH is present or involved during the process of polymerization,.

The fully hydrolyzed PVOH (c) preferably comprises unmodified or standard polyvinyl alcohol (S-PVOH) and/or modified polyvinyl alcohol (X-PVOH), in particular ethylene modified PVOH (E-PVOH) and/or acetoacetyl modified polyvinyl alcohol (A-PVOH). The fully hydrolyzed PVOH (c) can be a single PVOH grade, but preferred it is a PVOH blend of at least two PVOH grades having an average degree of hydrolysis of above 98.00 mol%, preferably between 98.1 and 99.9 mol%, and even more preferred between 98.1 and 99.1 mol%. Preferably at least one blend component is an E-PVOH. Nevertheless it is surprising and achieved for the very first time, that the use of only fully hydrolyzed S-PVOH during emulsion polymerization provides a water resistance measured as D3/3 value according to DIN EN 204/205 of above 1.5 N/mm² or even above 2.0 N/mm², thus fulfilling requirements of water resistance class D3, and providing desired heat resistance.

Particularly preferred is an aqueous polymer dispersion according to the invention, wherein the blend of S-PVOH and X-PVOH comprises, based on the total PVOH, up to 100 wt.% of X-PVOH, in particular up to 60 wt.% of X-PVOH, and preferably up to 50 wt.% of X-PVOH, wherein the X-PVOH is preferably a modified PVOH comprising ethylenically unsatutared monomeric units in the molecule, thus being an E-PVOH. The X-PVOH can also be a modified PVOH comprising acetoacetyl groups in the molecule, thus being an A-PVOH.

Thus, the amount of the more expensive E-PVOH, alternatively of an A-PVOH, based on total used PVOH, if used, may be significantly reduced, compared to prior art EP 1 493 793 A1 and JP 2001261912, where blends of E- PVOH and partially hydrolyzed S-PVOH are used in emulsion polymerization for wood adhesives.

Preferred as X-PVOH is E-PVOH, containing up to 12, in particular 1 to 7 mol% of ethylene units in the molecule. Particularly E-PVOH, having 2 - 6 mol% of ethylene units in the chain, is especially preferred. Ethylene content in the E-PVOH is determined by NMR analysis.

It is possible to use more than one E-PVOH grade within the PVOH blend (c). It is also possible to use only E-PVOH as the fully hydrolyzed PVOH (c) as a sole E-PVOH-Grade or as a blend of different E-PVOH grades. In case the fully hydrolyzed PVOH (c) comprises only E-PVOH, then the amount of ethylene units within the E-PVOH chains as an average is preferably in the range of 0.5 to 10 mol%, preferably in the range of 2 to 6 mol%; and even more preferred in the range of 2 to 4 mol%, as determined by NMR analysis. It can also be beneficial to use more than one S-PVOH component within the fully hydrolyzed PVOH (c). The blend components are different regarding their molecular weight, here expressed as viscosity of their 4 wt.% aqueous solutions measured at 20 °C. Correlations of weight average molecular weight M_{w}, weight average degree of polymerization DP_{w}, and viscosity of 4 wt.% solution viscosity of PVOH can be taken for different degrees of hydrolysis from Table 8, included below: Molecular weight data in Table 8 are based on GPC measurements including light scattering detector. As different methods may provide different data of average molecular weight M_{w} and hence of DP_{w}; all DP_{w} data given within this document strictly relate to viscosity data of a 4 wt.% aqueous PVOH solution measured at 23 °C as given in Table 8. Fully hydrolyzed PVOH grades possessing a viscosity between approx. 3 mPas and 40 mPas can be used. If more than one or two S-PVOH grades, different in molecular weight are used, then the ratio of their 4 wt.% solution viscosities is in the range between approx. 2 to 10. The amounts of highest and lowest molecular weight S-PVOH in this case are at least 10 wt.% of each component based on total fully hydrolyzed PVOH (c). It was surprising to find, that a tendency of grit formation during emulsion polymerization was significantly reduced, when the molecular weight distribution of the PVOH blend was more broadened by blending high, medium, and low molecular weight fully hydrolyzed PVOH components.

In a preferred embodiment of the invention, the E-PVOH has a degree of polymerization DP_{W} within the range of 500 to 5 000, preferably within the range between 2000 to 4500, most preferably within the range of 3000 to 4000.

In a further preferred embodiment of the invention, the fully hydrolyzed S-PVOH has a degree of polymerization DP_{W} within the range of 500 to 4000, the S-PVOH being a blend of S-PVOHs comprising at least one component having a degree of polymerization DP_{W} below of 3000, in particular below 2900 and at least one component having a degree of polymerization DP_{W} above of 3000, in particular above 3100.

A further preferred embodiment of the invention is characterized in that the aqueous polymer dispersion comprises a blend of different molecular weight grades of fully hydrolyzed PVOH (c), comprising at least one component having a degree of polymerization DP_{W} below of 2200 and at least on component having a degree of polymerization above of 3200, wherein the amount of the lowest molecular weight grade is at least 10 wt.% based on totally used PVOH, and wherein the amount of the highest molecular weight component is at least 10 wt.% based on totally used PVOH.

The total amount of fully hydrolyzed PVOH (c) is preferably in the range of 2 to less than 12 wt.%, preferably in the range of 7 or 8 to 11 wt.%, more preferably between 8 and 11 wt.% based on total monomer (a) and (b). Using less than 2 wt.% of PVOH (c) may have detrimental effects on colloidal stability and/or adhesive properties of the aqueous polymer dispersion, which would require additional efforts for compensation. Ideally, at least 7 wt.% or better, 8 wt.% or even better more than 8 wt.% of PVOH (c) are applied to avoid such problems. On the other hand, it may be unadvisable to employ 12 or more wt.% based on total used monomers, for this may cause problems regarding viscosity properties, e.g. viscosity can be too high, or viscosity stability may suffer, or water resistance will drop. Any higher amount of PVOH (c) than about 12 wt.% adds additional costs without showing significant improvement of quality performance. Ideally, therefore, the amount of PVOH (c) is in the preferred ranges to find an optimal balance between said competing issues..

The aqueous polymer dispersion according to the invention may optionally comprise less than 2 wt.%, preferably 0.1 to 1.5 wt.% based on total used monomer of surfactant.

A particularly preferred embodiment of the present invention is an aqueous polymer, comprising
(a) up to 99.9 wt.%, preferably 95.0 to 99.0 wt.%, based on total used monomers of vinyl ester monomer(s)
(b) up to 50.0 wt.%, preferably up to 30.0 wt.%, and more preferably 0.1 to 5.0 wt.% of comonomer(s) (b), in particular comprising, based on total used monomers, 0.1 to 2.5 wt.%, preferably 0.2 to 1.25 wt.%, of (meth)acrylic acid amide(s),
(c) 2 to less than 12 wt.%, preferably 7 to less than 12 wt.%, more preferably 8 to 11 wt.%, based on total used monomer, of fully hydrolyzed PVOH,
and optionally up to less than 2 wt.%, preferably 0.1 to 1.5 wt.% based on total used monomer of surfactant,
wherein the fully hydrolyzed PVOH has an average degree of hydrolysis in the range of 98.00 mol% up to 99.95 mol%, preferably in the range of 98.1 to 99.9 mol%, more preferably in the range of 98.1 to 99.1 mol%.

When applying the vinyl ester monomer (a), the comonomer (b) and the fully hydrolyzed PVOH (c) in conventional emulsion polymerization, then the resulting aqueous dispersion preferably has a solid content within the range of 30 to 70 wt.%, more preferably in the range of 40 to 60 wt.%, and in particular in the range of 45 to 55 wt.%.

In a further preferred embodiment, the polymer dispersion of the invention comprises one or more of components (d) to (g):
(d) up to 8 parts by weight, preferably 1 to 4 parts by weight, and most preferably 1.5 to 3 parts by weight of a coalescing agent,
(e) up to 3 parts by weight, preferably 0.2 to 2 parts by weight, most preferably 0.5 to 1.5 parts by weight of a PVOH, different from the fully hydrolyzed PVOH (c),
(f) up to 10 parts by weight, preferably 0.5 to 6 parts by weight, most preferably 1 to 4 parts by weight of a viscosity modifier, and
(g) up to 10 parts by weight, preferably 1 to 8 parts by weight, most preferably 2 to 6 parts by weight of urea;
the amounts based on 100 parts by weight of the aqueous polymer dispersion wherein the aqueous polymer dispersion may have a solids content of 30 to 70 wt.%, preferably 40 to 60 wt.% and in particular approximately 50 wt.%, the solids comprising components (a), (b) and (c).

There are no special limits regarding the kind of the fusing or coalescing agent (d) used for wood adhesive formulation. It may be, that no coalescing agent is used. With respect to wood adhesive properties or to wood bond properties it is known to the expert that the kind and amount of coalescing agent may have significant influence. Comparison of bond properties, such as for instance of heat resistance should be made for adhesives possessing the same glass transition temperature Tg, or respectively, same minimum film formation temperature. The coalescing agent contributes to achieve the required minimum film forming temperature of the wood adhesive. For instance in European wood glue formulations, commonly less than about 6 degrees Celsius is regarded as a minimum film forming temperature when film formation temperature is measured on wood species. Any coalescing agent known in the art for wood glues can be used to fulfill this requirement if the requirements for other application properties are preserved. Preferred coalescing agents include, but are not limited to, the group comprising of butyl carbitol acetate (BCA), propylene carbonate (PC), glycolic acid butyl esters, propylene glycol monophenyl esters, and the like. Preferably BCA or PC, or mixtures thereof may be employed. More preferred is the use of only PC within the adhesive formulation and polymer dispersion of the invention. The amount of coalescing agent based on 100 parts by weight of aqueous polymer dispersion having a solid content of 30 to 70 wt.%, in particular 40 to 60 wt.%, in particular approximately 50 wt.%, the solids comprising components (a), (b) and (c) is up to 8 parts by weight, preferably up to 4 parts by weight, and most preferably up to 3 parts by weight.

The PVOH (e) optionally added to the wood adhesive formulation is different from the fully hydrolyzed PVOH (c) used in emulsion polymerization. The function of the optionally post added PVOH (e) is to further improve rheological properties of the adhesive formulation and to further improve the wood bond strength, especially to further improve heat resistance or WATT of the wood bond, which can not be achieved to the same extent when this PVOH (e) would be used within polymerization. It was especially surprising to discover in the course of making the present invention that viscosity stability after storage at low temperatures can be significantly improved by adding another amount of fully hydrolyzed PVOH (e) to the aqueous polymer dispersion after polymerization is complete.

Generally there are no special limits regarding molecular weight and degree of hydrolysis of the PVOH (e). The PVOH (e) can be a single component or a blend of different PVOH components, such blend can also include E-PVOH. The blend components can be added as separate solutions or together in one solution. Normally, no more then three components are added. The average molecular weight, here expressed as viscosity of a 4 wt.% aqueous solution measured at 20 degrees Celsius, of the PVOH (e) is beneficially > 20 mPas, preferably > 40 mPas, the average degree of hydrolysis is preferably > 98.00 mol%. Preferably the PVOH (e) comprises S-PVOH having a degree of polymerization DP_{w} above of 4000.

In a preferred embodiment the PVOH (e) comprises a blend of S-PVOH and of X-PVOH, in particular E-PVOH, wherein the blend is different from the fully hydrolyzed PVOH (c).

In a further preferred embodiment, the PVOH (e) being different from the PVOH (c) comprises a blend of fully hydrolyzed S-PVOH and E-PVOH, and wherein the degree of polymerization DP_{W} of any of the PVOH components is above 2000.

Correlations of weight average molecular weight M_{W}, weight average degree of polymerization DP_{W} and viscosity of 4 wt.% solution viscosity of PVOH can be taken for different degrees of hydrolysis from Table 8, included below. If more than one PVOH component is used as the PVOH (e), which are different in molecular weight and eventually different regarding degree of hydrolysis, then the ratio of the 4 wt.% solution viscosity of the highest molecular weight component and of the lowest molecular weight component is beneficially in the range between approx. 2.5 to 20, or preferably between 8 to 14. Preferably the viscosity of the highest molecular weight component is > 40 mPas, more preferably it is at least 50 mPas. Preferably the viscosity of the lowest molecular weight component is less than 35 mPas. If more than one PVOH component is used as the PVOH (e), then the fraction of the lowest molecular weight component is ≤ 50 wt.% and the fraction of the highest molecular weight PVOH is ≥ 50 wt.% based on totally added PVOH (e).

The amount of the optionally added PVOH (e) based on 100 parts by weight of the aqueous polymer dispersion as described above is up to 3 parts by weight, preferably up to 2 parts by weight, most preferably up to 1.5 parts by weight of PVOH.

The optionally added viscosity modifier (f) has the function, if desired, to further adjust viscosity and viscosity stability, which is the stability of viscosity when stored or after having been stored at different temperatures. It is desirable that after storage no or only acceptable irreversible viscosity increase should occur. For maintaining processability, the aqueous dispersion or the adhesive obtained therewith, after storage, should remain fluid. Any kind of "gelling" or structure formation resulting in a yield point should be avoided. From dealing with PVOH solutions it is known that with increasing degree of hydrolysis such solutions tend to gel or to increase in viscosity especially at lower temperatures, which is reversible when temperature is raised (see Reference [2], p. 1 to 29). One way to diminish or even to exclude structure formation linked with viscosity increase is carrying out the emulsion polymerization process according to the present invention as described below. Additionally, if required, viscosity modifiers may be added to the adhesive or to the binder formulation to further adjust viscosity stability. Any compound fulfilling this purpose may be used which is compatible with the adhesive or binder formulation, and which does not deteriorate the other required properties of the formulation, especially of an adhesive formulation and in particular of a wood adhesive formulation. For example: mono- or polyvalent alcohols, e.g., propanol, i-propanol, butanol, pentanol, glycol, glycerin, D-mannitol, sorbitol, erythritol, trimethylol propane, di-trimethylolpropane, triethanol propane; 3-methyl-1,5-pentanediol, pentaerythritol, di-pentaerythritol, 3-methyl-3-methoxy butanol; 2,5 dimethyl hexyne diol; triethanolamine, diethanolamine, glycol ether compounds, such as listed in US 6,451,898 B1; or polyethylene glycol compounds; or water-insoluble hydroxyl group containing compounds such as water-insoluble ester alcohol compounds, such as described in US 6,780,931 B1 or saccharides, may beneficially be used alone or in combinations.

The amount of the optionally added viscosity modifier based on 100 parts by weight of aqueous polymer dispersion as described above is up to 10 parts by weight, preferably 0.5 to 6 parts by weight, most preferably 1 to 4 parts by weight of viscosity modifier (f).

Further, urea (g) may be optionally included within the wood adhesive formulation of the invention. It is known to the expert, that urea can be included within aqueous adhesive formulations to improve open time of the adhesive and/or to minimize discoloration of the polymer adhesive film itself when higher temperatures are used during the bonding process, either to shorten the time for obtaining maximum bond strength, or to e.g. accelerate curing processes. It is also known that when urea is used within conventional wood adhesive formulations, which are based on vinyl ester copolymers including N-methylol compounds obtained by emulsion polymerization in the presence of partially hydrolyzed PVOH, urea may have a negative influence on the water resistance and especially on heat resistance. E.g., when a typical commercial D3 wood glue, such as VINAC® DPN15 is formulated with 2 parts of urea a decrease of D3/3 value according to the DIN EN204 test procedure by about 0.3 to 0.5 N/mm² is observed, whereas the heat resistance in terms of WATT 91 according to DIN EN 14257 is nearly unchanged with a small tendency to drop, WATT 91 in no way is improved. Therefore, the finding which was made in the course of making the present invention was particularly surprising, that the addition of urea to the adhesive formulation of the present invention - containing only fully hydrolyzed PVOH (c)- caused a significant increase of water resistance and an even more significant increase of heat resistance. Therefore, while urea is not principally necessary and thus an optional part of the aqueous polymer dispersion of the invention, it is however preferred to include urea. If used, the amount of urea based on 100 parts by weight of the aqueous polymer dispersion as described above, is up to 10 parts by weight, preferably 1 to 8 parts by weight, most preferably 2 to 6 parts by weight of urea. Urea further has a positive effect on viscosity properties of the aqueous polymer dispersion and the adhesive formulation obtained therewith.

The aqueous polymer dispersion according to the present invention preferably has a pH value of above 3.5, preferably of above 4.0, more preferably within the range of 4.1 to 9.0, and most particular within the range of 4.1 to 5.4.

The present invention further relates to a formaldehyde-free binder formulation comprising an aqueous polymer dispersion according to the invention. The binder formulation may contain at least one further and different polymer dispersion obtainable by emulsion copolymerization of vinyl ester and ethylene in the presence of PVOH. Formaldehyde-free in the sense of the invention includes free of formaldehyde-releasing substances.

The binder formulation of the present invention is thus preferably essentially free of acidic catalyzed crosslinking agents for the polyvinyl alcohol and essentially free of formaldehyde.

Thus, a binder formulation of the present invention provides a D3/3 water resistance according to DIN EN 204 of at least 1.5 N/mm2, preferably at least 2.0 N/mm², then fulfilling the requirements of a D3 type wood glue. The binder formulation of the present invention additionally provides a heat resistance of the wood bond in terms of WATT 91 of at least 6 N/mm² according to DIN EN 14257.

The binder formulation may further comprise additional compounds in addition to a coalescing agent (d), the optionally used PVOH (e), an optionally used viscosity modifier (f), and the optional urea additive (g). Such additional compounds include e.g. plasticizer(s), tackifier(s), alcohol(s), starch, or modified starch, oxidized starch, sodium alginate, cellulose compounds such as carboxymethyl cellulose, methyl cellulose, hydroxymethyl cellulose, or hydroxyethyl cellulose, fillers such as clay, china clay, talc, calcium carbonate, chalk, plaster, or wood meal, extenders such as flour, pigments such as titanium oxide, colloidal silica, antifoaming agents, anti-freezing agents, fire retardant(s), and biocides. Further, resins, acting as crosslinking compounds, such as formaldehyde resins, e.g. resorcinol formaldehyde, urea formaldehyde, melamine formaldehyde, and phenol-formaldehyde, as well as A- or B-stage phenolic resins, such as trimethylol phenol oligomer, polyvalent isocyanate compounds as described in EP 0 699 69 may be part of the wood adhesive formulation of the invention, provided those compounds do not release formaldehyde under binding/curing conditions.

While small amounts of the above compounds may have beneficial effects in serving specific purposes, it should be noted that any acidic compound, such as aluminum sulfate, or aluminum nitrate, or aluminum chloride, or chromium(III)- or zirconium(IV)-salts, or para-toluene sulfonic acid, or the like, may have detrimental effect on discoloration of wood due to bonding. Their amount should therefore be kept as low as possible or be avoided completely.

As mentioned above, the binder formulation may comprise plasticizers e.g. preferably but not exclusively dibutyl phthalate, diisobutyl phthalate, diisononyl phthalate, diisodecyl phthalate, diethylene glycol dibenzoate; dipropylene glycol dibenzoate, triethylene glycol dibenzoate; and also mixtures thereof. The quantity of plasticizer used may be up to 40 wt.% based on total content of polymer, preferably 6 to 35 wt.% and most preferably 14 to 28 wt.% based on total content of polymer.
The mentioned additionally added compounds may be used alone or in combination. It may be beneficial to add a biocide, or biocide combinations, known in the art for aqueous formulations.

As the binder formulation does not contain any deliberately added acidic compound, especially no acidic metal salts, one essential advantage of this inventive wood adhesive formulation is the possibility to use also such additives not stable under acidic conditions; i.e. for pH value below about 4, such as chalk, dolomite, or crystalline calcium carbonate, which are commonly used in aqueous adhesive formulations as cost-efficient fillers, but have not been available for wood adhesives of the type of the present invention before.

In a further embodiment, the present invention relates to a process for providing an aqueous polymer dispersion according to any one of claims 11 to 25, providing
- a water resistance measured as D3/3 value of a wood bond according to DIN EN 204/205 of D3/3 of at least 1.5 N/mm²,
- a heat resistance measured as WATT 91 value of a wood bond according to DIN EN 14257 of at least 6 N/mm²,
the process comprising emulsion copolymerization of:
(a) vinyl ester monomer(s),
(b) comonomer(s), comprising (meth)acrylic acid amide(s),
(c) 2 to less than 12 wt.%, based on total used monomer, of fully hydrolyzed polyvinyl alcohol (PVOH),
wherein the fully hydrolyzed PVOH has an average degree of hydrolysis above 98.00 mol% up to 99.95 mol%,
wherein the polymerization does not comprise comonomers derived from N-alkylol(meth)acrylic acid amide,
wherein the polymerization does not involve partially hydrolyzed PVOH having an average degree of hydrolysis up to 95 mol%.

The present invention furthermore relates to a process of emulsion polymerization of vinyl ester monomers and acrylic and/or methacrylic amide derivatives in the presence of fully hydrolyzed polyvinyl alcohol (PVOH), providing
- a water resistance of a wood bond measured as D3/3 value according to DIN EN 204/205 of D3/3 of at least 1.5 N/mm²,
- a heat resistance of a wood bond measured as WATT 91 value according to DIN EN 14257 of at least 6 N/mm²,
the process comprising emulsion copolymerization of:
(a) vinyl ester monomer(s),
(b) comonomer(s), comprising (meth)acrylic acid amide(s),
(c) 2 to less than 12 wt.%, based on total used monomer, of fully hydrolyzed polyvinyl alcohol (PVOH),
wherein the fully hydrolyzed PVOH has an average degree of hydrolysis above 98.00 mol% up to 99.95 mol%,
wherein the polymerization does not comprise comonomers derived from N-alkylol(meth)acrylic acid amides,
wherein the polymerization does not involve partially hydrolyzed PVOH having an average degree of hydrolysis up to 95 mol%,
wherein the polymerization is performed in the presence of:
(h) at least one oxidizing agent such as selected from the group of peroxides, preferably comprising hydrogen peroxide, and/or
(i) at least one reducing agent such as selected from the group of tartaric acid, ascorbic acid, formic acid, sodium erythorbate, or mixtures thereof.

The emulsion polymerization of vinyl ester (a) and comonomer (b) in the presence of the fully hydrolyzed PVOH (c) can be carried out in conventional manner.

The radical forming compound, or oxidizing agent (h) can be selected from the group consisting of: inorganic persulfates, such as sodium persulfate, potassium persulfate, or ammonium persulfate; peroxides, such as hydrogen peroxide, or organic hydroperoxides, such as t-butyl hydroperoxide (tBHP). Organic peroxides, such as benzoyl peroxide; or azo-based catalysts; may be used as well, either alone or in combinations thereof.

Preferably, in addition to the oxidizing radical forming agent (h), at least one reducing agent (i) is used. Typical reductants are sulfoxylates , sulfites, such as sodium sulfite, or sodium hydrogen sulfite, sodium hydrogen carbonate, dithionites, such as sodium dithionite, acidic compounds and their salts, such as formic acid, tartaric acid, ascorbic acid or sodium isoascorbate, and the like.

The redox reaction is catalyzed optionally by traces of ferrous ammonium sulfate, or the like, known in the art. Thermal initiation by hydrogen peroxide or organic peroxides or by inorganic persulfates may also be applied. It is also possible to start the reaction by a redox initiation step and to run the polymerization later on only by thermal initiation. It is further possible to use more than one oxidizing and more than one reducing agent.

Although there are no special limits regarding the kind and amount of the initiator, or of the initiator components (h) and (i) for starting the reaction (P1) and carrying out polymerization reaction, it is known to the skilled worker, that kind and amount of initiator may have a more or less significant influence on properties, especially on stability properties of the aqueous dispersion in general, during or after the polymerization, and also regarding properties of the adhesive formulation made with the aqueous polymer dispersion as the main component of it. Such stability properties include: loss of stability with increasing polymer concentration during polymerization (P2), during reaction finishing (P3), upon cooling down after polymerization, or afterwards; formation of coagulum and/or grit during polymerization; non-acceptable flow behavior of the aqueous dispersion connected often to particle aggregation processes during the course of polymerization including the finishing of reaction (P3) or during optional post polymerization (P4), known as shear thickening or dilatancy; and also non-acceptable change of viscosity upon or after storage, known as instability of viscosity. It is known to the expert how to significantly reduce or overcome such stability problems e.g. by the right choice of kind and amount of initiator or initiator components.

Depending on the kind of comonomer (b) and on the composition of the fully hydrolyzed PVOH blend (c) the kind and amount of initiator compounds may have to be varied. Nevertheless, it is preferred according to the invention to use oxidizing agents which at least comprise hydrogen peroxide or an inorganic persulfate, as named above, as one initiator component; in particular, the commonly applied SFS (sodium formaldehyde sulfoxylate) as a formaldehyde source is avoided. It is furthermore preferred to use at least one reducing agent selected from the group consisting of ascorbic acid, sodium isoascorbate, formic acid, and tartaric acid.

There are no special limits regarding kind and amount of oxidizer or reducing agents used for post polymerization (P4). Again, SFS is avoided as it is a formaldehyde source. Any combination, effective for converting un-reacted or residual monomer may be used. As an example, it is reported that tBHP may be used as oxidizing agent, and ascorbic acid or its sodium salt, known as sodium erythorbate may be used as reducing agents. Traces of a catalyst, e.g. ferrous ammonium sulfate or the like may be added to support the redox reaction, if desired.

When E-PVOH is used as a stabilizing water soluble compound, or as a part of the stabilizing PVOH blend, it is known to favorably use certain defined amounts of an oxidizing initiator compound as described in US 6,451,898 or in JP 2001172591 A. In this prior art, an initial shot of oxidizing agent, such as hydrogen peroxide, ammonium persulfate, or potassium persulfate, to the initial reactor charge is required in an amount of 0.8 to 2 mol% based on initially charged vinyl ester monomer. A total amount of 0.2 to 0.7 mol% of oxidizing agent, based on total amount vinyl ester monomer is used. To the contrary, , it was now surprisingly found, that the stable aqueous dispersion of the invention, including E-PVOH, was obtained by continuous feeding of the whole oxidizing compound, thus avoiding any initial shot of oxidizing compound before or during the polymerization. Such procedure has the advantage of avoiding any safety problems in large production reactor scale. It was even more surprising that avoiding of initial oxidizer - applied as a shot - significantly contributed to improve heat resistance of the wood bond. To obtain the stable aqueous dispersion of the present invention, it was again surprising to find that also the amount of used reducing agent(s) may be of beneficial influence. Preferably its/their molar ratio based on the used oxidizing agent(s) is in the range of 0.10 to 0.80, preferably in the range of 0.12 to 0.48. The total amount of oxidizing agents(s) based on total used vinyl ester monomer is preferably in the range of 0.25 to 1.2 mol%, more preferred in the range of 0.25 to 0.8 mol%, even more preferred in the range of 0.30 to 0.80 mol%, and particularly preferred in the range of 0.35 to 0.60 mol%.

Polymerization is possible well below 0.25 mol% of oxidizing agent(s) based on vinyl ester monomer, and it can be done using amounts well above 1.20 mol% of oxidizing agent(s) based on vinyl ester monomer, providing colloidal stable aqueous dispersions. In these cases their viscosity and/or viscosity stability can be unsatisfying which then has to be compensated for the adhesive formulation by e.g. using a viscosity modifier (f). Also, when using oxidizer(s) at a level above about 1.2 mol% based on total vinyl ester monomer, then water resistance of the wood bond may drop below the required D3/3 value of at least 1.5 N/mm² and the obtained viscosity may be too low.

The polymerization is possible below a molar ratio of reducing agent(s) and oxidizing agent(s) of 0.1 as well as above a molar ratio of reducing agent(s) and oxidizing agent(s) of 0.8, providing colloidal stable aqueous polymer dispersions, but then again, for unknown reasons, their viscosity or viscosity stability, or both can be unsatisfying which then has to be compensated within the adhesive formulation by using for instance a viscosity modifier (f).

If reducing agent(s) are used - as preferred - then the mode of introducing them into the polymerization process has no special limits, but it is preferred to add at least 50 wt.%, preferably 90 to 100 wt.%, most preferably 100 wt.% to the initial reactor charge, before starting the feeding process of the oxidizing compound(s), and the remaining fraction can be fed to the polymerizing system in one shot, or parallel to the oxidizer(s), starting at any desired time.

It is possible to feed both, the oxidizer and the reducing agent, without any initial charge of both, as disclosed in JP 2001163902, or EP 0 692 494, or DE 696 04 151, or US 5,599,870.

In principle the emulsion polymerization may be carried out with only using the fully hydrolyzed PVOH, acting as a protective colloid. But additionally, if desired, further particle stabilization will be achieved using low molecular weight surfactants or emulsifiers. Any anionic or nonionic surfactant may be used, known in the art, useful in stabilization of vinyl copolymer particles, provided that the desired properties of the aqueous dispersion and of the binder formulation, do not suffer damage. The use of surfactant may not necessarily lead to failure of water resistance of wood bond, nevertheless, if the use of surfactant is not desired for other reasons, the polymerization is preferably carried out without surfactant. Also the use of poly ethylene glycols can be considered for additional particle stabilization, or for other reasons, as known in the art from US 6,673,862 for the emulsion polymerization of vinyl acetate ethylene copolymerization.

Further, all water-insoluble, hydroxyl group containing compounds such as described in US 6,780,931 can be also used during emulsion polymerization to modify particle size distribution and/or to influence viscosity and viscosity stability.

It is also possible to use crosslinking agents and/or chain transfer agents during the emulsion polymerization. Such agents are well known in the art, e.g. described in US 6,552,115 B1, or EP 1304399 B1.

In general the fully hydrolyzed PVOH (c) will be used as an aqueous solution, containing approx. 5 to 15 wt.% of the PVOH (c), which can be prepared as known in the art separately in a solution vessel or directly in the polymerization vessel, which is appropriately equipped.

The initial charge of the polymerization vessel will preferably contain at least a fraction of the PVOH solution, at least 20 wt.% of it, preferred at least 50 wt.%, but most preferred all of it, so that advantageously a delay of the PVOH solution is avoided. Further, if desired, additional amount of water, no more than 50 wt.%, preferably no more than 20 wt.% of the total vinyl ester monomer (a), most preferably less than 10 wt.%, of the total vinyl ester monomer (a), and - if used - at least 50 wt.%, preferably up to 100 wt.% of the reducing agent, will be charged to the reactor, representing the initial reactor charge. If desired traces of a catalyzing agent, e.g. ferrous ammonium sulfate or the like, can also be added, but preferably such catalyzing ingredients are not added. Up to 100 wt.% of the comonomer(s) (b) can be used in initial charge. It is preferred that a fraction proportional to the used fraction of vinyl ester monomer can be initially charged, or nothing of the comonomer(s) can be initially charged, depending on the kind of comonomer used. If the comonomer (b) comprises different compounds, then it may be beneficial to add a part of the compounds initially while the other part is not included within initial reactor charge. Thus, there are no special limits how the comonomer(s) (b) is/are distributed between initial charge and delays. However, preferably no (meth)acrylic acid amide is initially charged.

Thus, in a preferred embodiment, the process according to the present invention comprises the process steps (P1) start of initiation, (P2) monomer delay and (P3) completion of conversion, wherein
(P1) polymerization is started at a pH in the range of 3 to 8, preferably in the range of 3.2 to 6, more preferably in the range of 3.5 to 5, and most preferably in the range of 3.6 to 4.5, optionally at a temperature less than 65 °C,
(P2) the polymerization is continued by at least one monomer delay, optionally by a delay of PVOH (c), at a temperature above of 65 °C, preferably within a temperature range of 70 to 95 °C, more preferred within a temperature range of 80 to 95 °C, in which step the pH is kept within the range of 3 to 8, preferably within the range of 3.2 to 6, and most preferably within the range of 3.2 to 5.5,
(P3) the polymerization is finished by at least an oxidizer delay at a temperature above 80 °C.

pH value of initial charge and the pH value during the course of polymerization have some surprising influence on product performance. It was surprisingly discovered in the course of making the present invention, that the pH value of the initial reactor charge influences grit formation as well as heat resistance and also viscosity stability of the aqueous dispersion. Generally there are no special limits regarding the pH value of initial reactor charge to carry out the polymerization, but with respect to target performance of the aqueous dispersion or the binder formulation obtained therewith, it is preferred to adjust initial reactor charge within a pH range between about > 3 and < 8, preferably within the range between 3.2 and 6.5. The desired pH value can be adjusted by acidic or alkaline solutions, e.g. by formic or sulfuric acid, or by caustic soda lye. A buffer can also be applied. Depending on overall recipe and selected process, pH may significantly influence stability and viscosity of the product. In this work it is preferred to run the polymerization keeping the pH within the range of 3 to 8, preferably within the range of 3.2 and 6.0, and most preferably the pH value during and after the second stage of reaction (P2) is kept within the range between 3.2 and 5.5.

The initial reactor charge is appropriately mixed by stirring and heated up before the initial polymerization reaction is started (P1) by feeding an aqueous solution of the oxidizer constantly, beginning at temperatures of preferably less than 65 °C. The polymerization temperature in general can be in the range of approximately 40 to 95 °C. Upon start of reaction, the temperature will increase due to exothermic monomer conversion. Preferably such exothermic temperature increase is used, especially in large scale reactors, to further heat up the reactor to desired polymerization temperature of above of 65 °C, preferably within a temperature range of approx. 70 to 95 °C, more preferred within a temperature range of 80 to 95 °C.

The second stage of polymerization is the delay period (P2): At desired temperature and conversion of the initially charged monomer(s) the delays of the remaining fractions of monomers (a) and (b) are started. There are no special limits regarding the conversion of the initial monomer(s), before starting the delay(s). Nevertheless, for better control of the reaction and to avoid safety problems in large scale production reactors, it is preferred that the conversion of initially charged monomer is at least 50%, preferably it is above 75%. During the delay period, the polymerization temperature is preferably > 70 °C, more preferably it is > 80 °C. The rate of oxidizer (h) solution feed may be adjusted to control temperature, if necessary, but preferably it is fixed to a constant rate which is optionally different from the initial rate of process step P1. If desired, the remaining fraction of the reducing agent (i), if there is any, also used as an aqueous solution, or a part of it, can be fed to the reactor, not necessarily, but preferred at constant rate. All the remaining vinyl ester monomer (a) and all remaining comonomer (b), and all eventually remaining PVOH solution, are fed during this second stage P2 of polymerization. It is generally possible to run these feeds in one shot, or use variable feeding rates. It is, however, preferred to apply constant feed rates of the vinyl ester monomer (a) and of the comonomer (b) over a delay time of approx. 1 to 4 hours, mainly depending on the cooling capacity of the reactor. For instance, for a scale of 20 qm reactor a delay time of 2 to 4 hours will be possible. The vinyl ester (a) and the comonomer (b) may be fed together or separately. It may be desired to feed also some water within this period, in addition to water present in eventual feeds of PVOH solution, oxidizer solution, solution of reducing agent, or aqueous comonomer solution.

The second stage of polymerization (P2) is finished when all monomer feed(s) and eventually the PVOH solution feed have been completed.

During the following third stage of polymerization (P3) the conversion of monomer is driven by further continuous feeding of oxidizer together with - if applied - the reducing agent feed. During this period P3 the oxidizer rate, and eventually the reducing agent rate, are increased compared to the rate within the second stage of polymerization, to achieve nearly complete monomer conversion. Monomer conversion is regarded to be nearly complete in the sense of the present invention, if it is larger than 98%, preferably larger than 99%. The duration of this stage P3 will be normally less then 1 hour, preferably less than half an hour.

Unreacted or residual monomer will be converted within an optional fourth step of polymerization (P4). This additional step of post polymerization is performed to reduce residual monomer to a level of below 0.1 wt.% based on total aqueous dispersion, by adding a further oxidizer (j), preferably different from oxidizer (h), in particular t-butyl hydrogen peroxide, and a further reducing agent (k), in particular ascorbic acid or sodium erythorbate. In this step, preferably a more concentrated solution of oxidizer, for instance a 10 wt.% solution of tBHP as an oxidizer, and a 10 wt.% solution of sodium erythorbate as the reducing agent may be fed continuously and parallel, or one after the other, or these can be added as alternate shots.

After post polymerization (P4) is finished, or preferably already starting during the last two stages (P3, P4) of polymerization, the optionally PVOH (e), the coalescing agent (d), the optionally viscosity modifier (f), and the optionally included urea, can be added in parallel feeds, or one after the other, or as shots. The components (d), optionally (e), and optionally (f), and optionally urea can also be added later, after cooling down.
The cooling process is preferably executed under vacuum and reflux, to reduce the cooling down time. After cooling, then - if not done before - the components (d), optionally (e), optionally (f), and optionally urea, are mixed with the aqueous dispersion, and with further compounds, at least with biocide, to provide the aqueous polymer dispersion already suitable as an aqueous dispersion binder, in particular as wood adhesive formulation or as a paper and packaging adhesive formulation.

In a particularly preferred embodiment of the present invention, the process comprises:
- hydrogen peroxide as the oxidizer (h),
- tartaric acid as the reducing agent (i1) and optionally ascorbic acid or sodium erythorbate as the reducing agent (i2),
wherein all of the reducing agent (i1) is initially charged to the reactor and the reducing agent (i2) is delayed starting at any time between (P1) the reaction is started by oxidizer addition (h) and the end (P3) of the oxidizer addition (h),
wherein the oxidizer (h) is fed continuously, preferably without any initial shot of it, until the reaction is driven to nearly complete conversion within process step (P3).

It is also possible to use only ascorbic acid or sodium erythorbate as the sole reducing agent (i), without applying tartaric acid. When tartaric acid is used, then it is preferred to include all of it within initial reactor charge and not to use it as a delay. When ascorbic acid and/or sodium erythorbate is/are used, then it is preferred to apply them within delay feed(s). An additional finding made in the course of making the present invention was particularly surprising: The use of ascorbic acid or of sodium erythorbate improves viscosity stability after storage whereas any delay of tartaric acid, which may be advantageously used in initial reactor charge, may have negative influence on viscosity stability after storage. Therefore the use of tartaric acid within process steps P2, P3, and P4 is not preferred.

With respect to viscosity stability after storage, the molar ratio of reducing agent (i) to oxidizing agent (h) is preferably in the range of 0.10 to 0.80, more preferably in the range of 0.12 to 0.48.

With respect to viscosity and viscosity stability after storage, the molar amount of totally used oxidizing agent (h) is preferably in the range of 0.25 to 1.20 mol%, more preferably of 0.25 to 0.80 mol%, most preferably 0.30 to 0.80 mol%, based on total molar amount of vinyl ester monomer(s) (a).

According to a further variant of the present invention, the process comprises a subsequent step (P5) of adding after post polymerization step (P4) is finished, or starting after delay(s) of monomer (P3) are finished, one or more of PVOH (e), of coalescing agent (d), of viscosity modifier (f), and of urea (g).

The amounts of vinyl ester monomer (a); comonomer (b); fully hydrolyzed PVOH (c) which is applied as aqueous solution; initiator compounds (h) and (i) also used as aqueous solutions; together with additional water, are selected in such a way, that the resulting aqueous dispersion, after completion of polymerization, has a solids content within the range of 30 to 70 wt.%, preferably in the range of 40 to 60 wt.%, more preferably in the range of 45 to 55 wt.%, most preferably it is at least 49 wt.%.

The viscosity of the final product comprising converted vinyl ester monomer (a), converted comonomer (b), fully hydrolyzed PVOH(c), reaction products of initiator compounds (h) and (i), optionally a coalescing agent (d), optionally another fully hydrolyzed PVOH (e), optionally a viscosity modifier (f), and optionally urea (g), all together with water, measured as Brookfield RVT viscosity at 20 RPM at 23 °C, Bf20, is in the range of 3 000 to 30 000 mPas for a solids content between approx. 45 to 55 wt.%.

In a particularly preferred embodiment of the present invention, the process comprises polymerization steps (P1) to (P3) in the presence of at least the following components:
(a) 95.0 - 99.9 wt.%, based on total used monomers, of only vinyl acetate,
(b) 0.1 to 5.0 wt.% of comonomer(s), in particular comprising, based on total used monomers, 0.1 to 2.5 wt.%, preferably 0.2 to 1.25 wt.%, more preferred 0.2 to 0.8 wt.%, and in particular 0.3 to 0.7 wt.% of acrylamide,
(c) more than 8 to less than 11 wt.% based on totally used monomers of fully hydrolyzed PVOH, including 10 to 60 wt.% , based on total used PVOH (c) of E-PVOH,
wherein the E-PVOH, as determined by NMR analysis, has an ethylene content within the range of 2 to 6 mol%,
wherein the fully hydrolyzed PVOH has an average degree of hydrolysis within the range of 98.1 to 99.9 mol%, preferably within the range of 98.1 to 99.1 mol%,
and wherein the weight average degree of polymerization DP_{W} of any of the fully hydrolyzed PVOH (c) is within the range of 500 to 4000,
optionally less than 2 wt.%, preferably 0.1 to 1.5 wt.% based on total used monomers of surfactant,
(h) oxidizing agent comprising peroxide, preferably hydrogen peroxide,
(i) reducing agent comprising tartaric acid, ascorbic acid, sodium erythorbate, or mixtures thereof;
and a post polymerization step (P4) in the presence of at least the following components:
(j) t-butyl hydrogen peroxide,
(k) ascorbic acid and or sodium erythorbate,
wherein the polymerization steps (P1) to (P4) are carried out at temperatures in the range of from 45 to 95 °C, at a starting pH in step (P1) in the range of from 3.2 to 5.5, and at a pH during the course of polymerization (P2) and (P3) within the range of from 3.2 to 5.5 and wherein no formaldehyde or formaldehyde releasing compounds are added.

As a beneficial option, this process may comprise an additional step (P5) of adding after post polymerization (P4) is finished, or starting after delay(s) of monomer(s) (P3) are finished, one or more of the following components:
(d) one or more coalescing agent(s), in particular butyl carbitol acetate and/or propylene carbonate, or a blend of both,
(e) PVOH, in particular comprising E-PVOH,
(f) viscosity modifier(s),
(g) urea.

In the published prior art, problems associated with viscosity stability upon storage at different temperatures when fully hydrolyzed S-PVOH or E-PVOH is used are widely discussed (e.g. in JP2001261912 A, US 6,451,898, US 5,599,870, JP 2002241411, US 6,780,931. Prior art, e.g. US 6,451,898, JP 2001172591 A, US 6,780,931) discloses limited opportunities to overcome problems of viscosity change upon or after storage of such aqueous dispersions or of adhesive formulations obtained thereof, e.g. US 6,451,898 B1 suggests to include a glycol ether compound as a viscosity modifier, or US 6,780, 931 B1 includes a water-insoluble, hydroxyl group containing compound such as water-insoluble ester alcohol compound.

In the course of making the present invention it was surprisingly found that viscosity stability after storage of the aqueous polymer dispersions may be further increased by proper selection of kind and/or amount of the PVOH grades, used during polymerization (PVOH component (c)) or as post additive (PVOH component (e), different from component (c)), and/or by proper selection of polymerization conditions, such as initial and running pH, kind and amount of initiator components (h) and (i) used in initial reactor charge and/or as a delay feed, and/or by proper selection of a viscosity modifying compound used during polymerization and/or of a post added viscosity modifier (f).

With the present invention it is possible to achieve viscosity stability after storage at different temperatures which are at least comparable to commercial products which make use of acidic NMA crosslinking to achieve sufficient water resistance. In particular, aqueous polymer dispersions of the present invention show significantly improved viscosity stability at elevated temperatures, as e.g. temperatures of about 50 to 60 degrees C, compared to conventional dispersions containing NMA. Acidic NMA crosslinking, additionally, bears the inherent danger of wood discoloration during to gluing and is therefore rejected.

The particle size of the inventive aqueous polymer dispersion is characterized by a median of volume distribution function x_{3,50}, measured with a COULTER® LS230 device, of x_{3,50} < 1.50 µm, preferably of x_{3,50} < 1.25 µm. Further the volume distribution of particle size is characterized by a minimum particle size x_{3,min} of about 0.1 - 0.2 µm and a maximum particle size x_{3, max} of about 3 to 6 µm. The minimum particle size x_{3,min} is defined in that a maximum of only 5 vol.%, preferred only 2 vol.%, and more preferred 0 vol.% is smaller than x_{3,min}. The maximum particle size x_{3, max} is defined in that a maximum of only 5 vol.%, preferred only 2 vol.%, and more preferred 0 vol.% is larger than X_{3, max}.

In the following various applications are discussed which make beneficial use of an improved heat resistance achieved according to the present invention.

The aqueous polymer dispersions of this invention alone or after formulation can be used as a binder free of N-alkylol derivatives of acrylic acid amides with improved water and heat resistance.

Such applications include, but are not limited to, aqueous binders for bonding porous or semi-porous substrates together or to other substrates including wood, wood fiberboard, paper, wood chipboard, paper cardboard, corrugated board, foamed plastic, cement, plaster, leather, textile, nonwoven, and the like. Furthermore the uses include but are not limited to binding of fibers to wood fiberboard, the binding of leather fibers, the making of cardboard or corrugated board. Further uses include binders in cement based building materials and plaster.

In particular, the aqueous polymer dispersion of this invention can be used alone or in a binder formulation as an adhesive, especially as wood working adhesives or wood glues, where when used for veneer lamination the advantage of avoiding wood discoloration is of special advantage. Further on the aqueous polymer dispersion of this invention can also be used alone or formulated as binder or as adhesive for paper and packaging, or for carpets, in binders for glass fibers and as parquet adhesive, as adhesive for leather, foamed plastic, textile, wood fiber boards, wood chip boards, floor and wall coverings. In all these applications the bond exhibits increased water and heat resistance.

Most important is the application as wood adhesive for veneer gluing. In these applications, a water resistance measured as D3/3 value according to DIN EN 204/205 of D3/3 ≥ 1.5 N/mm² or D3/3 ≥ 2 N/mm² and a heat resistance of at least 5 N/mm² are beneficial. More general wood adhesives are demanded fulfilling the requirements of water resistance class D3, meaning water resistance of D3/3 ≥ 2 N/mm² according to DIN EN 204/205, and providing a heat resistance in terms of WATT 91 of ≥ 6 N/mm² according to WATT 91 test method DIN EN 14257. The dispersions of the present invention comply with these requirements without the presence of acidic crosslinking of NMA compounds, thus providing an adhesive which does not show any acidic based discoloration of the wood due to gluing.

Adhesives for paper and packaging include but are not limited to case sealing, book binding, bag making, card board lamination. With respect to the use as a paper and packaging adhesive it is increasingly important that a high percentage of waste paper and board is collected and recycled. This waste paper contains a number of noncellulosic "impurities" such as, for example, adhesive tapes, film materials, composite materials and adhesive films. For recycling the collected waste paper is disintegrated in a pulper (defibrator) in water at a neutral or alkaline pH, eventually at slightly increased temperatures, by mechanical action as far as possible down to the individual cellulose fibers. This is followed by cleaning in a multi stage process with the object of obtaining a pulp of cellulose fibers which is as pure as possible and which can be used on the paper machine without causing faults. The cleaning steps virtually always comprise a screening.

In the processing of fiber pulps, obtained from waste paper, on high-speed paper machines, faults keep occurring due to the formation of so called "stickies", due to residues of adhesives which have not been separated off during the processing step. "Stickies" are to be understood here as lumps or clusters of polymers which compromise the produced paper. Moreover stickies are deposited, for example, on rolls and screens of the paper machines and thereby cause fault in the operating sequence. Glues, based on the aqueous polymer dispersions of this invention, used as adhesives for paper and packaging will beneficially form, during waste paper repulping, mainly glue lumps of a size big enough that the lumps can be screened off during standard paper repulping process. This is due to the high water and heat resistance of the dispersions of this invention and is contrary to standard polyvinyl acetate based paper and packaging adhesives as the current standard water based paper and packaging adhesives. The aqueous polymer dispersions of this invention thus significantly reduce the risk of formation of such "stickies" and thereby increase quality and productivity of paper production.

### Examples

### 1. Test Methods

### 1.1 Particle size of aqueous polymer dispersion

Final latex particle size distributions were obtained using the COULTER® LS230, supplied by Coulter Cooperation, Miami, Florida 33196. Samples of the final latex were diluted to appropriate concentration using pure distilled water.
Coulter LS230 measurement is based on light diffraction combined with some static light scattering and provides a particle size distribution. As the larger particles are overestimated by this instrument, the median of the volume distribution function x_{3,50} was chosen to characterize an average particle size.

In general there are no special limits regarding particle size because most important properties of the adhesive such as water and heat resistance are more or less independent from particle size. Nevertheless, to avoid particle settling in low solids or low viscous modifications of the adhesive and to avoid a drop of setting speed it is preferred that x_{3,50} is < 1500 nm, preferably it is < 1250 nm.

### 1.2 Estimation of grit of aqueous polymer dispersion

100 grams of polymer dispersion are diluted with distilled water (up to 1 liter) and filtered through a nylon sieve of 150 µm mesh and subsequently through a sieve of 40 µm. Sieves are rinsed with sufficient water until only pure water passes. The residual on the sieves is dried to constant mass. Total grit content > 40 µm is calculated from the dried residual on both sieves and given as Grit 40 in parts per million (10⁶), ppm, based on polymer latex. It shall be mentioned, that the use of a 40 µm sieve for the fine grit is a very strong estimation; in practice 50 µm, or 60 µm, or even 100 µm sieves are used for fine grit estimation. Such less strict estimation of fine grit would reduce the here reported results of total Grit 40 by 20, to 40, to 80%.

For practical use in a wood glue it is desired that the value of Grit 40 is < 1000 ppm, preferably < 800 ppm, and most preferably < 600 ppm.

### 1.3 Viscosity and shear thinning of aqueous polymer dispersion

Latex viscosity was measured using Brookfield RVT viscosimeter. Viscosity data were taken for 1, 10 and 20 RPM. The latex viscosity is given for 20 RPM as Bf 20. To characterize the non-Newtonian behavior a shear thinning factor SF is calculated from the viscosities at 1 and 10 RPM: SF = ((Bf1 / Bf10) - 1). A shear thinning factor SF > 0 indicates shear thinning whereas SF < 0 stands for shear thickening. All measurements were done at 23 °C.

There are no special limits regarding viscosity. For practical use according to European accepted customs viscosity Bf20 should be in the range of 3000 to 30000 mPas if solids content is in the range of 45 to 55 wt.%. Also with respect to practical use it is desired that shear thinning factor is in general SF > 0, preferably SF is between 0.05 and 1.2, more preferably SF is in the range of 0.05 and 1.0.

### 1.4 Viscosity stability after storage

Aqueous dispersions samples of about 250 grams were either left to stand at room temperature (RT) over a period of about three months; or for 10 days at about 5 degrees Celsius, or for 10 days at about 50 degrees Celsius. After such storage the samples - after equilibrated to ambient temperature RT - were evaluated by expert's eye before any stirring regarding their fluidity and judged by following fluidity scores:
Score 1: fluid dispersion, no indication of structure formation or "gelling";
Score 2: fluid dispersion, very little indication of structure formation or "gelling";
Score 3: still fluid but some indication of structure formation or "gelling";
Score 4: clear flow limit or yield point due to structure formation or "gelling";
Score 5: solid (complete irreversible gelling).

Scores 1 and 2, and limited also score 3 can be accepted for practical use, whereas products characterized by scores 4 and 5 are not suitable for technical use.
Viscosity Bf20 of several of these samples was measured at 23 degrees Celsius - after shortly stirring them by hand with a spatula -, and viscosity of these stirred samples were compared to their initial viscosity Bf20 before storage. The apparently irreversible viscosity change is expressed in percent of initial viscosity in steps of 5%. If initial viscosity is in the range of about 10000 mPas then a change of viscosity of less than about 40% is still acceptable for practical use provided that the fluidity score is better than 3. In general an upper limit of about 30000 mPas should not be exceeded.

### 1.5 Testing the setting speed after 2.5 min setting time

In a manner similar to the procedure for testing the bond strength, pairs of oak panels each 5 mm thick, 20 mm wide and 150 mm long were bonded using the respective adhesive dispersions, with a pressure distributed uniformly over the bond area. The bond area was 20 mm * 20 mm. Bond strength was determined in the tensile shear test after 2.5 minutes, where after the bonded test specimens were pulled apart using a tensile testing machine at a pulling speed of 50 mm/min and were stressed until they broke. On fracture, the maximum force F*ₘₐₓ* which occurred at that point was determined, and was used in turn to determine the bond strength at setting time t by T_{τ} = F*ₘₐₓ*/A, where A is the bonded test area. Results are given in N/mm².

As for performance it is desired to achieve bond strength after 2.5 min of T(2.5) ≥ 2 N/mm², thus providing a fast setting wood glue.

### 1.6 Water resistance in accordance with DIN EN 204/205

Test specimens were produced in accordance with DIN EN 205. For this purpose pairs of beech wood panels, each 5 mm thick, 130 mm wide and 600 mm long, were bonded to one another with the adhesive formulation to be tested under a pressure distributed uniformly over the bond area and were stored in accordance with DIN EN 204. Following storage, the bonded panels were divided into test specimens each measuring 150 mm in length, and these test specimens were used to determine the bond strength in the tensile shear test. In this test the bonded specimens were pulled apart using a tensile testing machine at a pulling rate of 50 mm/min and were stressed until they broke. On fracture, the maximum force F*ₘₐₓ* which occurred at that point was determined. The bond strength T is calculated in accordance with DIN EN 205 from T = F*ₘₐₓ*/A, where A is the bonded test area. Results are given in N/mm².
For testing of allocation to performance group D3 serial number 3 according to DIN EN204, named as D3/3, the specimens, after gluing, were stored under standard climatic conditions (23 °C, 50% atmospheric humidity) for 7 days and then stored in cold water at 20 °C for 4 days.
Allocation to performance group D3/3 requires to achieve a value of D3/3 ≥ 2 N/mm². For veneer gluing - a preferred application of the inventive adhesive - therefore at least D3/3 ≥ 1.5 N/mm² should be achieved.

### 1.7 Heat resistance according to WATT 91 test method DIN EN 14257

As test specimens, pairs of beech wood panels each 5 mm thick, 125 mm wide and 325 mm long were bonded to one another using the respective adhesive dispersion, under a pressure distributed uniformly over the bond area. Following storage, the bonded panels were divided into test specimens each measuring 150 mm in length and 20 mm in width. After the test specimens had been prepared they were stored at a temperature of 80 °C in an oven preheated to 80 °C. Directly following hot storage, the thermal stability was determined in the tensile shear test on the lines of DIN EN 205, in which the bonded test specimens were pulled apart using a tensile testing machine at a pulling speed of 50 mm/min and were stressed until they broke. On fracture, the maximum force F*ₘₐₓ* which occurred at that point was determined. The cohesion or thermal stability τ is calculated from τ = F*ₘₐₓ*/A, where A is the bonded test area. Results are given as WATT in N/mm².
It is desired to achieve heat resistance as a bond strength WATT ≥ 6 N/mm².

### 1.8 Resistance to sustained load according to test method BS 3544 paragraph 2, 1962: Creep Resistance

"Resistance to sustained load according to test method BS 3544 paragraph 2" will be referred to as "Creep resistance" throughout the present specification.

Test pieces are prepared as described in detail in BS 3544 Appendix A. In principle each test piece is made from three slips of beech 114 mm long, 25 mm wide and 3,2 mm thick, joined together with the adhesive dispersion under test so as to produce a 12,5 mm overlap joint (BS 3544, Fig. 6). After preparation the test pieces are conditioned at a temperature of 25 ± 1°C and 65 ± 2% relative humidity for at least 7 days. To carry out the "Test for resistance to sustained load" a special jig, as shown in Fig.2 in BS 3544, is used. With this type of jig up to 12 test pieces may be tested with one set of weights. The test pieces are supported by means of small packing pieces between the frames of the jigs. The jig and the test pieces are placed in a conditioning atmosphere of a temperature of 25 ± 1°C and 65 ± 2% relative humidity. The top frame of the jig is supported from a metal frame (height about 2 m) and a load of 46 kg is applied to the bottom frame.
A group of five test pieces for each adhesive is tested. One day (24 hours) after application of the load the test pieces which resisted to the load are registered. This is repeated each day up to seven days. After seven days the test is finished. For each day a test piece does not fail one point is granted. This means e.g. that if all test pieces fail during the first day the result is "zero points", being the lowest result possible. If 5 test pieces pass 1 day and 3 two days and after three days all failed the result is 5 x 1 + 3 x 1 = 8 points. Best possible result is 5 x 7 = 35 points if the five test pieces resist during the whole test time of seven days.
The test procedure is executed with a load of 46 kg, named as Creep 46, and in a second test series with an increased load of 56 kg, named as Creep 56. The increased load can help to detect differences in creep resistance between those adhesive dispersions which all passed the lower load with the best achievable result of 35 points.
It is desired to achieve Creep 46 of 35 points and Creep 56 of > 25 points.

### 1.9 Test of Hardwood Adhesion (HWA)

The test is made with beech wood as a typical hardwood often used e.g. for making of furniture.
Logs of beech wood with a length of 5 cm are cut from a beech wood slat having a width of 5 cm and a thickness of 2.5 cm. These logs have two ends with an end grain surface. Ten of these logs are glued with an end grain surface to the planed surface of ten different beech wood slats, the slats having a width of 5 cm, a length of 40 cm and a thickness of 2.5 cm. To glue a log the adhesive is applied to a end grain surface with a spatula or a brush with an average thickness of 0.6 to 1 mm. Directly after application of the adhesive the log is glued by hand to the planed surface of a slat. This is made by slightly pressing and rubbing until the log adheres and excessive adhesive is pressed out from the glue line. The logs are glued to the broad side of the slat in such a manner that their long side is parallel to the long side of the slat. The glued specimens are stored for drying at 23 °C and 50% relative humidity for at least 7 days.
After drying each slat is fixed with screw clamps to a workbench in such a manner that the glued log faces upwards. With a hammer the log is knocked off the slat in long direction. The percentage of the glue line surface showing fiber tear at the slat surface is evaluated visually. The average fiber tear of the ten test specimens is given as HWA in % of fiber tear.
It is desired to achieve HWA of at least 10%.

### 1.10 Repulping Test

The aqueous emulsion being tested was coated to 80 g/m² vellum paper at a thickness of 60 to 70 g/m² wet. The coated paper was dried over night at 23°C and 50% of relative humidity.
For repulping 400 g of about 50 °C warm water, were put into a 600 ml beaker, pH was adjusted by sodium hydroxide solution to 11 to 11.5, and 2 g of coated paper was torn into pieces of about 2x2 cm and suspended in the water, free of lumps as far as possible. The water and the paper were transferred into a kitchen mixer (Type D70 Moulinex) and defibrated for 20 minutes at speed stage 1. Temperature of the water/paper mixture during repulping was 40 to 45 °C. The content of the mixer was then put into a 1 I beaker and made up to a total quantity of 800 ml and homogenized for 1 minute using a wing stirrer at about 1300 rpm. About 5 g were taken from the homogeneous mixture and distributed on an absorbent paper over a surface area of about 5x5 cm. The size of the adhesive particles was measured.
It is desired to achieve adhesive particle sizes of at least 0.3 mm.

### 2. Polymerization Procedures

Examples have been carried out using mainly two different procedures. Procedure 1 is the preferred procedure for the inventive examples using the inventive composition. Procedure 2 is close to prior art, as laid open for instance in JP 2001261912; US 6,451,898; or in JP 2001 172591.
Tables 1.1 for inventive examples and Table 1.2 for comparative examples summarize distribution of vinyl acetate monomer and of initiator components between initial reactor charge and delays.

### Procedure 1

All inventive examples given below were executed in a 3 1 glass reactor, equipped with electronic temperature measurement and control, reflux condenser, and metering pumps for at least four different feeds for parallel feeding, using an anchor-type stirrer at 200 RPM. A nitrogen flow was applied for 15 minutes for the initially charged PVOH solution.
The ingredients of the recipe were distributed among initial reactor charge, feed 1, feed 2, feed 3, feed 4, feed 5 and 6, if applied. The amount of the ingredients was chosen to give a final latex of 1800 to 2500 grams. The initial reactor charge was heated and feed 1 (and 2, if used) were started at approximately 50 °C to initiate the reaction. Feed 3 (and 4, if used) were started 5 min after a temperature of 60 °C was reached, they were metered in over a time of 60 to 180 minutes. Reaction temperature was maintained above 70 °C, preferably between 75 and 85 °C during the addition of feeds 3 and 4. It was up to 90 °C for the last hour where the remaining feed 1 (and 2, if used) were added completely, after feeds 3 and 4 were finished.
The free monomer content based on actual amount latex after the start of feeds 3 and 4 was controlled by appropriate addition rates for feeds 1, 2, 3, and 4 to be between 2 to 15 wt.%. Feed 5 and 6 are added for post polymerization after feeds 1 and 2 have been completed. The product was cooled to ambient temperature under stirring at 100 rpm and application of a vacuum.

### Procedure 2

Additional examples given below were executed in a 3 1 glass reactor, equipped with electronic temperature measurement and control, reflux condenser, and metering pumps for at least two different feeds for parallel feeding using an anchor-type stirrer at 150 RPM. A nitrogen flow was applied for 15 minutes for the initially charged PVOH solution.
The ingredients of the recipe were distributed among initial reactor charge including a first shot of tartaric acid and a shot of hydrogen peroxide, a hydrogen peroxide feed 1, and a vinyl acetate feed 3. The initial reactor charge was heated to 60 °C. After passing the maximum temperature related to nearly complete conversion of the initial vinyl acetate, feed 1 and 10 minutes later feed 3 were started. Feed 3 was metered in over 150 minutes, constantly. Feed 1 was finished 30 min after feed 3, and then a second shot of tartaric acid was applied as feed 2. Reaction temperature was maintained between 81 and 86 °C during the addition of feeds 1 and 3. It was up to 90 °C for the last 30 min after the second shot of tartaric acid. The product was cooled to ambient temperature under stirring at 100 rpm and application of a vacuum.

**Table 1.1: Data characterizing the polymerization procedure of inventive Examples**

| | 1 | 2 | 3 | 4 | 5 | 6 | 7 | 8 | 9 |
|---|---|---|---|---|---|---|---|---|---|
| Example | wt.% initial VAC / total VAC | Mol% H2O2 / initial VAC | Mol% H2O2 / total VAC | initial R2 | Mol% initial R2 / H2O2 | Mol% AscAc / H2O2 | Mol% Na-iAsc / H2O2 | PP Mol% tBHP / H2O2 | PP Mol% Na-iAsc / PP tBHP |
| 1 | 10.06 | 3.80 | 0.38 | tart. Ac. | 25.69 | | | 5.04 | 45.43 |
| 2 | 10.06 | 3.80 | 0.38 | AscAc | 20.60 | 11.27 | | 5.04 | 45.43 |
| 3 | 10.06 | 3.80 | 0.38 | Na-iAsc | 18.31 | | 10.02 | 5.04 | 45.43 |
| 4 | 5.03 | 7.59 | 0.38 | tart. Ac. | 19.34 | 11.27 | | 10.08 | 45.43 |
| 5 | 10.06 | 3.80 | 0.38 | tart. Ac. | 25.69 | | | 5.04 | 45.43 |
| 6 | 5.03 | 7.59 | 0.38 | tart. Ac. | 25.69 | | | 5.04 | 45.43 |
| 7 | 5.03 | 7.59 | 0.38 | tart. Ac. | 19.34 | | | 5.04 | 45.43 |
| 8 | 5.03 | 7.59 | 0.38 | tart. Ac. | 19.34 | | | 5.04 | 45.43 |
| 9 | 5.03 | 7.59 | 0.38 | tart. Ac. | 19.34 | | | 5.04 | 45.43 |
| 10 | 4.57 | 7.59 | 0.35 | tart. Ac. | 19.34 | | | 10.08 | 45.43 |
| 11 | 5.03 | 11.39 | 0.57 | tart. Ac. | 17.12 | | | 3.36 | 45.43 |
| 12 | 5.03 | 15.19 | 0.76 | tart. Ac. | 12.84 | | | 2.52 | 45.43 |
| 13 | 9.23 | 3.80 | 0.35 | tart. Ac. | 25.69 | | | 5.04 | 45.43 |
| 14 | 10.06 | 3.80 | 0.38 | tart. Ac. | 25.69 | | | 5.04 | 45.43 |
| 15 | 10.06 | 3.80 | 0.38 | tart. Ac. | 25.69 | | | 5.04 | 45.43 |
| 16 | 10.06 | 3.80 | 0.38 | tart. Ac. | 25.69 | | | 5.04 | 45.43 |
| 17 | 10.06 | 3.80 | 0.38 | tart. Ac. | 25.69 | | | 5.04 | 45.43 |
| 18 | 10.06 | 3.80 | 0.38 | tart. Ac. | 25.69 | | | 5.04 | 45.43 |
| 20 | 4.57 | 7.59 | 0.35 | tart. Ac. | 19.34 | | | 10.08 | 45.43 |
| 21 | 4.57 | 7.59 | 0.35 | tart. Ac. | 25.69 | 10.94 | | 10.08 | 45.43 |
| 22 | 4.57 | 7.59 | 0.35 | tart. Ac. | 25.69 | 10.94 | | 10.08 | 45.43 |
| 23 | 10.06 | 3.80 | 0.38 | tart. Ac. | 25.69 | | | 5.04 | 45.43 |
| 24 | 5.03 | 7.59 | 0.38 | tart. Ac. | 25.69 | | | 5.04 | 45.43 |
| 25 | 5.03 | 7.59 | 0.38 | tart. Ac. | 25.69 | | | 5.04 | 45.43 |
| 38 | 10.06 | 3.80 | 0.38 | tart. Ac. | 25.69 | | | 5.04 | 45.43 |
| 39 | 10.06 | 0.47 | 0.05 | tart. Ac. | 205.48 | | | 40.31 | 45.43 |

| | | | | | | | | | |
|---|---|---|---|---|---|---|---|---|---|
| Columns have following meaning: 1: wt.% of initially charged vinyl acetate (VAC) based on total VAC 2: mol% of total used hydrogen peroxide based on initial charged VAC 3: mol% of total used hydrogen peroxide based on total used VAC 4: kind of initial charged reducing agent R2; tart. Ac.: tartaric acid; AscAc.: ascorbic acid; Na-iAsc: sodium erythorbate 5: mol% of initial R2 based on total hydrogen peroxide 6: mol% of delayed ascorbic acid based on total hydrogen peroxide 7: mol% of delayed sodium erythorbate based on total hydrogen peroxide 8: mol% of t-butyl hydrogen peroxide (tBHP) used for post polymerization (PP) based on total hydrogen peroxide 9: mol% of Na-iAsc used for PP based on tBHP | | | | | | | | | |

**Table 1.2: Data characterizing the polymerization procedure of comparative Examples indicated by ***

| | 1 | 2 | 3 | 4 | 5 | 6 | 7 | 8 | 9 |
|---|---|---|---|---|---|---|---|---|---|
| Example | wt.% initial VAC / total VAC | Mol% H2O2 / initial VAC | Mol% H2O2 / total VAC | initial R2 | Mol% initial R2 / delayed H2O2 | Mol% initial R1 / delayed H2O2 | Mol% delayed tart. Ac. / delayed H2O2 | PP Mol% tBHP / total H2O2 | PP Mol% Na-iAsc / PP tBHP |
| 26 * | 10.06 | 3.80 | 0.38 | tart. Ac. | 25.69 | | | 5.04 | 45.43 |
| 27 * | 10.06 | 3.80 | 0.38 | tart. Ac. | 25.69 | | | 5.04 | 45.43 |
| 28 * | 10.06 | 3.80 | 0.38 | tart. Ac. | 25.69 | | | 5.04 | 45.43 |
| 29 * | 9.99 | 1.72 | 0.32 | tart. Ac. | 56.66 | 85.94 | 56.66 | | |
| 30 * | 9.99 | 1.72 | 0.32 | tart. Ac. | 56.66 | 85.94 | 56.66 | | |
| 31 * | 9.99 | 1.72 | 0.32 | tart. Ac. | 56.66 | 85.94 | 0.00 | | |
| 32 * | 9.99 | 1.72 | 0.32 | tart. Ac. | 56.66 | 85.94 | 56.66 | | |
| 33 * | 8.94 | 1.62 | 0.29 | tart. Ac. | 70.05 | 100.00 | 70.05 | | |
| 34 * | 25.09 | 0.18 | 0.05 | | 0.00 | | | 45.13 | 58.44** |
| 35 * | 10.06 | 3.80 | 0.38 | tart. Ac. | 25.69 | | | 5.04 | 45.43 |
| 36 * | 10.06 | 3.80 | 0.38 | tart. Ac. | 25.69 | | | 5.04 | 45.43 |
| 37 * | 10.06 | 3.80 | 0.38 | tart. Ac. | 25.69 | | | 5.04 | 45.43 |

| | | | | | | | | | |
|---|---|---|---|---|---|---|---|---|---|
| Columns have following meaning: 1: wt.% of initially charged vinyl acetate (VAC) based on total VAC 2: mol% of total used hydrogen peroxide based on initial charged VAC 3: mol% of total used hydrogen peroxide based on total used VAC 4: kind of initial charged reducing agent R2; tart. Ac.: tartaric acid 5: mol% of initial R2 based on delayed hydrogen peroxide 6: mol% of initial oxidizing agent R1 based on delayed hydrogen peroxide 7: mol% of delayed tartaric acid based on delayed hydrogen peroxide 8: mol% of t-butyl hydrogen peroxide (tBHP) used for post polymerization (PP) based on total hydrogen peroxide 9: mol% of Na-iAsc used for PP based on tBHP; ** for example 34* sodium formaldehyde sulfoxylate was used | | | | | | | | | |

### 3. Characterization of applied S-PVOH and E-PVOH

Table 2 summarizes the properties of S-PVOH and E-PVOH grades used. The molecular weight is characterized by the viscosity of a 4 wt.% solution, measured at 23 °C; corresponding weight average degree of polymerization DP_{W} and weight average molecular weight M_{W} can be taken from Table 8, below. Residual acetate groups, or respectively degree of hydrolysis, and ethylene content were estimated using NMR analysis.

**Table 2: Characterization of used S-PVOH and E-PVOH grades**

| Grade | Ethylene content | Hydrolysis | 4% Solution viscosity |
|---|---|---|---|
| | Mol% | Mol% | m Pas |
| A | 3.2 | 98.1 | 26 |
| B | 5.4 | 99.2 | 14 |
| C | 9.6 | 98.9 | 4 |
| D | 0 | 98.4 | 30 |
| E | 0 | 98.6 | 29 |
| F | 0 | 98.2 | 6 |
| G | 0 | 88.2 | 46 |
| H | 0 | 87.8 | 19 |
| I | 0 | 88.1 | 25 |
| J | 0 | 98.3 | 67 |
| K | 0 | 88.0 | 8 |
| L | 2.9 | 93.1 | 18 |

Table 3.1 summarizes the aqueous polyvinyl alcohol solutions used for polymerization or post addition. Solutions have been prepared as known in the art. Their solids content was adjusted to 10.0 ± 0.2 wt.%. Table 3.2 summarizes the used PVOH solutions for all examples 1 to 39, and Table 3.3 gives this information for VS- and RP-Trials as described below.

**Table 3.1. Polyvinyl alcohol solutions prepared from PVOH grades in Table 2; solution concentration - if not given different for individual Examples - is about 10 wt.%**

| Solution | wt. fraction of grade I | wt. fraction of grade II | wt. fraction of grade III | wt. fraction of grade IV | wt. fraction of grade V |
|---|---|---|---|---|---|
| 1 | 100 B | | | | |
| 2 | 100 A | | | | |
| 3 | 50 C | 50 E | | | |
| 4 | 90 A | 10 H | | | |
| 5 | 90 B | 10 G | | | |
| 6 | 10 F | 20 A | 20 B | 50 D | |
| 7 | 50 D | 50 B | | | |
| 8 | 30 B | 70 D | | | |
| 9 | 100 L | | | | |
| 10 | 10 F | 20 A | 20 B | 25 D | 25 J |
| 11 | 100 J | | | | |
| 12 | 100 H | | | | |
| 13 | 100 K | | | | |
| 14 | 60 B | 40 H | | | |
| 15 | 10 F | 25 A | 25 B | 40 D | |
| 16 | 20 B | 80 D | | | |
| 17 | 10 B | 90 D | | | |
| 18 | 50 F | 50 E | | | |
| 19 | 100 E | | | | |
| 20 | 100 D | | | | |

**Table 3.2. Polymerization procedure, amount of comonomer based on total used monomer, and PVOH composition used for examples 1 to 39;**

| Example | polym. proc. | wt.% comonomer | solution No | wt.% grade I | wt.% grade II | wt.% grade III | wt.% grade IV | wt.% grade V |
|---|---|---|---|---|---|---|---|---|
| 1 | 1 | 0.6 | 1 | 100 B | | | | |
| 2 | 1 | 0.6 | 2 | 100 A | | | | |
| 3 | 1 | 0.6 | 2 | 100 A | | | | |
| 4 | 1 | 0.6 | 6 | 10 F | 20 A | 20 B | 50 D | |
| 5 | 1 | 0.6 | 6 | 10 F | 20 A | 20 B | 50 D | |
| 6 | 1 | 0.6 | 6 | 10 F | 20 A | 20 B | 50 D | |
| 7 | 1 | 0.6 | 6 | 10 F | 20 A | 20 B | 50 D | |
| 8 | 1 | 0.6 | 6 | 10 F | 20 A | 20 B | 50 D | |
| 9 | 1 | 0.6 | 6 | 10 F | 20 A | 20 B | 50 D | |
| 10 | 1 | 0.6 | 6 | 10 F | 20 A | 20 B | 50 D | |
| 11 | 1 | 0.6 | 6 | 10 F | 20 A | 20 B | 50 D | |
| 12 | 1 | 0.6 | 6 | 10 F | 20 A | 20 B | 50 D | |
| 13 | 1 | 0.6 | 7 | 50 D | 50 B | | | |
| 14 | 1 | 0.6 | 8 | 30B | 70 D | | | |
| 14.1 | 1 | 0.6 | 8 | 30B | 70 D | | | |
| 14.2 | 1 | 0.6 | 8 | 30B | 70 D | | | |
| 15 | 1 | 0.4 | 8 | 30B | 70 D | | | |
| 16 | 1 | 0.6 | 8 | 30B | 70 D | | | |
| 17 | 1 | 0.8 | 8 | 30B | 70 D | | | |
| 18 | 1 | 1.2 | 8 | 30B | 70 D | | | |
| 19.1 | 1 | 0.6 | 8 | 30B | 70 D | | | |
| 19.2 | 1 | 0.6 | 8 | 30B | 70 D | | | |
| 19.3 | 1 | 0.6 | 8 | 30B | 70 D | | | |
| 20 | 1 | 0.6 | 10 | 10 F | 20 A | 20 B | 25 D | 25 J |
| 21 | 1 | 0.6 | 15 | 10 F | 25 A | 25 B | 40 D | |
| 22 | 1 | 0.6 | 15 | 10 F | 25 A | 25 B | 40 D | |
| 23 | 1 | 0.6 | 16 | 20 B | 80 D | | | |
| 24 | 1 | 0.6 | 18 | 50 F | 50 E | | | |
| 25 | 1 | 0.6 | 19 | 100 E | | | | |
| 26.1* | 1 | | 13 | 100 K | | | | |
| 26.2* | 1 | 0.6 | 13 | 100 K | | | | |
| 26.3* | 1 | 1.2 | 13 | 100 K | | | | |
| 27* | 1 | | 12 | 100 H | | | | |
| 28* | 1 | | 14 | 60 B | 40 H | | | |
| 29* | 2 | | 1 | 100 B | | | | |
| 30* | 2 | | 2 | 100 A | | | | |
| 31 * | 2 | | 3 | 50 C | 50 E | | | |
| 32* | 2 | | 4 | 90 A | 10 H | | | |
| 33* | 2 | | 5 | 90 B | 10 G | | | |
| 34* | 1 | | 9 | 100 L | | | | |
| 35* | 1 | | 8 | 30B | 70 D | | | |
| 36* | 1 | 0.4 NMA | 8 | 30B | 70 D | | | |
| 37* | 1 | 0.8 NMA | 8 | 30B | 70 D | | | |
| 38 | 1 | 0.6 | 2 | 100 A | | | | |
| 39 | 1 | 0.6 | 8 | 30B | 70 D | | | |

| | | | | | | | | |
|---|---|---|---|---|---|---|---|---|
| * indicates comparative examples | | | | | | | | |

**Table 3.3. Polymerization procedure, amount of comonomer based on total used monomer, and PVOH composition used for VS- and RP-Trials described below;**

| Example | polym. proc. | wt.% comonomer | solution No | wt.% grade I | wt.% grade II | wt.% grade III | wt.% grade IV | wt.% grade V |
|---|---|---|---|---|---|---|---|---|
| VS 1* | 2 | | 1 | 100 B | | | | |
| VS 2 | 1 | 0.6 | 1 | 100 B | | | | |
| VS 3 | 1 | 0.6 | 20 | 100 D | | | | |
| VS 4 | 1 | 0.6 | 2 | 100 A | | | | |
| VS 5 | 1 | 0.6 | 2 | 100 A | | | | |
| VS 6 | 1 | 0.6 | 6 | 10 F | 20 A | 20 B | 50 D | |
| VS 7 | 1 | 0.6 | 6 | 10 F | 20 A | 20 B | 50 D | |
| VS 8 | 1 | 0.6 | 10 | 10 F | 20 A | 20 B | 25 D | 25 J |
| VS 9 | 1 | 0.6 | 15 | 10 F | 25 A | 25 B | 40 D | |
| VS 10 | 1 | 0.6 | 15 | 10 F | 25 A | 25 B | 40 D | |
| VS 11 | 1 | 0.6 | 8 | 30B | 70 D | | | |
| VS 12 | 1 | 0.6 | 8 | 30B | 70 D | | | |
| VS 13 | 1 | 0.6 | 8 | 30B | 70 D | | | |
| VS 14 | 1 | 0.6 | 8 | 30B | 70 D | | | |
| VS 15 | 1 | 0.6 | 6 | 10 F | 20 A | 20 B | 50 D | |
| VS 16 | 1 | 0.6 | 6 | 10 F | 20 A | 20 B | 50 D | |
| VS 17 | 1 | 0.6 | 6 | 10 F | 20 A | 20 B | 50 D | |
| VS 18 | 1 | 0.6 | 6 | 10 F | 20 A | 20 B | 50 D | |
| VS 19 | 1 | 0.6 | 6 | 10 F | 20 A | 20 B | 50 D | |
| VS 20 | 1 | 0.6 | 6 | 10 F | 20 A | 20 B | 50 D | |
| VS 21 | 1 | 0.6 | 8 | 30B | 70 D | | | |
| VS 22 | 1 | 0.6 | 8 | 30B | 70 D | | | |
| VS 23 | 1 | 0.6 | 8 | 30B | 70 D | | | |
| VS 24 | 1 | 0.4 | 8 | 30B | 70 D | | | |
| VS 25* | 1 | 0.4 | 8 | 30B | 70 D | | | |
| VS 26 | 1 | 0.8 | 8 | 30B | 70 D | | | |
| VS 27* | 1 | 0.8 | 8 | 30B | 70 D | | | |
| RP 1 | 1 | 0.6 | 8 | 30B | 70 D | | | |
| RP 3 | 1 | 0.6 | 8 | 30B | 70 D | | | |

| | | | | | | | | |
|---|---|---|---|---|---|---|---|---|
| * indicates comparative examples | | | | | | | | |

### 4. Examples

The following examples further illustrate the present invention, but are not intended to limit the same.

### Example 1

Polymerization procedure 1 was used. The initial reactor charge comprised 1000 grams of PVOH solution 1 and 25.69 mol% of tartaric acid based on oxidizer of feed 1 and 100 grams of vinyl acetate. The initial pH value was adjusted to 4.8 by an aqueous solution of sodium hydroxide. Additional water was added to provide 1115.5 grams of initial charge totally. Feed 1 contained 3.80 mol% of hydrogen peroxide based on initial vinyl acetate and an amount of water to give a final solids of the aqueous dispersion of 50.5 wt.%. Feed 3 consisted of 894 grams of vinyl acetate, and feed 4 contains 80 grams of water, and 20 grams of a 30 wt.% aqueous solution of acrylamide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.4.

The final aqueous dispersion was analyzed regarding solids, viscosity Bf20, shear thinning factor SF, particle size x_{3,50}, and Grit 40; results are given in Table 4.

The aqueous dispersion was formulated with 2 parts of propylene carbonate per 100 parts per weight of aqueous emulsion. The adhesive properties regarding setting speed T(2.5), water resistance D3, heat resistance WATT, and Hard Wood Adhesion HWA were determined. Results are also included in Table 4.

### Example 2

Polymerization procedure 1 was used. The initial reactor charge comprised 1000 grams of PVOH solution 2 and 20.60 mol% of ascorbic acid based on oxidizer of feed 1 and 100 grams of vinyl acetate. The initial pH value was adjusted to 3.9 by an aqueous solution of sodium hydroxide. Additional water was added to provide 1120 grams of initial charge totally. Feed 1 contained 3.80 mol% of hydrogen peroxide based on initial vinyl acetate, and feed 2 contained 11.27 mol% of ascorbic acid based on oxidizer feed 1. An amount of water was used in feeds 1 and 2 to give a final solids of the aqueous dispersion of 50.0 wt.%. Feed 3 consisted of 894 grams of vinyl acetate, and feed 4 contained 80 grams of water, and 20 grams of a 30 wt.% aqueous solution of acrylamide. The pH value, after feeds 1 and 2 were finished, was 3.8. It was adjusted to 4.8 before post polymerization by an aqueous solution of sodium hydroxide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.

The final aqueous dispersion was analyzed in the same way as for Example 1. Formulation was done in the same way as for Example 1. Adhesive properties were estimated in the same way as for Example 1. Results are given in Table 4.

This example 2 demonstrates the advantageous use of ascorbic acid as well as in initial reactor charge and in delay feed 2. The advantage can be seen additionally in VS-Trial 4 which is based on the product of this example 2.

### Example 3

Polymerization procedure 1 was used. The initial reactor charge comprised 1000 grams of PVOH solution 2 and 18.31 mol% of sodium erythorbate based on oxidizer of feed 1 and 100 grams of vinyl acetate. The initial pH value was adjusted to 3.9 by an aqueous solution of sodium hydroxide. Additional water was added to provide 1120 grams of initial charge totally. Feed 1 contained 3.80 mol% of hydrogen peroxide based on initial vinyl acetate, and feed 2 contained 10.02 mol% of sodium erythorbate based on oxidizer of feed 1. An amount of water was used in feeds 1 and 2 to give a final solids of the aqueous dispersion of 50.0 wt.%. Feed 3 consisted of 894 grams of vinyl acetate, and feed 4 contained 80 grams of water, and 20 grams of a 30 wt.% aqueous solution of acrylamide. The pH value, after feeds 1 and 2 were finished, was 4.3. It was adjusted to 4.8 before post polymerization by an aqueous solution of sodium hydroxide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.

The resulting final aqueous dispersion was analyzed in the same way as for Example 1. Formulation was done in the same way as for Example 1. Adhesive properties were estimated in the same way as for Example 1. Results are given in Table 4.

This example 3 demonstrates the advantageous use of sodium isoascorbate as well as in initial reactor charge and in delay feed 2. The advantage can be seen additionally in VS-Trial 5 which is based on the product of this example 3.

### Example 4

Polymerization procedure 1 was used. The initial reactor charge comprised 1000 grams of PVOH solution 6 and 19.34 mol% of tartaric acid based on oxidizer of feed 1 and 50 grams of vinyl acetate. The initial pH value was adjusted to 5.4 by an aqueous solution of sodium hydroxide. Additional water was added to provide 1061.4 grams of initial charge totally. Feed 1 contained 7.59 mol% of hydrogen peroxide based on initially charged vinyl acetate, and feed 2 contained 11.27 mol% of ascorbic acid based on oxidizer of feed 1. Feeds 1 and 2 further contained an amount of water to give a final solids of the aqueous dispersion of 50.5 wt.%. Feed 3 consisted of 944 grams of vinyl acetate, and feed 4 contained 65 grams of water, and 20 grams of a 30 wt.% aqueous solution of acrylamide. Feed 5 and feed 6 consisted of 4 grams aqueous solution containing 10.08 mol% of t-butyl hydroperoxide based on total hydrogen peroxide, and of 4 grams of aqueous solution containing 45.43 mol% of sodium erythorbate based on t-butyl hydroperoxide, respectively.
The final pH was 4.9.

The resulting final aqueous dispersion was analyzed in the same way as for Example 1. Formulation was done in the same way as for Example 1. Adhesive properties, besides HWA, were estimated in the same way as for Example 1. Results are given in Table 4.

### Example 5

Polymerization procedure 1 was used. Initial reactor charge comprised 1000 grams of PVOH solution 6 and 25.69 mol% of tartaric acid based on oxidizer of feed 1 and 100 grams of vinyl acetate. The initial pH value was adjusted to 5.4 by an aqueous solution of sodium hydroxide. Additional water was added to provide 1117.5 grams of initial charge totally. Feed 1 contained 3.80 mol% of hydrogen peroxide based on initial vinyl acetate and an amount of water to give a final solids of the aqueous dispersion of 50.4 wt.%. Feed 3 consisted of 894 grams of vinyl acetate, and feed 4 contained 80 grams of water, and 20 grams of a 30 wt.% aqueous solution of acrylamide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.1.

Formulation was done in the same way as for Example 1. Adhesive properties were estimated in the same way as for Example 1; additionally creep resistance was analyzed. Results are given in Table 4.

### Example 6

Polymerization procedure 1 was used. Initial reactor charge comprised 1000 grams of PVOH solution 6 and 25.69 mol% of tartaric acid based on oxidizer of feed 1 and 50 grams of vinyl acetate. The initial pH value was adjusted to 5.4 by an aqueous solution of sodium hydroxide. Additional water was added to provide 1067.5 grams of initial charge totally. Feed 1 contained 7.59 mol% of hydrogen peroxide based on initial vinyl acetate and an amount of water to give a final solids of the aqueous dispersion of 50.4 wt.%. Feed 3 consisted of 944 grams of vinyl acetate, and feed 4 contained 80 grams of water, and 20 grams of a 30 wt.% aqueous solution of acrylamide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.2.

Formulation was done in the same way as for Example 1. Adhesive properties were estimated in the same way as for Example 5. Results are given in Table 4.

### Example 7

Polymerization procedure 1 was used. The initial reactor charge comprised 1000 grams of PVOH solution 6 and 19.34 mol% of tartaric acid based on oxidizer of feed 1 and 50 grams of vinyl acetate. The initial pH value was adjusted to 5.4 by an aqueous solution of sodium hydroxide. Additional water was added to provide 1065.4 grams of initial charge totally. Feed 1 contained 7.59 mol% of hydrogen peroxide based on initially charged vinyl acetate and an amount of water to give a final solids content of the aqueous dispersion of 50.5 wt.%. Feed 3 consisted of 944 grams of vinyl acetate, and feed 4 contained 80 grams of water, and 20 grams of a 30 wt.% aqueous solution of acrylamide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.1.
The resulting final aqueous dispersion was analyzed in the same way as for Example 1. Formulation was done in the same way as for Example 1. Adhesive properties were estimated in the same way as for Example 1. Results are given in Table 4.

### Example 8

Same as Example 7, but initial pH was adjusted to 4. Final pH was 4.9.

The resulting final aqueous dispersion was analyzed in the same way as for Example 1. Formulation was done in the same way as for Example 1. Adhesive properties, besides HWA, were estimated in the same way as for Example 1. Results are given in Table 4.

### Example 9

Same as Example 7, but initial pH was adjusted to 3.5. The final pH was 3.9 and was adjusted to 5.3.

The resulting final aqueous dispersion was analyzed in the same way as for Example 8. Formulation was done in the same way as for Example 8. Adhesive properties were estimated in the same way as for Example 1. Results are given in Table 4.

### Example 10

Polymerization procedure 1 was used. Initial reactor charge comprised 1000 grams of PVOH solution 6 and 19.34 mol% of tartaric acid based on oxidizer of feed 1 and 50 grams of vinyl acetate. The initial pH value was adjusted to 4.0 by an aqueous solution of sodium hydroxide. Additional water was added to provide 1089.4 grams of initial charge totally. Feed 1 contained 7.59 mol% of hydrogen peroxide based on initial vinyl acetate and an amount of water to give a final solids content of the aqueous dispersion of 48.1 wt.%. Feed 3 consisted of 1043.4 grams of vinyl acetate, and feed 4 contained 78 grams of water, and 22 grams of a 30 wt.% aqueous solution of acrylamide. After feed 1 was complete, 312 grams of PVOH solution 11, which in this case had a solids content of 11 wt.% was added, followed by feeds 5 and 6 which consisted of 4 grams aqueous solution containing 10.08 mol% of t-butyl hydroperoxide based on total hydrogen peroxide, and of 4 grams of aqueous solution containing 45.43 mol% of sodium erythorbate based on t-butyl hydroperoxide, respectively.
The final pH was adjusted to 5.3.
The resulting final aqueous dispersion was analyzed in the same way as for Example 1. Formulation was done in the same way as for Example 1. Adhesive properties, besides HWA, were estimated in the same way as for Example 1. Results are given in Table 4.

### Example 11

Polymerization procedure 1 was used. The initial reactor charge comprised 1000 grams of PVOH solution 6 and 17.12 mol% of tartaric acid based on oxidizer of feed 1 and 50 grams of vinyl acetate. The initial pH value was adjusted to 5.4 by an aqueous solution of sodium hydroxide. Additional water was added to provide 1067.5 grams of initial charge totally. Feed 1 contained 11.39 mol% of hydrogen peroxide based on initial vinyl acetate and an amount of water to give a final solids content of the aqueous dispersion of 50.5 wt.%. Feed 3 consisted of 944 grams of vinyl acetate, and feed 4 contained 80 grams of water, and 20 grams of a 30 wt.% aqueous solution of acrylamide. Feed 5 and feed 6 consisted of 2 grams aqueous solution containing 3.36 mol% of t-butyl hydroperoxide based on total hydrogen peroxide, and of 2 grams of aqueous solution containing 45.43 mol% of sodium erythorbate based on t-butyl hydroperoxide, respectively. The final pH was adjusted to 5.3.
Formulation was done in the same way as for Example 1. Adhesive properties were estimated in the same way as for Example 1. Results are given in Table 4.

### Example 12

Polymerization procedure 1 was used. Initial reactor charge comprised 1000 grams of PVOH solution 6 and 12.84 mol% of tartaric acid based on oxidizer of feed 1 and 50 grams of vinyl acetate. The initial pH value was adjusted to 5.4 by an aqueous solution of sodium hydroxide. Additional water was added to provide 1067.5 grams of initial charge totally. Feed 1 contained 15.19 mol% of hydrogen peroxide based on initial vinyl acetate and an amount of water to give a final solids of the aqueous dispersion of 50.5 wt.%. Feed 3 consisted of 944 grams of vinyl acetate, and feed 4 contained 80 grams of water, and 20 grams of a 30 wt.% aqueous solution of acrylamide. Feed 5 and feed 6 consisted of 2 grams aqueous solution containing 2.52 mol% of t-butyl hydroperoxide based on total hydrogen peroxide, and of 2 grams of aqueous solution containing 45.43 mol% of sodium erythorbate based on t-butyl hydroperoxide, respectively.
The final pH was 4.9.

Formulation was done in the same way as for Example 1. Adhesive properties were estimated in the same way as for Example 5. Results are given in Table 4.

### Example 13

Polymerization procedure 1 was used. The initial reactor charge comprised 1000 grams of PVOH solution 7 and 25.69 mol% of tartaric acid based on oxidizer of feed 1 and 100 grams of vinyl acetate. The initial pH value was adjusted to 4.1 by an aqueous solution of sodium hydroxide. Additional water was added to provide 1113.5 grams of initial charge totally. Feed 1 contained 3.8 mol% of hydrogen peroxide based on initial vinyl acetate and an amount of water to give a final solids content of the aqueous dispersion of 52.5 wt.%. Feed 3 consisted of 983 grams of vinyl acetate, and feed 4 contained 78 grams of water, and 22 grams of a 30 wt.% aqueous solution of acrylamide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.3.
The resulting final aqueous dispersion was analyzed in the same way as for Example 1. Formulation was done in the same way as for Example 1. Adhesive properties were estimated in the same way as for Example 1. Results are given in Table 4.

### Example 14

Polymerization procedure 1 was used. The initial reactor charge comprised 1000 grams of PVOH solution 8 and 25.69 mol% of tartaric acid based on oxidizer of feed 1 and 100 grams of vinyl acetate. The initial pH value was adjusted to 4.6 by an aqueous solution of sodium hydroxide. Additional water was added to provide 1115.5 grams of initial charge totally. Feed 1 contained 3.8 mol% of hydrogen peroxide based on initial vinyl acetate and an amount of water to give a final solids of the aqueous dispersion of 50.5 wt.%. Feed 3 consisted of 894 grams of vinyl acetate, and feed 4 contained 80 grams of water, and 20 grams of a 30 wt.% aqueous solution of acrylamide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.4.

This Example was repeated 5 times. Each of the resulting final aqueous dispersions was analyzed in the same way as for Example 1. Formulation was done in the same way as for Example 1. Adhesive properties were estimated in the same way as for Example 5. Results are given in Table 4 as average data of the 6 batches.

### Example 14.1

The product of Example 14, first run, was tested regarding its adhesive properties without any further formulation. Results for setting speed T(2.5), water resistance D3, and heat resistance WATT are given in Table 4.

This example clearly demonstrates that in the absence of a coalescing agent the heat resistance is significantly higher (compare with Example 14), which is caused by the higher Tg or the higher minimum film formation temperature MFT which in this example is about 12 °C. Such MFT is still acceptable under certain gluing conditions.

### Example 14.2

The product of Example 14, second run, was formulated with 2 parts of propylene carbonate, and with 15 parts of PVOH solution 11, each per 100 parts per weight of aqueous emulsion of Example 14, run 2. The adhesive properties regarding setting speed T(2.5), water resistance D3 and heat resistance WATT were determined. The results are also included in Table 4.

This Example demonstrates - when compared to Example 14 - that due to the formulation of the aqueous dispersion with additional post added fully hydrolyzed PVOH the heat resistance is improved without loosing significant water resistance.

### Example 15

Polymerization procedure 1 was used. The initial reactor charge comprised 1000 grams of PVOH solution 8 and 25.69 mol% of tartaric acid based on oxidizer of feed 1 and 100 grams of vinyl acetate. The initial pH value was adjusted to 4.8 by an aqueous solution of sodium hydroxide. Additional water was added to provide 1115.5 grams of initial charge totally. Feed 1 contained 3.8 mol% of hydrogen peroxide based on initial vinyl acetate. An amount of water was used in feed 1 to give a final solids content of the aqueous dispersion of 50.4 wt.%. Feed 3 consisted of 894 grams of vinyl acetate, and feed 4 contained 86.7 grams of water, and 13.3 grams of a 30 wt.% aqueous solution of acrylamide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH is 5.2.
The resulting final aqueous dispersion was analyzed in the same way as for Example 1. Formulation was done in the same way as for Example 1. Adhesive properties were estimated in the same way as for Example 5. Results are given in Table 4.

### Example 16

Same as Example 15, but feed 4 comprised 80 grams of water and 20 grams of a 30 wt.% aqueous solution of acrylamide. The final pH was 5.2. Besides a small difference regarding initial pH value, this Example 16 was a reproduction of Example 14.
The resulting final aqueous dispersion was analyzed in the same way as for Example 1. Formulation was done in the same way as for Example 1. Adhesive properties were estimated in the same way as for Example 5. Results are given in Table 4.

### Example 17

Same as Example 15, but feed 4 comprised 73.4 grams of water and 26.6 grams of a 30 wt.% aqueous solution of acrylamide. The final pH was 5.2.
The resulting final aqueous dispersion was analyzed in the same way as for Example 1. Formulation was done in the same way as for Example 1. Adhesive properties were estimated in the same way as for Example 5. Results are given in Table 4.

### Example 18

Same as Example 15, but feed 4 comprised 60 grams of water and 40 grams of a 30 wt.% aqueous solution of acrylamide. The final pH was 5.2.
The resulting final aqueous dispersion was analyzed in the same way as for Example 1. Formulation was done in the same way as for Example 1. Adhesive properties were estimated in the same way as for Example 5. Results are given in Table 4.

### Examples 19.1; 19.2; and 19.3

The product of Example 39 below (PVOH solution 8 was applied in polymerization) was used for the following formulations.

For Example 19.1 an adhesive blend of 100 parts per weight of aqueous emulsion of Example 39, of 12.5 parts of PVOH solution 11 and of 2 parts of propylene carbonate was prepared.

For Example 19.2 an adhesive blend of 100 parts per weight of aqueous emulsion of Example 39 of 2.25 parts of urea and of 2 parts of propylene carbonate was prepared.
For Example 19.3 an adhesive blend of 100 parts per weight of aqueous emulsion of Example 39, of 12.5 parts of PVOH solution 11, of 2.25 parts of urea and of 2 parts of propylene carbonate was prepared.

The resulting final products were analyzed in the same way as for Example 1. Adhesive properties, besides HWA, were estimated in the same way as for Example 1. Results are given in Table 4.

### Example 20

Polymerization procedure 1 was used. The initial reactor charge comprised 1000 grams of PVOH solution 10 and 19.34 mol% of tartaric acid based on oxidizer of feed 1 and 50 grams of vinyl acetate. The initial pH value was adjusted to 4.0 by an aqueous solution of sodium hydroxide. Additional water was added to provide 1089.4 grams of initial charge totally. Feed 1 contained 7.59 mol% of hydrogen peroxide based on initial vinyl acetate and an amount of water to give a final solids content of the aqueous dispersion of 48.1 wt.%. Feed 3 consisted of 1043.4 grams of vinyl acetate, and feed 4 contained 78 grams of water, and 22 grams of a 30 wt.% aqueous solution of acrylamide. After feed 1 was complete, 312 grams of PVOH solution 11 which in this case had a solids content of 11 wt.% was added, followed by feeds 5 and 6 which consisted of 4 grams aqueous solution containing 10.08 mol% of t-butyl hydroperoxide based on total hydrogen peroxide, and of 4 grams of aqueous solution containing 45.43 mol% of sodium erythorbate based on t-butyl hydroperoxide, respectively.
The final pH was adjusted to 5.4.
The resulting final aqueous dispersion was analyzed in the same way as for Example 1. Formulation was done in the same way as for Example 1. Adhesive properties, in addition to HWA, were estimated in the same way as for Example 5. Results are given in Table 4.

### Example 21

Polymerization procedure 1 was used. The initial reactor charge comprised 1000 grams of PVOH solution 15 and 19.34 mol% of tartaric acid based on oxidizer of feed 1 and 50 grams of vinyl acetate. The initial pH value was adjusted to 4.0 by an aqueous solution of sodium hydroxide. Additional water was added to provide 1091.5 grams of initial charge totally. Feed 1 contained 7.59 mol% of hydrogen peroxide based on initially charged vinyl acetate, and feed 2 contained 10.94 mol% of ascorbic acid based on oxidizer of feed 1. Feeds 1 and 2 further contained an amount of water to give a final solids of the aqueous dispersion of 47.7 wt.%. Feed 3 consisted of 1043.4 grams of vinyl acetate, and feed 4 contained 60.4 grams of water, 6.6 grams of surfactant within 17.6 grams of added aqueous surfactant solution, and 22 grams of a 30 wt.% aqueous solution of acrylamide. After feed 1 was completed, 312 grams of PVOH solution 11, which in this case had a solids content of 11 wt.%, was added followed by feeds 5 and 6 which consisted of 4 grams aqueous solution containing 10.08 mol% of t-butyl hydroperoxide based on total hydrogen peroxide, and of 4 grams of aqueous solution containing 45.43 mol% of sodium erythorbate based on t-butyl hydroperoxide, respectively.
The final pH was adjusted to 5.3.
The resulting final aqueous dispersion was analyzed in the same way as for Example 1. Formulation was done in the same way as for Example 1. Adhesive properties, besides HWA, were estimated in the same way as for Example 1. Results are given in Table 4. This example 21 demonstrates the combined use of tartaric acid in initial reactor charge and of ascorbic acid delay in feed 1, additionally about 0.6 wt.% of surfactant based on total monomer was used and high molecular weight fully hydrolyzed PVOH was post added as PVOH (e). Product of this example 21 was used for VS-Trial 9.

### Example 22

100 parts per weight of aqueous dispersion resulting in Example 21 were formulated with 2 parts of urea and 2 parts of propylene carbonate. The resulting final aqueous dispersion was analyzed in the same way as for Example 1. Adhesive properties, besides HWA, were estimated in the same way as for Example 1. Results are given in Table 4. Product of this example 22 demonstrating the advantageously use of urea was used for VS-Trial 10. Example 22, due to the use of urea, provides significantly higher heat resistance than example 21, (Table 4).

### Example 23

Polymerization procedure 1 was used. The initial reactor charge comprised 1000 grams of PVOH solution 16 and 25.69 mol% of tartaric acid based on oxidizer of feed 1 and 100 grams of vinyl acetate. The initial pH value was adjusted to 4.1 by an aqueous solution of sodium hydroxide. Additional water was added to provide 1113.5 g of initial charge totally. Feed 1 contained 3.8 mol% of hydrogen peroxide based on initial vinyl acetate and an amount of water to give a final solids content of the aqueous dispersion of 50.5 wt.%. Feed 3 consisted of 894 grams of vinyl acetate, and feed 4 contained 80 grams of water, and 20 grams of a 30 wt.% aqueous solution of acrylamide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.5.
The resulting final aqueous dispersion was analyzed in the same way as for Example 1. The aqueous dispersion was formulated with 1 part of propylene carbonate per 100 parts per weight of aqueous emulsion. Adhesive properties, besides HWA, were estimated in the same way as for Example 1. Results are given in Table 4.

### Example 24

Polymerization procedure 1 was used. The initial reactor charge comprised 1000 grams of PVOH solution 18 and 25.69 mol% of tartaric acid based on oxidizer of feed 1 and 50 grams of vinyl acetate. The initial pH value was adjusted to 4.0 by an aqueous solution of sodium hydroxide. Additional water was added to provide 1062.5 grams of initial charge totally. Feed 1 contained 7.59 mol% of hydrogen peroxide based on initial vinyl acetate and an amount of water to give a final solids content of the aqueous dispersion of 51.1 wt.%. Feed 3 consisted of 944 grams of vinyl acetate, and feed 4 contained 80 grams of water, and 20 grams of a 30 wt.% aqueous solution of acrylamide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.4.
The resulting final aqueous dispersion was analyzed in the same way as for Example 1. Formulation was done in the same way as for Example 23. Adhesive properties, in addition to HWA, were estimated in the same way as for Example 5. Results are given in Table 4.
This example 24 surprisingly demonstrates for the first time that D3 performance according to EN204/205 can be achieved using only fully hydrolyzed S-PVOH.

### Example 25

Same as Example 24 but PVOH solution 19 and an amount of water were used within feed 1 to give a final solids content of 51.4 wt.%.

The resulting final aqueous dispersion was analyzed in the same way as for Example 1. Formulation was done in the same way as for Example 23. Adhesive properties, in addition to HWA, were estimated in the same way as for Example 5. Results are given in Table 4.

This example 25 surprisingly demonstrates (like example 24) that D3 performance according to EN204/205 can be achieved using only fully hydrolyzed S-PVOH.

All examples 1 to 25 demonstrate that when using fully hydrolyzed S-PVOH and E-PVOH, alone or within different blends, within the inventive polymerization procedure 1 including acrylic acid amide as a comonomer water resistance class D3 according to DIN EN204/205, i.e. D3/3 ≥ 2 N/mm², and heat resistance in terms of WATT 91 of ≥ 6 N/mm² can be achieved, simultaneously. Additionally fast setting speed is provided. Further the demands regarding targeting values for solids content and viscosity, shear thinning factor, particle size and grit content are fulfilled. Sufficient Hard Wood Adhesion and excellent creep resistance can be also achieved.

It must be highlighted that it is demonstrated with examples 24 and 25 for the first time that water resistance above 2 N/mm² can be achieved only using fully hydrolyzed S-PVOH.

The improved heat resistance is a result of using desired amount of acrylic acid amide as a comonomer and of applying inventive polymerization procedure 1, keeping the amounts of oxidizing and reducing agents within the desired limits, without applying any initial oxidizer shot. Additionally the use of urea surprisingly further improves heat resistance.

### Examples 26 (comparative)

For Example 26.1 polymerization procedure 1 was used. The initial reactor charge comprised 1000 grams of PVOH solution 13 which comprised only partially hydrolyzed PVOH and 25.69 mol% of tartaric acid based on oxidizer of feed 1 and 100 grams of vinyl acetate. The initial pH value was adjusted to 4.8 by an aqueous solution of sodium hydroxide. Additional water was added to provide 1115.5 grams of initial charge totally. Feed 1 contained 3.80 mol% of hydrogen peroxide based on initial vinyl acetate and an amount of water to give a final solids content of the aqueous dispersion of 50.2 wt.%. Feed 3 consisted of 894 grams of vinyl acetate, and feed 4 contained 100 grams of water. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.2.
The resulting final aqueous dispersion was analyzed regarding solids, viscosity Bf20, shear thinning factor SF, particle size x_{3,50}, and Grit 40; results are given in Table 5.
The aqueous dispersion was formulated with 2 parts of propylene carbonate per 100 parts per weight of aqueous emulsion. The adhesive properties regarding setting speed T(2.5), water resistance D3, and heat resistance WATT were estimated. Results are also included in Table 5.

Additionally dry bond strength at ambient temperature and in standard atmosphere was tested according to DIN EN 204/205, given as D1 value in Table 5.

For Example 26.2 the same procedure was used as for Example 26.1 with the only difference that feed 4 contained 80 grams of water and 20 grams of a 30 wt.% aqueous solution of acrylamide.
The same analytical test were made as for Example 26.1.

For Example 26.3 the same procedure was used as for Example 26.1 with the only difference that feed 4 contained 60 grams of water and 40 grams of a 30 wt.% aqueous solution of acrylamide.
The same analytical tests were made as for Example 26.1.

The results of standardized dry bond strength D1 given in Table 5 disprove the statement of the prior art according to US 4,219,455 that the use of an amide containing functional monomer would improve dry bond strength. Another statement of the prior art according to US 4,339,552 regarding an improvement of water resistance by using amide containing functional monomers is also disproved: All three products obtained from Examples 26.1; 26.2; and 26.3 do not show any water resistance at all according to the D3/3 test of DIN EN204/205; glued wood species fall apart during the water storage. Thus, the use of only partially hydrolyzed PVOH in combination with amide containing functional monomers does not provide the required water resistance. Moreover, heat resistance WATT is below 6 N/mm² which is likewise below the required performance although polymerization procedure 2, avoiding any initial oxidizer shot, was used.. If polymerization procedure 1 is applied, then heat resistance is even lower, which is demonstrated by comparative examples 29 to 33. In addition, the shear thinning factor of these Examples 26.1, 26.2, and 26.3 is much too high.

### Example 27 (comparative)

The same as Example 26.1, but PVOH solution 12 was used comprising higher molecular weight partially hydrolyzed PVOH compared to Examples 26. The same analytical tests, (omitting the D1 test), were made as for Examples 26. The results are given in Table 5.

The results demonstrate that again no water resistance is observed according to the D3/3 value. The product viscosity is too high and will become completely unacceptably high in case additional acrylic acid amide monomers are used.

### Example 28 (comparative)

Same as Example 26.1, but PVOH solution 14 comprising a blend of partially hydrolyzed S-PVOH and of fully hydrolyzed E-PVOH. The same analytical tests were made as for Examples 27. Results are given in Table 5.

The results demonstrate that particle size and especially grit content are outside the limits and heat resistance is below 6 N/mm². Again heat resistance does not reach the limit of 6 N/mm², although polymerization procedure 1 was used.

### Example 29 (comparative)

Polymerization procedure 2 was used. The initial reactor charge comprised 79 grams of water, 941.5 grams of PVOH solution 1 comprising only fully hydrolyzed E-PVOH, 1.5 grams of sodium acetate, 56.66 mol% of tartaric acid and 85.94 mol% of hydrogen peroxide added as shot, both based on oxidizer of feed 1, and 94 grams of vinyl acetate. Additional water was added to provide an amount of 1135 grams of total initial reactor charge. Feed 1 consisted of 1.72 mol% of hydrogen peroxide based on total vinyl acetate. Feed 2 consisted of 56.66 mol% of tartaric acid based on oxidizer in feed 1. Feeds 1 and 2 contained an amount of water to give a final solids of the aqueous dispersion of 50.7 wt.%.

Feed 3 consisted of 847 grams of vinyl acetate. The final pH was 3.7; it was adjusted to 5 by an 10 wt.% aqueous solution of sodium hydroxide.

The resulting final aqueous dispersion was analyzed regarding solids, viscosity Bf20, shear thinning factor SF, viscosity stability RT score, particle size X_{3,50}, and Grit 40; results are given in Table 5.

The aqueous dispersion was formulated with 2 parts of propylene carbonate per 100 parts per weight of aqueous emulsion. The adhesive properties regarding setting speed T(2.5), water resistance D3 and heat resistance WATT were determined. Results are also included in Table 5.

This Example 29 demonstrates according to prior art, that water resistance according to class D3/3 can be achieved by using PVOH solution 1 in the absence of acrylic acid amide monomer, but both, setting speed and heat resistance, were much too low.

### Example 30 (comparative)

Same as Example 29, but PVOH solution 2 comprising another fully hydrolyzed E-PVOH was applied in initial reactor charge.

The final aqueous dispersion was analyzed in the same way as for Example 29. Formulation was done in the same way as for Example 29. Adhesive properties were estimated in the same way as for Example 29. Results are given in Table 5.

This Example 30 demonstrates in line with and following the prior art, that water resistance class D3 is achieved by using PVOH solution 2 in the absence of acrylic acid amide monomer, but particle size is too large, and both, setting speed and heat resistance, are insufficiently low.

### Example 31 (comparative)

Same as Example 29 but PVOH solution 3 was applied in the initial reactor charge and no feed 2 tartaric acid shot was used.

The resulting final aqueous dispersion was analyzed in the same way as for Example 29. Formulation was done in the same way as for Example 29. Adhesive properties were estimated in the same way as for Example 29. Results are given in Table 5.

This Example 31 demonstrates that water resistance class D3 is achieved by using PVOH solution 3 comprising only fully hydrolyzed PVOH in the absence of acrylic acid amide monomer, but grit content is much too high and heat resistance is much too low.

### Example 32 (comparative)

Polymerization procedure 2 was used. The initial reactor charge comprised 268 grams of water, 706 grams of PVOH solution 4 comprising a blend of partially hydrolyzed S-PVOH and of fully hydrolyzed E-PVOH, 1.5 grams of sodium acetate, 56.66 mol% of tartaric acid and 85.94 mol% of hydrogen peroxide were added as a shot, both based on oxidizer of feed 1, and 94 grams of vinyl acetate. Additional water was added to provide an amount of 1088.5 grams of total initial reactor charge. Feed 1 consisted of 1.72 mol% of hydrogen peroxide based on initial vinyl acetate. Feed 2 consisted of 56.66 mol% of tartaric acid based on oxidizer in feed 1. Feeds 1 and 2 contained an amount of water to give a final solids content of the aqueous dispersion of 50.7 wt.%.
Feed 3 consisted of 847 grams of vinyl acetate. The final pH was 3.8. It was adjusted to 5 by a 10 wt.% aqueous solution of sodium hydroxide.
The resulting final aqueous dispersion was analyzed in the same way as for Example 29. Formulation was done in the same way as for Example 29. Adhesive properties were estimated in the same way as for Example 29. Results are given in Table 5.

This Example 32 demonstrates in line with and following the prior art, that water resistance D3 is achieved by using PVOH solution 4, but particle size is too large, grit content is too high, and both, setting speed and heat resistance, are too low.

### Example 33 (comparative)

Polymerization procedure 2 was used. Initial reactor charge comprised 222 grams of water, 730 grams of PVOH solution 5 comprising a blend of partially hydrolyzed S-PVOH and of fully hydrolyzed E-PVOH, 1.5 grams of sodium acetate, 70.05 mol% of tartaric acid and 100.0 mol% of hydrogen peroxide added as shot, both based on oxidizer of feed 1, and 86 grams of vinyl acetate. Additional water was added to provide an amount of 1059 grams of total initial reactor charge. Feed 1 contained 1.62 mol% of hydrogen peroxide based on initial vinyl acetate. Feed 2 contained 70.05 mol% of tartaric acid based on oxidizer of feed 1. Feeds 1 and 2 contained an amount of water to give a final solids content of the aqueous dispersion of 50 wt.%. Feed 3 consisted of 876 grams of vinyl acetate.
The final pH was 4.2; it was adjusted to 5 by an 10 wt.% aqueous solution of sodium hydroxide.
The resulting final aqueous dispersion was analyzed in the same way as for Example 29. Formulation was done in the same way as for Example 29. Adhesive properties were estimated in the same way as for Example 29. Results are given in Table 5.

This Example 33 demonstrates in line with and following the prior art, that water resistance D3 is achieved by using PVOH solution 4, but particle size is too large, grit content is too high, and both, setting speed and heat resistance are much too low.

### Example 34 (comparative)

Polymerization procedure 1 was used with following modifications: Feeds 1 and 2 were started at 55 °C; feeds 3 and 4 were started when temperature reached 68 °C; and further on the temperature was kept between 70 and 75 °C.. The initial reactor charge comprised 718.8 grams of PVOH solution 9 and 232.5 grams of vinyl acetate. The initial pH value was adjusted to 3.8 by an aqueous solution of formic acid. Additional water was added to provide 1081.7 g of initial charge totally. Before starting feeds 1 and 2, 1 gram of a 1 wt.% aqueous solution of ferrous ammonium sulfate was added to initial reactor charge. Feed 1 contained 0.18 mol% of hydrogen peroxide based on initial vinyl acetate, and feed 2 contained 45.3 mol% of tartaric acid based on hydrogen peroxide of feed 1. Feeds 1 and 2 additionally contained an amount of water to give a final solids content of the aqueous dispersion of 53.6 wt.%. Feed 3 consisted of 694 grams of vinyl acetate, and feed 4 contained 45 grams of water. Feed 5 and feed 6 consisted of 2 grams aqueous solution containing 45.13 mol% of t-butyl hydroperoxide based on total hydrogen peroxide, and of 2 grams of aqueous solution containing 58.4 mol% of sodium formaldehyde sulfoxylate based on t-butyl hydroperoxide, respectively.
The final pH was adjusted to 5.
The resulting final aqueous dispersion was analyzed in the same way as for Example 29. Formulation was done in the same way as for Example 29. Adhesive properties were estimated in the same way as for Example 26. Results are given in Table 5.

This example demonstrates, that the use of intermediately hydrolyzed E-PVOH with a degree of hydrolysis of about 93 mol% does not provide sufficient water and heat resistance, additionally setting speed is too low.

### Example 35 (comparative)

Polymerization procedure 1 was used. The initial reactor charge comprised 1000 grams of PVOH solution 8 and 25.69 mol% of tartaric acid based on oxidizer of feed 1 and 100 grams of vinyl acetate. The initial pH value was adjusted to 4.8 by an aqueous solution of sodium hydroxide. Additional water was added to provide 1115.5 g of initial charge totally. Feed 1 contained 3.8 mol% of hydrogen peroxide based on initial vinyl acetate. An amount of water was used in feed 1 to give a final solids content of the aqueous dispersion of 50.2 wt.%. Feed 3 consisted of 894 grams of vinyl acetate, and feed 4 contained 100 grams of water. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.
The resulting final aqueous dispersion was analyzed in the same way as for Example 29. Formulation was done in the same way as for Example 29. Adhesive properties were estimated in the same way as for Example 29. Results are given in Table 5.

The obtained aqueous dispersion prepared without acrylic acid amide monomer is low in viscosity and does not provide optimal heat resistance in terms of WATT, although in some respects beneficial properties are achieved. It has to be noted, however, that the process employed, i.e. procedure 1 is novel and has been developed in the course of the present invention. Thus, example 35, likewise does not form part of the prior art.

### Example 36 (comparative)

Polymerization procedure 1 was used. The initial reactor charge comprised 1000 grams of PVOH solution 8 and 25.69 mol% of tartaric acid based on oxidizer of feed 1 and 100 grams of vinyl acetate. The initial pH value was adjusted to 4.8 by an aqueous solution of sodium hydroxide. Additional water was added to provide 1115.5 grams of initial charge totally. Feed 1 contained 3.80 mol% of hydrogen peroxide based on initial vinyl acetate and an amount of water to give a final solids of the aqueous dispersion of 50.4 wt.%. Feed 3 consisted of 894 grams of vinyl acetate, and feed 4 contained 80 grams of water, and 20 grams of a 30 wt.% aqueous solution of N-methylol acrylamide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.4.
The resulting final aqueous dispersion was analyzed in the same way as for Example 29. Formulation was done in the same way as for Example 29. Adhesive properties were estimated in the same way as for Example 29. Results are given in Table 5.

This comparative Example 36 is similar to inventive Example 15, but N-methylol acrylamide is used instead of acrylamide. Thereby the dispersion looses the advantage of a formaldehyde and acid-free product. Moreover, product of this Example 36 shows a disadvantage regarding viscosity stability compared to inventive Example 15 as shown with VS-Trial 26 below.

### Example 37 (comparative)

Same as Example 36, but feed 4 contained 83.4 grams of water, and 16.6 grams of a 48 wt.% aqueous solution of N-methylol acrylamide.
The final solids content was 50.6 wt.%, and the final pH was 5.3.
The final aqueous dispersion was analyzed in the same way as for Example 29. Formulation was done in the same way as for Example 29. Adhesive properties were estimated in the same way as for Example 29. Results are given in Table 5.

This comparative Example 37 is similar to inventive Example 17, but N-methylol acrylamide is used instead of acrylamide. Thereby the advantage of a formaldehyde free product is lost. Shear thinning factor and heat resistance of Example 37 are outside of the desired limits. Moreover, the product of this Example 37 shows a disadvantage regarding viscosity stability compared to inventive Example 17 as it will be shown below with VS-Trials 27 and 28.

### Example 38

Polymerization procedure 1 was used. The initial reactor charge comprised 1000 grams of PVOH solution 2 and 25.69 mol% of tartaric acid based on oxidizer of feed 1 and 100 grams of vinyl acetate. The initial pH value was adjusted to 3.0 by an aqueous solution of sodium hydroxide. Additional water was added to provide 1100.5 grams of initial charge totally. Feed 1 contained 3.80 mol% of hydrogen peroxide based on initial vinyl acetate and an amount of water to give a final solids content of the aqueous dispersion of 50.5 wt.%. Feed 3 consisted of 894 grams of vinyl acetate, and feed 4 contained 80 grams of water, and 20 grams of a 30 wt.% aqueous solution of acrylamide. Feed 5 and feed 6 consisted of 2 grams aqueous solution containing 5.04 mol% of t-butyl hydroperoxide based on total hydrogen peroxide, and of 2 grams of aqueous solution containing 45.43 mol% of sodium erythorbate based on t-butyl hydroperoxide, respectively.
The final pH was 5.1.
The resulting final aqueous dispersion was analyzed in the same way as for Example 29. Formulation was done in the same way as for Example 29. Adhesive properties were estimated in the same way as for Example 29. Results are given in Table 5.

This Example 38 demonstrates good adhesive properties in terms of water resistance D3, and improved heat resistance WATT as compared to comparable compositions obtained without a comonomer (e.g. examples 29 to 30, and 40.2). WATT does not achieve the limit of 6 N/mm² for this example due to lower pH value of initial reactor charge.

### Example 39

Polymerization procedure 1 was used. The initial reactor charge comprised 91 grams of water; 909 grams of PVOH solution 8 which had a solids content of 11 wt.% and 205.48 mol% of tartaric acid based on oxidizer of feed 1 and 100 grams of vinyl acetate. The initial pH value was adjusted to 4.8 by an aqueous solution of sodium hydroxide. Additional water was added to provide 1114.5 grams of initial charge totally. Feed 1 contained 0.47 mol% of hydrogen peroxide based on initial vinyl acetate and an amount of water to give a final solids of the aqueous dispersion of 51.1 wt.%. Feed 3 consisted of 894 grams of vinyl acetate, and feed 4 contained 50.5 grams of water, and 20 grams of a 30 wt.% aqueous solution of acrylamide. Feed 5 and feed 6 consisted of 2 grams aqueous solution containing 40.31 mol% of t-butyl hydroperoxide based on total hydrogen peroxide, and of 2 grams of aqueous solution containing 45.43 mol% of sodium erythorbate based on t-butyl hydroperoxide, respectively.
The final pH was 4.8.
The resulting final aqueous dispersion was analyzed in the same way as for Example 29. Formulation was done in the same way as for Example 29. Adhesive properties were estimated in the same way as for Example 29. Results are given in Table 5.

This Example 39 prepared with reduced amount of hydrogen peroxide oxidizer within feed 1 demonstrates good adhesive properties in terms of water resistance D3, and improved heat resistance WATT as compared to comparable compositions obtained without a comonomer (e.g. examples 29 to 33, and 40.2). A product of this example was used for preparation of adhesive formulations of Examples 19.1, 19.2 and 19.3.

### Examples 40 (comparative)

Commercial products VINAC® DPN15 for Example 40.1 (D3-wood glue comprising AlCl₃ and NMA momomers, by Air Products Polymers), FOLCO®-LTT D3 TC for Example 40.2 (by Follmann, corresponding to EP 1 493 793 B1), and VINAC® DP500 for Example 40.3 (vinylacetate homopolymer dispersion based on partially hydrolyzed PVOH, by Air Products Polymers) were tested regarding their adhesive properties: setting speed T(2.5), water resistance D3 and heat resistance WATT were estimated. The results are given in Table 5.

Additionally, the discoloration of different wood species coated with a 250 µm thin glue layer was evaluated after 4 week storage under natural light.
In addition to the samples of Examples 40.1, 40.2 and 40.3 all formulated adhesive products of inventive Examples 1 to 25 were also evaluated.

Example 40.1, known for its acidic character, showed significant discoloration especially for beech, pine, cherry, maple, and birch, whereas for all other products the color was very much comparable to Example 40.3, which is known as a typical vinyl acetate homopolymer product of water resistance class D2, according to DIN EN 204/205, not causing discoloration of wood.

### 6. Examples Related to Viscosity Stability

Most of the Viscosity Stability Trials - except for VS-Trial No's 3, 17 to 20, 22, and 23 - were based on above given Examples or Comparative Examples.

Results of all VS-Trials 1 to 27 are given in Table 6 together with additional information on polymerization conditions.

Aqueous dispersions used for Viscosity Stability Trial No's 3, 17 to 20, 22, and 23 were produced as follows:

### VS-Trial No. 3

Same as Example 7 but PVOH solution 20 was used within initial reactor charge. Final solids is 50.5% and final pH is 4.8.

### VS-Trial No. 17

Same as Example 11 but 25.69 mol% of tartaric acid based on oxidizer in feed 1 was used within initial charge, and feed 1 contained 7.59 mol% of hydrogen peroxide based on initial vinyl acetate, and feed 5 contained 5.04 mol% of t-butyl hydroperoxide based on total hydrogen peroxide. Final solids is 50.3 wt.%, and final pH is adjusted to 5.3.

### VS-Trial No. 18

Same as Example 11 but 51.37 mol% of tartaric acid based on oxidizer in feed 1 was used within initial charge, and feed 1 contained 7.59 mol% of hydrogen peroxide based on initial vinyl acetate, and feed 5 contained 5.04 mol% of t-butyl hydroperoxide based on total hydrogen peroxide. The final solids content was 50.4 wt.%, and final pH was adjusted to 5.3.

### VS-Trial No. 19

Same as Example 11 but 51.37 mol% of tartaric acid based on oxidizer in feed 1 was used within initial charge, and feed 1 contained 3.80 mol% of hydrogen peroxide based on initial vinyl acetate, and feed 5 contained 10.08 mol% of t-butyl hydroperoxide based on total hydrogen peroxide. The final solids content was 50.5 wt.%, and the final pH was adjusted to 5.3.

### VS-Trial No. 20

Same as Example 11 but 102.74 mol% of tartaric acid based on oxidizer in feed 1 was used within initial charge, and feed 1 contained 1.90 mol% of hydrogen peroxide based on initial vinyl acetate, and feed 5 contains 20.16 mol% of t-butyl hydroperoxide based on total hydrogen peroxide. Final solids is 50.5 wt.%, and final pH was adjusted to 5.3.

### VS-Trial No. 22

Same as Example 14, but the initial pH was adjusted to pH of 3.6. Final solids content was 50.5 wt.%. The final pH was adjusted to 5.4.

### VS-Trial No. 23

Same as Example 14, but the initial pH was adjusted to pH of 3.2. Final solids is 50.5 wt.%. Final pH is adjusted to 5.4.

Results of all Viscosity Stability Trials (VS-Trials) are summarized in Table 6.
In general no issues were observed regarding high temperature storage stability: In almost all cases score 1 was obtained after 10 days at 50 °C.
VS-Trials 1* and 2 demonstrate that without any further formulation it is not possible to obtain viscosity stable samples (as defined in this specification) using E-PVOH solution 1. This disproves the statement in US 6,451,898 B1 that PVOH containing ethylene units or E-PVOH will provide low temperature storage stability. On the other hand prior art teaches (as cited above) that the use of fully hydrolyzed S-PVOH suffers from bad low temperature storage stability. VS-Trial No. 3 using PVOH solution 20 disproves such general statement.

VS-Trials 4 to 6 demonstrate that storage stability can be achieved directly by the polymerization procedure, especially when using ascorbic acid or sodium erythorbate as a reducing agent alone or in combination with tartaric acid; this is also true for VS-Trials 9 and 10 based on Examples 21 and 22 for which additionally the presence of surfactant during polymerization influences viscosity stability.

VS-Trials 7 to 14 demonstrate the advantageous use of PVOH solution 11 as a post additive and/or of urea to obtain viscosity storage stability. Even on the base of VS-Trial No 11 which tends to gel, it is shown by VS-Trials 12 to 14 how such disadvantage can be overcome. VS-Trial 8 nevertheless demonstrates that the use of the high molecular weight PVOH solution 11 already during polymerization can have disadvantages regarding low temperature viscosity stability as indicated by the 5C Score of 4.

VS-Trials 15 to 20 demonstrate the influence of the amount of oxidizer, which is hydrogen peroxide, and of reducing agent, which is tartaric acid, on viscosity stability without any further formulation. In general, viscosity stability gets worse the lower the amount of oxidizer and the higher the amount of initially charged reducing agent used during polymerization.

VS-Trials 21 to 23 demonstrate the influence of the pH value of initial reactor charge on viscosity stability when no further formulation is made.

VS-Trials 25* and 27* compared to 24 and 26 demonstrate the influence of N-methylol acrylamide compared to acrylamide on viscosity stability. It is apparent that the replacement of acrylamide used in VS-Trials 24 and 26 by N-methylol acrylamide in VS-Trials 25* and 27* results in worse viscosity stability data.

With exception of VS-Trials 1, 25, and 27, all other trials - even if the fluidity score was 3 or 4 - showed only low to acceptable irreversible viscosity increase due to storage at different conditions.

### 7. Examples Related to Repulping Characteristics

Results of Repulping Trials (RP-Trials) are given in Table 7.

### RP Trial No. 1

Product of Example 14, third run, was used to coat the vellum paper.

### RP Trial No 2

Product of Comparative Example 15.3C VINAC® DP500 was used. VINAC® DP500 is known as a typical vinyl acetate homopolymer product widely used for standard polyvinyl acetate based paper and packaging adhesives

### RP Trial No 3

100 parts by weight of aqueous dispersion of product of Example 14, fourth run, were mixed under stirring with 12 parts by weight of diisobutyl phthalate. Viscosity Bf20 was adjusted to 4100 mPas by addition of water under stirring.

### RP Trial No 4

100 parts by weight of Example 15.3C VINAC DP500 were mixed under stirring with 12 parts by weight of diisobutyl phthalate. Viscosity Bf20 was adjusted to 3950 mPas by addition of water under stirring.

RP Trial No 4 demonstrates the behavior of a standard polyvinyl acetate based paper and packaging adhesive of the kind being used today on the market as most important water based paper and packaging adhesive.

**Table 4: Results of Examples 1 to 25**

| | | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| Example | Solution No | PVOH | initial VAC / total VAC | co-monomer | H2O2 / total VAC | total R2 / H2O2 | Solids | Bf 20 | SF | x3,50 | Grit 40 | T(2.5) | D3/3 | WATT | HWA | Creep 46 kg | Creep 56 kg |
| | | wt.% | wt.% | wt.% | mol% | mol% | wt.% | mPas | | nm | ppm | N/mm2 | N/mm2 | N/mm2 | % | | |
| 1 | 1 | 10.0 | 10.06 | 0.60 | 0.38 | 25.7 | 50.5 | 5 180 | 0.72 | 755 | 494 | 2.1 | 3.0 | 6.1 | 46 | | |
| 2 | 2 | 10.0 | 10.06 | 0.60 | 0.38 | 31.9 | 50.0 | 12 975 | 0.06 | 1 196 | 788 | 2.0 | 2.1 | 7.1 | 28 | | |
| 3 | 2 | 10.0 | 10.06 | 0.60 | 0.38 | 28.3 | 50.0 | 7 410 | 0.05 | 1 112 | 669 | 2.2 | 2.6 | 6.6 | 18 | | |
| 4 | 6 | 10.0 | 5.03 | 0.60 | 0.38 | 30.6 | 50.5 | 5 420 | 0.08 | 1 106 | 490 | 2.1 | 2.4 | 6.8 | | | |
| 5 | 6 | 10.0 | 10.06 | 0.60 | 0.38 | 25.7 | 50.4 | 8 230 | 0.67 | 834 | 148 | 2.9 | 2.4 | 6.7 | 18 | 35 | 35 |
| 6 | 6 | 10.0 | 5.03 | 0.60 | 0.38 | 25.7 | 50.4 | 9 200 | 0.83 | 790 | 114 | 2.5 | 2.4 | 7.2 | 13 | 35 | 35 |
| 7 | 6 | 10.0 | 5.03 | 0.60 | 0.38 | 19.3 | 50.5 | 5 800 | 0.77 | 783 | 251 | 2.1 | 2.6 | 6.5 | 17 | | |
| 8 | 6 | 10.0 | 5.03 | 0.60 | 0.38 | 19.3 | 50.5 | 12 380 | 0.64 | 865 | 311 | 2.1 | 2.4 | 6.3 | | | |
| 9 | 6 | 10.0 | 5.03 | 0.60 | 0.38 | 19.3 | 50.6 | 10 600 | 0.20 | 1 016 | 485 | 2.0 | 2.2 | 6.1 | 15 | | |
| 10 | 6 | 13.4 | 4.57 | 0.60 | 0.35 | 19.3 | 48.1 | 18 150 | 0.28 | 934 | 221 | 2.4 | 2.1 | 7.0 | | | |
| 11 | 6 | 10.0 | 5.03 | 0.60 | 0.57 | 17.1 | 50.5 | 4 370 | 0.76 | 872 | 139 | 2.5 | 2.1 | 6.4 | 20 | | |
| 12 | 6 | 10.0 | 5.03 | 0.60 | 0.76 | 12.8 | 50.5 | 3 010 | 0.65 | 918 | 57 | 2.9 | 2.0 | 6.6 | 10 | 35 | 35 |
| 13 | 7 | 9.2 | 9.23 | 0.60 | 0.35 | 25.7 | 52.5 | 14 850 | 0.44 | 972 | 452 | 2.0 | 2.5 | 6.1 | 10 | | |
| 14 | 8 | 10.0 | 10.06 | 0.60 | 0.38 | 25.7 | 50.5 | 13 384 | 0.98 | 692 | 211 | 2.6 | 2.5 | 6.8 | 15 | 35 | 35 |
| 14.1 | 8 | 10.0 | 10.06 | 0.60 | 0.38 | 25.7 | 50.5 | 13 384 | 0.98 | 692 | 211 | 2.5 | 2.6 | 7.7 | | | |
| 14.2 | 8 | 12.6 | 10.06 | 0.60 | 0.38 | 25.7 | 46.2 | 8 365 | 0.81 | 692 | | 2.6 | 2.3 | 7.3 | | | |
| 15 | 8 | 10.0 | 10.06 | 0.40 | 0.38 | 25.7 | 50.4 | 8 900 | 0.94 | 758 | 161 | 2.8 | 2.7 | 6.8 | 21 | 35 | 35 |
| 16 | 8 | 10.0 | 10.06 | 0.60 | 0.38 | 25.7 | 50.5 | 11 300 | 0.96 | 742 | 95 | 2.8 | 2.4 | 7.0 | 16 | 35 | 35 |
| 17 | 8 | 10.0 | 10.06 | 0.80 | 0.38 | 25.7 | 50.6 | 18 200 | 0.98 | 800 | 238 | 2.5 | 2.2 | 6.7 | 25 | 35 | 35 |
| 18 | 8 | 10.0 | 10.06 | 1.20 | 0.38 | 25.7 | 50.7 | 15 700 | 0.71 | 878 | 93 | 2.3 | 2.1 | 7.5 | 35 | 35 | 28 |
| 19.1 | 8 | 10.0 | 10.06 | 0.60 | | | 47.3 | 8 666 | 0.27 | 788 | | 2.5 | 2.3 | 6.1 | | | |
| 19.2 | 8 | 10.0 | 10.06 | 0.60 | | | 52.7 | 12 125 | 0.23 | 788 | | 2.4 | 2.4 | 6.5 | | | |
| 19.3 | 8 | 10.0 | 10.06 | 0.60 | | | 47.5 | 7 900 | 0.26 | 788 | | 2.6 | 2.4 | 7.1 | | | |
| 20 | 10 | 13.4 | 4.57 | 0.60 | 0.35 | 19.3 | 48.1 | 27 800 | 0.32 | 1 114 | 76 | 2.6 | 2.5 | 6.7 | | 35 | 35 |
| 21 | 15 | 12.5 | 4.57 | 0.60 | 0.35 | 36.6 | 47.7 | 9 150 | 0.16 | 914 | 278 | 2.4 | 2.2 | 6.7 | | 35 | 35 |
| 22 | 15 | 12.5 | 4.57 | 0.60 | 0.35 | 36.6 | 48.7 | 8 100 | 0.20 | 914 | | 2.3 | 2.2 | 7.2 | | 35 | 35 |
| 23 | 16 | 10.0 | 10.06 | 0.60 | 0.38 | 25.7 | 50.5 | 17 450 | 0.60 | 965 | 276 | 2.2 | 2.0 | 6.9 | | | |
| 24 | 18 | 10.0 | 5.03 | 0.60 | 0.38 | 25.7 | 51.1 | 7 600 | 0.65 | 957 | 393 | 2.7 | 2.2 | 6.8 | 10 | 35 | 35 |
| 25 | 19 | 10.0 | 5.03 | 0.60 | 0.38 | 25.7 | 51.4 | 22 500 | 0.59 | 949 | 20 | 2.3 | 2.2 | 6.5 | | 35 | 35 |

**Table 5: Results of Examples 26 to 40 (* indicates comparative examples)**

| Example | Solution No | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| | | PVOH | initial VAC / total VAC | co-monomer | H2O2 / total VAC | total R2 / H2O2 | Solids | Bf 20 | SF | x3,50 | Grit 40 | T(2.5) | D1 | D3/3 | WATT |
| | | wt.% | wt.% | wt.% | mol% | mol% | wt.% | mPas | | nm | ppm | N/mm2 | N/mm2 | N/mm2 | N/mm2 |
| 26.1* | 13 | 10.0 | 10.1 | 0.00 | 0.38 | 25.7 | 50.2 | 7 000 | 2.41 | 1 045 | 113 | 2.0 | 15.0 | 0.0 | 4.4 |
| 26.2* | 13 | 10.0 | 10.1 | 0.60 | 0.38 | 25.7 | 50.5 | 18 400 | 2.88 | 1 336 | 74 | 1.7 | 14.0 | 0.0 | 5.3 |
| 26.3* | 13 | 10.0 | 10.1 | 1.20 | 0.38 | 25.7 | 50.6 | 17 600 | 2.48 | 1 230 | 138 | 2.1 | 14.1 | 0.0 | 5.7 |
| 27* | 12 | 10.0 | 10.1 | 0.00 | 0.38 | 25.7 | 50.2 | 31 500 | 2.62 | 1 101 | 211 | 2.2 | | 0.0 | 5.4 |
| 28* | 14 | 10.0 | 10.1 | 0.00 | 0.38 | 25.7 | 50.2 | 6 180 | 0.93 | 1 778 | 1 612 | 2.6 | | 2.1 | 5.7 |
| 29* | 1 | 10.0 | 10.0 | 0.00 | 0.17 | 60.9 | 50.7 | 5 210 | 0.05 | 1 472 | 356 | 1.4 | | 3.3 | 3.6 |
| 30* | 2 | 10.0 | 10.0 | 0.00 | 0.17 | 60.9 | 50.7 | 21 400 | 0.28 | 2 404 | 201 | 1.8 | | 2.7 | 3.7 |
| 31* | 3 | 10.0 | 10.0 | 0.00 | 0.17 | 30.5 | 50.7 | 3 810 | 0.41 | 951 | 1 463 | 2.5 | | 2.6 | 3.3 |
| 32* | 4 | 7.5 | 10.0 | 0.00 | 0.17 | 60.9 | 50.7 | 10 450 | 0.52 | 4 260 | 1 024 | 1.8 | | 2.9 | 3.3 |
| 33* | 5 | 7.5 | 10.1 | 0.00 | 0.14 | 70.1 | 50.0 | 22 324 | 0.46 | 4 076 | 1 092 | 1.7 | | 2.5 | 3.5 |
| 34 | 9 | 7.8 | 25.1 | 0.00 | 0.05 | 45.3 | 53.6 | 7 180 | 0.44 | 702 | 1784 | 1.6 | | 1.0 | 4.4 |
| 35* | 8 | 10.0 | 10.1 | 0.00 | 0.38 | 25.7 | 50.2 | 2 800 | 0.34 | 926 | 630 | 2.8 | | 2.3 | 5.6 |
| 36* | 8 | 10.0 | 10.1 | 0.40 | 0.38 | 25.7 | 50.4 | 8 100 | 0.88 | 779 | 149 | 2.0 | | 2.2 | 6.8 |
| 37* | 8 | 10.0 | 10.1 | 0.80 | 0.38 | 25.7 | 50.6 | 11 500 | 1.10 | 733 | 191 | 2.4 | | 2.6 | 5.8 |
| 38 | 2 | 10.0 | 10.1 | 0.60 | 0.38 | 25.7 | 50.5 | 15 500 | -0.07 | 2 544 | 874 | 1.3 | | 2.3 | 5.2 |
| 39 | 8 | 10.0 | 10.1 | 0.60 | 0.05 | 205.5 | 51.2 | 12 800 | 0.24 | 788 | 3 999 | 2.3 | | 2.5 | 5.3 |
| 40.1* | | | | | | | | | | | | 2.2 | | 2.3 | 7.3 |
| 40.2* | | | | | | | | | | | | 1.8 | | 1.8 | 3.6 |
| 40.3* | | | | | | | | | | | | 2.3 | | 0.6 | 5.5 |

**Table 6: Results of Viscosity Stability Trials 1 to 28; * indicates comparative examples**

| VS-Trial No | Example | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| | | solution No | RT Score | 5C Score | 50 C Score | irrev visco RT | irrev visco 5C | irrev visco 50 C | poly procedure | initial VAC / total VAC | H2O2 / total VAC | initial R2 / H2O2 | total R2 / H2O2 | initial pH | parts PVOH solution 11 | parts urea |
| | | | | | | % | % | % | | wt.% | mol% | mol% | mol% | | | |
| 1* | 29* | 1 | 5 | | | | | | 2 | 9.99 | 0.32 | 56.66 | 60.94 | 4.0 | | |
| 2 | 1 | 1 | 4 | 4 | | | | | 1 | 10.06 | 0.38 | 25.69 | 25.69 | 4.8 | | |
| 3 | | 20 | 1 | 2 | 1 | | <15 | | 1 | 5.03 | 0.38 | 19.34 | 19.34 | 5.4 | | |
| 4 | 2 | 2 | 1 | 1 | 1 | | ± 0 | < 5 | 1 | 10.06 | 0.38 | 20.60 | 31.87 | 3.9 | | |
| 5 | 3 | 2 | 1 | 1 | 1 | < 5 | ± 0 | < 15 | 1 | 10.06 | 0.38 | 18.31 | 28.33 | 3.9 | | |
| 6 | 4 | 6 | 1 | 1 | 1 | ± 0 | < 10 | < 5 | 1 | 5.03 | 0.38 | 19.34 | 30.61 | 5.4 | | |
| 7 | 10 | 6 | 1 | 1 | 1 | ± 0 | < 15 | | 1 | 4.57 | 0.35 | 19.34 | 19.34 | 4.0 | ? 15 | |
| 8 | 20 | 10 | 1 | 4 | 1 | ± 0 | < 15 | | 1 | 4.57 | 0.35 | 19.34 | 19.34 | 4.0 | ? 15 | |
| 9 | 21 | 15 | 1 | 1 | 1 | < 25 | < 30 | < 5 | 1 | 4.57 | 0.35 | 25.69 | 36.63 | 4.0 | ? 15 | |
| 10 | 22 | 15 | 1 | 1 | 1 | ± 0 | < 25 | < 5 | 1 | 4.57 | 0.35 | 25.69 | 36.63 | 4.0 | | ? 2 |
| 11 | 39 | 8 | 4 | 4 | | < 20 | < 25 | | 1 | 10.06 | 0.05 | 205.48 | 205.48 | 4.8 | | |
| 12 | 19.1 | 8 | 2 | 2 | 1 | | < 20 | | 1 | 10.06 | 0.05 | 205.48 | 205.48 | | 12.5 | |
| 13 | 19.2 | 8 | 1 | 1 | 1 | | < 15 | | 1 | 10.06 | 0.05 | 205.48 | 205.48 | | | 2.25 |
| 14 | 19.3 | 8 | 1 | 1 | 1 | | < 10 | | 1 | 10.06 | 0.05 | 205.48 | 205.48 | | 12.5 | 2.25 |
| 15 | 12 | 6 | 1 | 1 | 1 | | < 10 | | 1 | 5.03 | 0.76 | 12.84 | 12.84 | 5.4 | | |
| 16 | 11 | 6 | 1 | 1 | 1 | | < 10 | | 1 | 5.03 | 0.57 | 17.12 | 17.12 | 5.4 | | |
| 17 | | 6 | 3 | 2 | 1 | < 10 | < 15 | | 1 | 5.03 | 0.38 | 25.69 | 25.69 | 4.6 | | |
| 18 | | 6 | 4 | 4 | 1 | < 15 | < 25 | | 1 | 5.03 | 0.38 | 51.37 | 51.37 | 4.6 | | |
| 19 | | 6 | 3 | 4 | 1 | | | | 1 | 5.03 | 0.19 | 51.37 | 51.37 | 3.9 | | |
| 20 | | 6 | 4 | | 1 | | | | 1 | 5.03 | 0.10 | 102.74 | 102.74 | 3.9 | | |
| 21 | 14 | 8 | 3 | 1 | 1 | < 25 | < 20 | < 5 | 1 | 10.06 | 0.38 | 25.69 | 25.69 | 4.6 | | |
| 22 | | 8 | 2 | | 1 | < 15 | | | 1 | 10.06 | 0.38 | 25.69 | 25.69 | 3.6 | | |
| 23 | | 8 | 1 | | 1 | < 5 | | | 1 | 10.06 | 0.38 | 25.69 | 25.69 | 3.2 | | |
| 24 | 15 | 8 | 2 | 1 | 1 | | < 20 | | 1 | 10.06 | 0.38 | 25.69 | 25.69 | 4.8 | | |
| 25* | 36* | 8 | 4 | 4 | 1 | | > 40 | | 1 | 10.06 | 0.38 | 25.69 | 25.69 | 4.8 | | |
| 26 | 17 | 8 | 3 | 4 | 1 | | < 20 | | 1 | 10.06 | 0.38 | 25.69 | 25.69 | 4.8 | | |
| 27* | 37* | 8 | 4 | 4 | 2 | | > 40 | | 1 | 10.06 | 0.38 | 25.69 | 25.69 | 4.8 | | |

### Legend of Table 4:

Columns in Table 4 have following meaning, according to their numbers:
1: wt.% of PVOH based on total monomer used in initial reactor charge
2: wt. ratio of initially charge VAC monomer and total used VAC monomer
3: wt.% of comonomer based on total monomer
4: mol% of total oxidizer hydrogen peroxide based on total used VAC monomer
5: mol% of total used reducing agent R2 based on total used oxidizer hydrogen peroxide
6: wt.% solids of final product
7: viscosity Bf20 of final product in mPas
8: shear thinning factor of final product
9: median of volume distribution function of particle size in nm
10: total grit above 40 µm in ppm based on dispersion
11: setting speed given as bond strength after 2.5 minutes setting time in N/mm²
12: water resistance measured as D3/3 according to DIN EN 204/205 in N/mm²
13: heat resistance measured as WATT 91 according to DIN EN 14257 in N/mm²
14: hard wood adhesion (HWA) given in % of fiber tear
15: creep resistance according to BS 3544 at load of 46 kg in points
16: creep resistance according to BS 3544 at load of 56 kg in points

### Legend of Table 5:

Columns in Table 5 have following meaning, according to their numbers:
1: wt.% of PVOH based on total monomer used in initial reactor charge
2: wt. ratio of initially charge VAC monomer and total used VAC monomer
3: wt.% of comonomer based on total monomer
4: mol% of total oxidizer hydrogen peroxide based on total used VAC monomer
5: mol% of total used reducing agent R2 based on total used oxidizer hydrogen peroxide
6: wt.% solids of final product
7: viscosity Bf20 of final product in mPas
8: shear thinning factor of final product
9: median of volume distribution function of particle size in nm
10: total grit above 40 µm in ppm based on dispersion
11: setting speed given as bond strength after 2.5 minutes setting time in N/mm²
12: bond strength measured as D1/1 according to DIN EN 204/205
13: water resistance measured as D3/3 according to DIN EN 204/205 in N/mm²
14: heat resistance measured as WATT 91 according to DIN EN 14257 in N/mm²

### Legend of Table 6:

Columns in Table 6 have following meaning, according to their numbers:
1: No of PVOH solution used according to Table 3
2: fluidity score after storage at ambient or room temperature RT
3: fluidity score after storage at about 5 degrees C followed by equilibration to RT
4: fluidity score after storage at about 50 degrees C followed by equilibration to RT
5: % of apparently irreversible viscosity increase after storage at RT and stirring
6: % of apparently irreversible viscosity increase after storage at about 5 degrees C followed by equilibration to RT and stirring
7: % of apparently irreversible viscosity increase after storage at about 50 degrees C followed by equilibration to RT and stirring
8: no of used polymerization procedure as given above
9: wt. ratio of initially charge VAC monomer and total used VAC monomer
10: mol% of total oxidizer hydrogen peroxide based on total used VAC monomer
11: mol% of initially charged reducing agent R2 based on total used oxidizer hydrogen peroxide
12: mol% of totally used reducing agent R2 based on total used oxidizer hydrogen peroxide
13: initial pH of reactor charge before initiation
14: parts of PVOH solution 11 given in Table 3 based on 100 parts of aqueous dispersion
15: parts of urea based on aqueous dispersion

**Table 7: Result of Repulping Trials 1 to 4**

| Repulping Trial No | size of adhesives particles |
|---|---|
| RP 1 | 0.4 to 3 mm |
| RP 2 | Not visible, < 0.1 mm |
| RP 3 | 0.5 to 3 mm |
| RP 4 | Not visible, < 0.1 mm |

**Table 8: Correlation of weight average of degree of polymerization DP_{W}, weight average molecular weight M_{W} - given in g/mol - and viscosity of 4 wt.% aqueous solutions at 23 degrees C- given in mPas - of partially and fully hydrolyzed S-PVOH and of fully hydrolyzed E-PVOH; M_{W} based on GPC measurements including light scattering detector**

| **DP**_{w} = M_{w}/mᵢ | S-PVOH | | | | E-PVOH 98.5 mol% | | | |
|---|---|---|---|---|---|---|---|---|
| | 88.0 mol% | | 98.5 mol% | | 2.0 mol% E | | 6.0 mol% E | |
| | mᵢ = 49.10 g/mol | | mᵢ = 44.68 g/mol | | mᵢ = 44.40 g/mol | | mᵢ = 43.70 g/mol | |
| | **M_{W}** | **η 4 wt%** | **M_{w}** | **η 4 wt%** | **M_{W}** | **η 4 wt%** | **M_{W}** | **η 4 wt%** |
| 100 | 4 910 | 3.0 | 4 468 | 2.9 | 4 440 | 2.9 | 4 370 | 2.9 |
| 200 | 9 820 | 3.2 | 8 936 | 3.1 | 8 880 | 3.1 | 8 740 | 3.1 |
| 300 | 14 730 | 3.4 | 13 404 | 3.4 | 13 320 | 3.4 | 13 110 | 3.3 |
| 400 | 19 640 | 3.7 | 17 872 | 3.6 | 17 760 | 3.6 | 17 480 | 3.6 |
| 500 | 24 550 | 4.0 | 22 340 | 3.8 | 22 200 | 3.8 | 21 850 | 3.8 |
| 600 | 29 460 | 4.3 | 26 808 | 4.1 | 26 640 | 4.1 | 26 220 | 4.1 |
| 700 | 34 370 | 4.6 | 31 276 | 4.4 | 31 080 | 4.4 | 30 590 | 4.4 |
| 800 | 39 280 | 5.0 | 35 744 | 4.7 | 35 520 | 4.7 | 34 960 | 4.6 |
| 900 | 44 190 | 5.3 | 40 212 | 5.0 | 39 960 | 5.0 | 39 330 | 5.0 |
| 1 000 | 49 100 | 5.7 | 44 680 | 5.4 | 44 400 | 5.4 | 43 700 | 5.3 |
| 1 100 | 54 010 | 6.2 | 49148 | 5.7 | 48 840 | 5.7 | 48 070 | 5.7 |
| 1 200 | 58 920 | 6.7 | 53 616 | 6.1 | 53 280 | 6.1 | 52 440 | 6.0 |
| 1 300 | 63 830 | 7.2 | 58 084 | 6.6 | 57 720 | 6.5 | 56 810 | 6.4 |
| 1 400 | 68 740 | 7.7 | 62 552 | 7.0 | 62 160 | 7.0 | 61 180 | 6.9 |
| 1 500 | 73 650 | 8.3 | 67 020 | 7.5 | 66 600 | 7.5 | 65 550 | 7.4 |
| 1 600 | 78 560 | 8.9 | 71 488 | 8.0 | 71 040 | 8.0 | 69 920 | 7.8 |
| 1 700 | 83 470 | 9.6 | 75 956 | 8.6 | 75 480 | 8.5 | 74 290 | 8.4 |
| 1 800 | 88 380 | 10.4 | 80 424 | 9.2 | 79 920 | 9.1 | 78 660 | 8.9 |
| 1 900 | 93 290 | 11 | 84 892 | 9.8 | 84 360 | 9.7 | 83 030 | 9.6 |
| 2 000 | 98 200 | 12 | 89 360 | 10.5 | 88 800 | 10.4 | 87 400 | 10.2 |
| 2 100 | 103 110 | 13 | 93 828 | 11 | 93 240 | 11 | 91 770 | 11 |
| 2 200 | 108 020 | 14 | 98 296 | 12 | 97 680 | 12 | 96 140 | 12 |
| 2 300 | 112 930 | 15 | 102 764 | 13 | 102 120 | 13 | 100 510 | 12 |
| 2 400 | 117 840 | 16 | 107 232 | 14 | 106 560 | 14 | 104 880 | 13 |
| 2 500 | 122 750 | 17 | 111 700 | 15 | 111 000 | 15 | 109 250 | 14 |
| 2 600 | 127 660 | 19 | 116 168 | 16 | 115 440 | 16 | 113 620 | 15 |
| 2 700 | 132 570 | 20 | 120 636 | 17 | 119 880 | 17 | 117990 | 16 |
| 2 800 | 137 480 | 22 | 125 104 | 18 | 124 320 | 18 | 122 360 | 17 |
| 2 900 | 142 390 | 23 | 129 572 | 19 | 128 760 | 19 | 126 730 | 18 |
| 3 000 | 147 300 | 25 | 134 040 | 21 | 133 200 | 20 | 131 100 | 20 |
| 3 100 | 152 210 | 27 | 138 508 | 22 | 137 640 | 22 | 135 470 | 21 |
| 3 200 | 157120 | 29 | 142 976 | 23 | 142 080 | 23 | 139 840 | 22 |
| 3 300 | 162 030 | 31 | 147 444 | 25 | 146 520 | 25 | 144 210 | 24 |
| 3 400 | 166 940 | 34 | 151 912 | 27 | 150 960 | 26 | 148 580 | 26 |
| 3 500 | 171 850 | 36 | 156 380 | 29 | 155 400 | 28 | 152 950 | 27 |
| 3 600 | 176 760 | 39 | 160 848 | 31 | 159 840 | 30 | 157 320 | 29 |
| 3 700 | 181 670 | 42 | 165 316 | 33 | 164 280 | 32 | 161 690 | 31 |
| 3 800 | 186 580 | 45 | 169 784 | 35 | 168 720 | 35 | 166 060 | 33 |
| 3 900 | 191 490 | 49 | 174 252 | 38 | 173 160 | 37 | 170 430 | 35 |
| 4 000 | 196 400 | 52 | 178 720 | 40 | 177 600 | 39 | 174 800 | 38 |
| 4 100 | 201 310 | 56 | 183 188 | 43 | 182 040 | 42 | 179 170 | 40 |
| 4 200 | 206 220 | 61 | 187 656 | 46 | 186 480 | 45 | 183 540 | 43 |
| 4 300 | 211 130 | 65 | 192 124 | 49 | 190 920 | 48 | 187 910 | 46 |
| 4 400 | 216 040 | 70 | 196 592 | 52 | 195 360 | 52 | 192 280 | 49 |
| 4 500 | 220 950 | 76 | 201 060 | 56 | 199 800 | 55 | 196 650 | 53 |
| 4 600 | 225 860 | 81 | 205 528 | 60 | 204 240 | 59 | 201 020 | 56 |
| 4 700 | 230 770 | 88 | 209 996 | 64 | 208 680 | 63 | 205 390 | 60 |
| 4 800 | 235 680 | 94 | 214 464 | 69 | 213 120 | 67 | 209 760 | 64 |
| 4 900 | 240 590 | 102 | 218 932 | 73 | 217 560 | 72 | 214 130 | 68 |
| 5 000 | 245 500 | 109 | 223 400 | 78 | 222 000 | 77 | 218 500 | 73 |

## Claims

1. Use of (meth)acrylic acid amide(s) as comonomer(s) (b) for providing improved, i.e. larger, heat resistance measured as WATT 91 value according to DIN EN 14257, as compared to the heat resistance obtained without using acrylic and/or methacrylic amide(s) derivatives (b)
by a formaldehyde-free aqueous polymer dispersion obtained by emulsion copolymerization of at least
(a) vinyl ester monomer(s) and
(b) comonomer(s) comprising said acrylic and/or methacrylic amide(s) derivatives in the presence of at least
(c) fully hydrolyzed polyvinyl alcohol (PVOH), having an average degree of hydrolysis above 95.00 mol%,
wherein the polymerization does not comprise comonomers derived from N-alkylol(meth)acrylic acid amides.

2. Use according to claim 1, wherein the heat resistance measured as WATT 91 value according to DIN EN 14257 is at least 6 N/mm².

3. Use according to claim 1 or 2, wherein, based on total used monomers, up to 99.9 wt.%, preferably 95.0 to 99.0 wt.% of vinyl ester monomer(s) (a) are polymerized.

4. Use according to any one of claims 1 to 3, wherein the vinyl ester monomer(s) (a) comprise monomers selected from the group consisting of vinyl formate, vinyl acetate (VAC), vinyl propionate, vinyl butyrate, vinyl pivalate, vinyl capronate, vinyl caprylate, vinyl laurate, vinyl stearate, vinyl 2-ethyl hexanoate, dibutyl maleate, dioctyl maleate, diisopropyl maleate, diisopropyl fumarate, vinyl versatate (C₉₋₁₃), preferably vinyl versatate (C₉₋₁₀), or mixtures thereof, in particular the vinyl ester monomer(s) comprise vinyl acetate.

5. Use according to any one of claims 1 to 4, wherein, based on total used monomers, up to 50.0 wt.%, preferably up to 30.0 wt.%, and more preferably 0.1 to 5.0 wt.% of comonomer(s) (b), in particular comprising, based on total used monomers, 0.1 to 2.5 wt.%, preferably 0.2 to 1.25 wt.%, of (meth)acrylic acid amide(s), are polymerized.

6. Use according to any one of claims 1 to 5, wherein the comonomer(s) (b) in addition to (meth)acrylic acid amide(s) comprise ethylenically unsaturated comonomers selected from the group comprising acrylic acid, methacrylic acid, fumaric acid, maleic acid, maleic acid anhydride, crotonic acid, itaconic acid, and their respective derivatives, especially their esters, acrylonitrile, methacrylonitrile, trimethyl(3-acrylamido-3-dimethylpropyl)ammonium chloride, acrylamido-2-methacrylamido-2-methylpropanesulfonic acid and its alkali metal salt, alkyl vinyl ethers, N-vinylpyrrolidone, vinyl halogenides, especially vinyl chloride and vinylidene chloride, vinyl sulfonate and its alkali metal salts, allyl sulfonate and its alkali metal salts, ethylene, propylene, and mixtures thereof.

7. Use according to any one of claims 1 to 6, wherein, based on total used monomer, less than 12 wt.%, preferably 7 to less than 12 wt.%, more preferably 8 to 11 wt.%, of fully hydrolyzed PVOH (c), are present during polymerization.

8. Use according to any one of claims 1 to 7, wherein the fully hydrolyzed PVOH (c) comprises unmodified or standard polyvinyl alcohol (S-PVOH) and/or modified polyvinyl alcohol (X-PVOH), in particular ethylene modified polyvinyl alcohol (E-PVOH) and/or acetoacetyl modified polyvinyl alcohol (A-PVOH).

9. Use according to any one of claims 1 to 8, wherein the fully hydrolyzed PVOH (c) has an average degree of hydrolysis above 98.00 mol%, preferably in the range of from 98.1 to 99.95 mol%.

10. Use according to any one of claims 1 to 9, wherein the polymerization does not involve partially hydrolyzed PVOH having an average degree of hydrolysis up to 95 mol%, preferably up to 98 mol%.

11. Formaldehyde-free aqueous polymer dispersion obtainable by emulsion copolymerization of vinyl ester monomer(s) (a) in the presence of fully hydrolyzed polyvinyl alcohol (PVOH) (c), using comonomer(s) (b), the comonomer(s) (b) comprising (meth)acrylic acid amide(s) for obtaining a formaldehyde-free aqueous polymer dispersion providing improved heat resistance, measured as WATT 91 value according to DIN EN 14257 according to any one of claims 1 to 10, comprising 2 to less than 12 wt.%, based on total used monomer, of fully hydrolyzed polyvinyl alcohol (PVOH) (c),
wherein the fully hydrolyzed PVOH has an average degree of hydrolysis above 98.00 mol% up to 99.95 mol%,
wherein the polymerization does not comprise comonomers derived from N-alkylol(meth)acrylic acid amides,
wherein the polymerization does not involve partially hydrolyzed PVOH having an average degree of hydrolysis up to 95 mol%,
the polymer dispersion providing
- a water resistance, measured as D3/3 value of a wood bond according to DIN EN 204/205 of D3/3 of at least 1.5 N/mm²,
- a heat resistance measured as WATT 91 value of a wood bond according to DIN EN 14257 of at least 6 N/mm².

12. Aqueous polymer dispersion according to claim 11, comprising
(a) up to 99.9 wt.%, preferably 95.0 to 99.0 wt.%, based on total used monomers of vinyl ester monomer(s)
(b) up to 50.0 wt.%, preferably up to 30.0 wt.%, and more preferably 0.1 to 5.0 wt.% of comonomer(s) (b), in particular comprising, based on total used monomers, 0.1 to 2.5 wt.%, preferably 0.2 to 1.25 wt.%, of (meth)acrylic acid amide(s),
(c) 2 to less than 12 wt.%, preferably 7 to less than 12 wt.%, more preferably 8 to 11 wt.%, based on total used monomer, of fully hydrolyzed PVOH,
and optionally up to less than 2 wt.%, preferably 0.1 to 1.5 wt.% based on total used monomer of surfactant,
wherein the fully hydrolyzed PVOH has an average degree of hydrolysis in the range of 98.00 mol% up to 99.95 mol%, preferably in the range of 98.1 to 99.9 mol%, more preferably in the range of 98.1 to 99.1 mol%.

13. Aqueous polymer dispersion according to claim 11 or 12, comprising no partially hydrolyzed PVOH having a degree of hydrolysis up to 98 mol%.

14. Aqueous polymer dispersion according to any one of claims 11 to 13, wherein the fully hydrolyzed PVOH (c) is a blend of S-PVOH and X-PVOH, in particular E-PVOH.

15. Aqueous polymer dispersion according to claim 14, wherein the blend comprises up to 100 wt.% based on totally used PVOH of X-PVOH, in particular E-PVOH, preferably up to 60 wt.% of X-PVOH, in particular E-PVOH, and most preferably up to 50 wt.% of X-PVOH, in particular E-PVOH,

16. Aqueous polymer dispersion according to any one of claims 11 to 15, wherein X-PVOH is E-PVOH, **characterized by** an ethylene content, as established by NMR analysis, of up to 12 mol%, preferably 1 to 7 mol%, and most preferably within the range of 2 to 6 mol%.

17. Aqueous polymer dispersion according to any one of the Claims 11 - 16, wherein the aqueous polymer dispersion has a solids content within the range of 30 to 70 wt.%, preferably in the range of 40 to 60 wt.%, and in particular in the range of 45 to 55 wt.%.

18. Aqueous polymer dispersion according to any one of claims 11 to 17, further comprising one or more of components (d) to (g):
(d) up to 8 parts by weight, preferably 1 to 4 parts by weight, and most preferably 1.5 to 3 parts by weight of a coalescing agent,
(e) up to 3 parts by weight, preferably 0.2 to 2 parts by weight, most preferably 0.5 to 1.5 parts by weight of a post added PVOH, preferably different from the fully hydrolyzed PVOH (c),
(f) up to 10 parts by weight, preferably 0.5 to 6 parts by weight, most preferably 1 to 4 parts by weight of a viscosity modifier, and
(g) up to 10 parts by weight, preferably 1 to 8 parts by weight, most preferably 2 to 6 parts by weight of urea;
the amounts based on 100 parts by weight of the aqueous polymer dispersion having a solids content of 30 to 70 wt.%, preferably 40 to 60 wt.%, in particular approximately 50 wt.%.

19. Aqueous polymer dispersion according to claim 18, wherein coalescing agent (d) is selected from the group comprising butyl carbitol acetate, propylene carbonate, glycolic acid butyl ester, propylene glycol monophenyl ester, ore mixtures thereof, in particular the coalescing agent (d) comprises propylene carbonate.

20. Aqueous polymer dispersion according to claim 18 or 19, wherein the PVOH (e) consists of only fully hydrolyzed PVOH having a degree of hydrolysis of at least 98.00 mol%, preferably comprising S-PVOH having a degree of polymerization DP_{w} above of 4000.

21. Aqueous polymer dispersion according to claim 18 or 19, wherein the post added PVOH (e) comprises X-PVOH, in particular E-PVOH.

22. Aqueous polymer dispersion according to any one of claims 18 to 21, wherein the post added PVOH (e) comprises a blend of S-PVOH and of X-PVOH, in particular E-PVOH, wherein the blend is different from the fully hydrolyzed PVOH (c) and wherein the degree of polymerization DP_{w} of any of the PVOH (e) and (c) components optionally is above 2000.

23. Aqueous polymer dispersion according to any one of claims 18 to 22, wherein viscosity modifier (f) is selected from the group comprising mono- or polyvalent alcohols, trimethylol propane, di-trimethylolpropane, triethanol propane, 3-methyl-1,5-pentanediol, pentaerythritol, di-pentaerythritol, 3-methyl-3-methoxy butanol, 2,5 dimethyl hexyne diol, triethanolamine, diethanolamine, glycol ethers, or mixtures thereof.

24. Aqueous polymer dispersion according to any one of claims 18 to 23, comprising 100 parts by weight of an aqueous polymer dispersion of 40 to 60 wt.% of solids content of components (a) to (c):
(a) 95.0 - 99.9 wt.%, based on total used monomers, of only vinyl acetate,
(b) 0.1 to 5.0 wt.% of comonomer(s), in particular comprising, based on total used monomers, 0.1 to 2.5 wt.%, preferably 0.2 to 1.25 wt.%, more preferred 0.2 to 0.8 wt.%, and in particular 0.3 to 0.7 wt.% of acrylamide,
(c) more than 8 to less than 11 wt.% based on totally used monomers of fully hydrolyzed PVOH, including 10 to 60 wt.% , based on total used PVOH (c) of E-PVOH, wherein the E-PVOH, as determined by NMR analysis, has an ethylene content within the range of 2 to 6 mol%,
wherein the fully hydrolyzed PVOH has an average degree of hydrolysis within the range of 98.1 to 99.9 mol%, preferably within the range of 98.1 to 99.1 mol%,
and wherein the weight average degree of polymerization DP_{w} of any of the fully hydrolyzed PVOH (c) is within the range of 500 to 4000,
the aqueous polymer dispersion further comprising one or more of components (d) to (g):
up to 3 parts by weight of a coalescing agent (d),
up to 2 parts by weight of PVOH (e), preferably different from the PVOH (c),
up to 5 parts by weight of a viscosity modifier (f), and
up to 10 parts by weight of urea (g).

25. Aqueous polymer dispersion according to any one of the Claims 18 to 24, wherein the aqueous polymer dispersion has a pH value of above 3.5, preferably of above 4.0, more preferably within the range of 4.1 to 9.0, and most particular within the range of 4.1 to 5.4.

26. Binder formulation, comprising an aqueous polymer dispersion according to any one of Claims 11 to 25.

27. Binder formulation according to Claim 26 comprising at least one further and different polymer dispersion obtainable by emulsion copolymerization of vinyl ester and ethylene in the presence of PVOH.

28. Binder formulation according to claim 26 or 27, providing a water resistance of a wood bond measured as D3/3 value according to DIN EN 204/205 of D3/3 of at least 1.5 N/mm2, preferably of at least 2 N/mm2.

29. A process for providing an aqueous polymer dispersion according to any one of claims 11 to 25, providing
- a water resistance measured as D3/3 value of a wood bond according to DIN EN 204/205 of D3/3 of at least 1.5 N/mm²,
- a heat resistance measured as WATT 91 value of a wood bond according to DIN EN 14257 of at least 6 N/mm²,
the process comprising emulsion copolymerization of:
(a) vinyl ester monomer(s),
(b) comonomer(s), comprising (meth)acrylic acid amide(s),
(c) 2 to less than 12 wt.%, based on total used monomer, of fully hydrolyzed polyvinyl alcohol (PVOH),
wherein the fully hydrolyzed PVOH has an average degree of hydrolysis above 98.00 mol% up to 99.95 mol%,
wherein the polymerization does not comprise comonomers derived from N-alkylol(meth)acrylic acid amide,
wherein the polymerization does not involve partially hydrolyzed PVOH having an average degree of hydrolysis up to 95 mol%.

30. Process according to claim 29, wherein the polymerization is performed in the presence of:
(h) at least one oxidizing agent such as selected from the group of peroxides, preferably comprising hydrogen peroxide, and
(i) at least one reducing agent such as selected from the group of tartaric acid, ascorbic acid, formic acid, sodium erythorbate, or mixtures thereof.

31. Process according to claim 29 or 30, comprising the process steps (P1) start of initiation, (P2) monomer delay and (P3) completion of conversion, wherein
(P1) polymerization is started at a pH in the range of 3 to 8, preferably in the range of 3.2 to 6, more preferably in the range of 3.5 to 5, and most preferably in the range of 3.6 to 4.5, optionally at a temperature less than 65 °C,
(P2) the polymerization is continued by at least one monomer delay, optionally by a delay of PVOH (c), at a temperature above of 65 °C, preferably within a temperature range of 70 to 95 °C, more preferred within a temperature range of 80 to 95 °C, in which step the pH is kept within the range of 3 to 8, preferably within the range of 3.2 to 6, and most preferably within the range of 3.2 to 5.5,
(P3) the polymerization is finished by at least an oxidizer delay at a temperature above 70 °C, preferably above 80 °C.

32. Process according to claim 31, comprising an additional step of
(P4) post polymerization to reduce residual monomer to a level of below 0.1 wt.% based on total aqueous polymer dispersion, by adding a further oxidizer (j), preferably different from oxidizer (h), in particular t-butyl hydrogen peroxide, and a further reducing agent (k), in particular ascorbic acid or sodium erythorbate.

33. Process according to any one of claims 29 to 32, wherein
- up to 100 wt.% of the PVOH (c),
- no more than 50 wt.% of the vinyl ester monomer(s) (a), preferably no more than 20 wt.%, and most preferably less than 10 wt.% of the vinyl ester monomer(s) is initially charged to the reactor,
- no more than 50 wt.% of the comonomer(s) (b), preferably no more than 20 wt.%, more preferably less than 10 wt.%, and most preferably nothing of the comonomer(s) is/are charged initially to the reactor.

34. Process according to any one of claims 30 to 33, wherein
- at least 50 wt.%, preferably 100 wt.%, of the reducing agent (i), is initially charged to the reactor, and/or
- up to 100 wt.%, preferably 90 to 100 wt.%, most preferably 100 wt.% of the oxidizer (h) is delayed to the reactor.

35. Process according to any one of claims 30 to 34, comprising
- hydrogen peroxide as the oxidizer (h),
- tartaric acid as the reducing agent (i1) and optionally ascorbic acid or sodium erythorbate as the reducing agent (i2),
wherein all of the reducing agent (i1) is initially charged to the reactor and the reducing agent (i2) is delayed starting at any time between the reaction is started by oxidizer addition (h) and the end of the oxidizer addition (h),
wherein all of the oxidizer (h) is fed continuously, without any initial shot of it, until the reaction is driven to nearly complete conversion within process step (P3).

36. Process according to any one of claims 30 to 35, wherein the molar ratio of reducing agent (i) to oxidizing agent (h) is in the range of 0.10 to 0.80, preferably of 0.12 to 0.48.

37. Process according to any one of claims 30 to 36, wherein the molar amount of totally used oxidizing agent (h) is in the range of 0.25 to 1.20 mol%, preferably of 0.25 to 0.80 mol%, most preferably 0.30 to 0.80 mol%, based on total molar amount of vinyl ester monomer(s) (a).

38. Process according to any one of claims 29 to 37, comprising a subsequent step (P5) of adding after post polymerization step (P4) is finished, or starting after delay(s) of monomer (P3) are finished, one or more of PVOH (e), of coalescing agent (d), of viscosity modifier (f), and of urea (g).

39. Process according to any one of claims 29 to 38, comprising polymerization steps (P1) to (P3) in the presence of at least the following components:
(a) 95.0 - 99.9 wt.%, based on total used monomers, of only vinyl acetate,
(b) 0.1 to 5.0 wt.% of comonomer(s), in particular comprising, based on total used monomers, 0.1 to 2.5 wt.%, preferably 0.2 to 1.25 wt.%, more preferred 0.2 to 0.8 wt.%, and in particular 0.3 to 0.7 wt.% of acrylamide,
(c) more than 8 to less than 11 wt.% based on totally used monomers of fully hydrolyzed PVOH, including 10 to 60 wt.% , based on total used PVOH (c) of E-PVOH, wherein the E-PVOH, as determined by NMR analysis, has an ethylene content within the range of 2 to 6 mol%,
wherein the fully hydrolyzed PVOH has an average degree of hydrolysis within the range of 98.1 to 99.9 mol%, preferably within the range of 98.1 to 99.1 mol%,
and wherein the weight average degree of polymerization DP_{w} of any of the fully hydrolyzed PVOH (c) is within the range of 500 to 4000,
optionally less than 2 wt.%, preferably 0.1 to 1.5 wt.% based on total used monomers of surfactant,
(h) oxidizing agent comprising peroxide, preferably hydrogen peroxide,
(i) reducing agent comprising tartaric acid, ascorbic acid, sodium erythorbate, or mixtures thereof;
and a post polymerization step (P4) in the presence of at least the following components:
(j) t-butyl hydrogen peroxide,
(k) ascorbic acid and or sodium erythorbate,
wherein the polymerization steps (P1) to (P4) are carried out at temperatures in the range of from 45 to 95 °C, at a starting pH in step (P1) in the range of from 3.2 to 5.5, and at a pH during the course of polymerization (P2) and (P3) within the range of from 3.2 to 5.5 and wherein no formaldehyde or formaldehyde releasing compounds are added.

40. Process according to Claim 39, comprising an additional step (P5) of adding after post polymerization (P4) is finished, or starting after delay(s) of monomer(s) (P3) are finished, one or more of the following components:
(d) one or more coalescing agent(s), in particular butyl carbitol acetate and/or propylene carbonate, or a blend of both,
(e) PVOH, in particular comprising E-PVOH,
(f) viscosity modifier(s),
(g) urea.

41. Use according to any one of claims 1 to 10 or of the aqueous polymer dispersion according to any one of claims 11 to 25 or obtainable by the process according to any one of claims 29 to 40 or of the binder formulation according to any one of claims 26 to 28 for improving heat resistance, measured as WATT 91 value according to DIN EN 14257 in one or more of the following applications:
a) bonding porous or semi-porous substrates together or to other substrates, wherein the porous or semi-porous substrates comprise the group consisting of wood, paper, board, corrugated board, foamed plastic, leather, and textile;
b) as one component wood working adhesive or wood glue of water resistance class D3 according to DIN EN 204/205;
c) in wood glues for veneer lamination;
d) comprising plasticizer in paper and packaging adhesives;
e) in adhesives for parquet or other floor, wall or ceiling coverings;
f) in binders for carpet;
g) in binders used for wood fiber boards, leather fiber material, glass and mineral fiber materials;
h) in binders for isolation materials made from paper-, plastic-, glass-, or mineral fibers;
i) in binders for cement and plaster;
j) in binders for textile and nonwovens or in textile finish.

## Patentansprüche

1. Verwendung von (Meth)acrylsäureamiden als Comonomer(e) (b) zur Bereitstellung von verbesserter, d. h. größerer, Wärmebeständigkeit, gemessen als WATT 91-Wert gemäß DIN EN 14257, im Vergleich zu der ohne Verwendung von Acrylsäure und/oder (Meth)acrylsäureamid-Derivaten (b) erhaltenen Wärmebeständigkeit durch eine formaldehydfreie wässrige Polymerdispersion, die durch Emulsionscopolymerisation von mindestens folgendem erhalten wurde:
(a) Vinylestermonomer(en) und
(b) Comonomer(en), umfassend die Acryl- und/oder Methacrylamid(e)-Derivate, in Gegenwart von mindestens
(c) vollständig hydrolysiertem Polyvinylalkohol (PVOH) mit einem durchschnittlichen Hydrolysegrad von über 95,00 Mol-%,
wobei die Polymerisation keine Comonomere umfasst, die sich von N-Alkylol(meth)-acrylsäureamiden ableiten.

2. Verwendung nach Anspruch 1, wobei die als WATT 91-Wert gemäß DIN EN 14257 gemessene Wärmebeständigkeit mindestens 6 N/mm² beträgt.

3. Verwendung nach Anspruch 1 oder 2, wobei, bezogen auf insgesamt verwendete Monomere, bis zu 99,9 Gew.-%, vorzugsweise 95,0 bis 99,0 Gew.-% Vinylestermonomer(e) (a) polymerisiert sind.

4. Verwendung nach einem der Ansprüche 1 bis 3, wobei die Vinylestermonomer(e) (a) Monomere umfassen, die ausgewählt sind aus Vinylformiat, Vinylacetat (VAC), Vinylpropionat, Vinylbutyrat, Vinylpivalat, Vinylcapronat, Vinylcaprylat, Vinyllaurat, Vinylstearat, Vinyl-2-ethylhexanoat, Dibutylmaleat, Dioctylmaleat, Diisopropylmaleat, Diisopropylfumarat, Vinylversatat (C₉-C₁₃), vorzugsweise Vinylversatat (C₉-C₁₀), oder aus Gemischen davon, insbesondere umfassen die Vinylestermonomer(e) Vinylacetat.

5. Verwendung nach einem der Ansprüche 1 bis 4, wobei, bezogen auf insgesamt verwendete Monomere, bis zu 50,0 Gew.-%, vorzugsweise bis zu 30,0 Gew.-% und stärker bevorzugt 0,1 bis 5,0 Gew.-% Comonomer(e) (b), die insbesondere, bezogen auf insgesamt verwendete Monomere, 0,1 bis 2,5 Gew.-%, vorzugsweise 0,2 bis 1,25 Gew.-% (Meth)acrylsäureamid(e) umfassen, polymerisiert werden.

6. Verwendung nach einem der Ansprüche 1 bis 5, wobei die Comonomer(e) (b), zusätzlich zu (Meth)acrylsäureamid(en), ethylenisch ungesättigte Comonomere umfassen, die aus der Gruppe ausgewählt sind, umfassend Acrylsäure, Methacrylsäure, Fumarsäure, Maleinsäure, Maleinsäureanhydrid, Crotonsäure, Itaconsäure, und ihre jeweiligen Derivate, insbesondere ihre Ester, Acrylnitril, Methacrylnitril, Trimethyl-(3-acrylamido-3-dimethylpropyl)ammoniumchlorid, Acrylamido-2-methacrylamido-2-methylpropansulfonsäure und ihre Alkalimetallsalze, Alkylvinylether, N-Vinylpyrrolidon, Vinylhalogenide, insbesondere Vinylchlorid und Vinylidenchlorid, Vinylsulfonat und seine Alkalimetallsalze, Allylsulfonat und seine Alkalimetallsalze, Ethylen, Propylen, und Gemische davon.

7. Verwendung nach einem der Ansprüche 1 bis 6, wobei, bezogen auf insgesamt verwendete Monomere, weniger als 12 Gew.-%, vorzugsweise 7 bis weniger als 12 Gew.-%, stärker bevorzugt 8 bis 11 Gew.-% von vollständig hydrolysiertem PVOH (c) während der Polymerisation vorhanden sind.

8. Verwendung nach einem der Ansprüche 1 bis 7, wobei der vollständig hydrolysierte PVOH (c) unmodifizierten oder Standard-Polyvinylalkohol (S-PVOH) und/oder modifizierten Polyvinylalkohol (X-PVOH), insbesondere ethylenmodifizierten Polyvinylalkohol (E-PVOH) und/oder acetoacetylmodifizierten Polyvinylalkohol (A-PVOH) umfasst.

9. Verwendung nach einem der Ansprüche 1 bis 8, wobei der vollständig hydrolysierte PVOH (c) einen durchschnittlichen Hydrolysegrad oberhalb von 98,00 Mol-%, vorzugsweise im Bereich von 98,1 bis 99,95 Mol-% aufweist.

10. Verwendung nach einem der Ansprüche 1 bis 9, wobei die Polymerisation keinen teilweisen hydrolysierten PVOH mit einem durchschnittlichen Hydrolysegrad von bis zu 95 Mol-%, vorzugsweise bis zu 98 Mol-% aufweist.

11. Formaldehydfreie wässrige Polymerdispersion, die durch Emulsionscopolymerisation von Vinylestermonomer(en) (a) in Gegenwart von vollständig hydrolysiertem Polyvinylalkohol (PVOH) (c) erhältlich ist, unter Verwendung von Comonomer(en) (b), wobei die Comonomer(e) (b) (Meth)acrylsäureamid(e) umfassen, zum Erhalt einer formaldehydfreien wässrigen Polymerdispersion, die verbesserte Wärmebeständigkeit bereitstellt, gemessen als WATT91-Wert gemäß DIN EN 14257, nach einem der Ansprüche 1 bis 10, umfassend 2 bis weniger als 12 Gew.-%, bezogen auf insgesamt verwendetes Monomer, von vollständig hydrolysiertem Polyvinylalkohol (PVOH) (c),
wobei der vollständig hydrolysierte Polyvinylalkohol (PVOH) einen durchschnittlichen Hydrolysegrad von über 98,00 Mol-% bis zu 99,95 Mol-% aufweist,
wobei die Polymerisation kein Comonomere umfasst, die sich von N-Alkylol(meth)-acrylsäureamiden ableiten,
wobei die Polymerisation keinen teilweise hydrolysierten PVOH mit einem durchschnittlichen Hydrolysegrad von bis zu 95 Mol-% aufweist,
wobei die Polymerdispersion bereitstellt
- eine Wasserbeständigkeit, gemessen als D3/3-Wert, einer Holzleimung gemäß DIN EN204/205 von D3/3 von mindestens 1,5 N/mm²,
- eine Wärmebeständigkeit, gemessen als WATT 91-Wert, einer Holzleimung gemäß DIN EN14257 von 6 N/mm².

12. Wässrige Polymerdispersion nach Anspruch 11, umfassend
(a) bis zu 99,9 Gew.-%, vorzugsweise 95,0 bis 99,0 Gew.-%, bezogen auf insgesamt verwendete Monomere, von Vinylestermonomer(en)
(b) bis zu 50,0 Gew.-%, vorzugsweise bis zu 30,0 Gew.-% und stärker bevorzugt 0,1 bis 5,0 Gew.-% Comonomer(e) (b), insbesondere umfassend, bezogen auf insgesamt verwendete Monomere, 0,1 bis 2,5 Gew.-%, vorzugsweise 0,2 bis 1,25 Gew.-% (Meth)acrylsäureamid(e),
(c) 2 bis weniger als 12 Gew.-%, vorzugsweise 7 bis weniger als 12 Gew.-%, stärker bevorzugt 8 bis 11 Gew.-%, an vollständig hydrolysiertem PVOH, bezogen auf insgesamt verwendetes Monomer,
und gegebenenfalls bis zu weniger als 2 Gew.-%, vorzugsweise 0,1 bis 1,5 Gew.-% an Tensid, bezogen auf insgesamt verwendetes Monomer,
wobei das vollständig hydrolysierte PVOH einen durchschnittlichen Hydrolysegrad im Bereich von 98,00 Mol-% bis zu 99,95 Mol-%, vorzugsweise im Bereich von 98,1 bis 99,9 Mol-%, stärker bevorzugt im Bereich von 98,1 bis 99,1 Mol-% aufweist.

13. Wässrige Polymerdispersion nach Anspruch 11 oder 12, die keinen teilweise hydrolysierten PVOH mit einem Hydrolysegrad von bis zu 98 Mol-% umfasst.

14. Wässrige Polymerdispersion nach einem der Ansprüche 11 bis 13, wobei der vollständig hydrolysierte PVOH (c) eine Mischung ist aus S-PVOH und X-PVOH, insbesondere E-PVOH.

15. Wässrige Polymerdispersion nach Anspruch 14, wobei die Mischung bis zu 100 Gew.-%, von X-PVOH, vorzugsweise bis zu 60 Gew.-% X-PVOH, insbesondere E-PVOH, und am stärksten bevorzugt bis zu 50 Gew.-% X-PVOH, insbesondere E-PVOH, umfasst, bezogen auf insgesamt verwendeten PVOH.

16. Wässrige Polymerdispersion nach einem der Ansprüche 11 bis 15, wobei X-PVOH E-PVOH ist, **gekennzeichnet durch** einen **durch** NMR-Analyse ermittelten Ethylengehalt, von bis zu 12 Mol-%, vorzugsweise 1 bis 7 Mol-% und am stärksten bevorzugt im Bereich von 2 bis 6 Mol-%.

17. Wässrige Polymerdispersion nach einem der Ansprüche 11-16, wobei die wässrige Polymerdispersion einen Feststoffgehalt im Bereich von 30 bis 70 Gew.-%, vorzugsweise im Bereich von 40 bis 60 Gew.-% und insbesondere im Bereich von 45 bis 55 Gew.-% aufweist.

18. Wässrige Polymerdispersion nach einem der Ansprüche 11-17, die weiterhin eine oder mehrere der Komponenten (d) bis (g) umfasst:
(d) bis zu 8 Gewichtsteile, vorzugsweise 1 bis 4 Gewichtsteile und am stärksten bevorzugt 1,5 bis 3 Gewichtsteile eines koaleszierenden Mittels,
(e) bis zu 3 Gewichtsteilen, vorzugsweise 0,2 bis 2 Gewichtsteile, am stärksten bevorzugt 0,5 bis 1,5 Gewichtsteile eines nachträglich zugesetzten, vorzugsweise von dem vollständig hydrolysierten PVOH (c) verschiedenen PVOH,
(f) bis zu 10 Gewichtsteilen, vorzugsweise 0,5 bis 6 Gewichtsteile, am stärksten bevorzugt 1 bis 4 Gewichtsteile eines Viskositätsmodifizierers, und
(g) bis zu 10 Gewichtsteilen, vorzugsweise 1 bis 8 Gewichtsteile, am stärksten bevorzugt 2 bis 6 Gewichtsteile Harnstoff;
wobei die Mengen, bezogen auf 100 Gewichtsteile der wässrigen Polymerdispersion, einen Feststoffgehalt von 30 bis 70 Gew.-%, vorzugsweise von 40 bis 60 Gew.-% und insbesondere von ungefähr 50 Gew.-% aufweisen.

19. Wässrige Polymerdispersion nach Anspruch 18, wobei das koaleszierende Mittel (d) ausgewählt ist aus der Gruppe, umfassend Butylcarbitolacetat, Propylencarbonat, Glycolsäurebutylester, Propylenglycolmonophenylester oder Gemische davon, insbesondere umfasst das koaleszierende Mittel (d) Propylencarbonat.

20. Wässrige Polymerdispersion nach Anspruch 18 oder 19, wobei der PVOH (e) nur aus vollständig hydrolysiertem PVOH mit einem Hydroylsegrad von mindestens 98,00 Mol-% besteht, vorzugsweise umfassend S-PVOH mit einem Polymerisationsgrad DP_{w} oberhalb von 4000.

21. Wässrige Polymerdispersion nach Anspruch 18 oder 19, wobei der nachträglich zugesetzte PVOH (e) X-PVOH, insbesondere E-PVOH, umfasst.

22. Wässrige Polymerdispersion nach einem der Ansprüche 18 bis 21, wobei der nachträglich zugesetzte PVOH (e) eine Mischung von S-PVOH und von X-PVOH und insbesondere E-PVOH umfasst, wobei die Mischung von dem vollständig hydrolysierten PVOH (c) verschieden ist und wobei der Polymerisationsgrad DP_{w} von irgendeiner der PVOH (e)- und (c)-Komponenten gegebenenfalls oberhalb von 2000 liegt.

23. Wässrige Polymerdispersion nach einem der Ansprüche 18 bis 22, wobei der Viskositätsmodifizierer (f) aus der Gruppe ausgewählt ist, umfassend ein- oder mehrwertige Alkohole, Trimethylolpropan, Ditrimethylolpropan, Triethanolpropan; 3-Methyl-1,5-pentandiol, Pentaerythrit, Dipentaerythrit, 3-Methyl-3-methoxybutanol; 2,5-Dimethylhexindiol; Triethanolamin, Diethanolamin, Glycolether, oder Gemische davon.

24. Wässrige Polymerdispersion nach einem der Ansprüche 18 bis 23, umfassend 100 Gewichtsteile einer wässrigen Dispersion von 40 bis 60 Gew.-% Feststoffgehalt der Komponenten (a) bis (c):
(a) 95,0 bis 99,0 Gew.-% nur an Vinylacetat, bezogen auf insgesamt verwendete Monomere,
(b) 0,1 bis 5,0 Gew.-% an Comonomer(en), insbesondere umfassend, bezogen auf insgesamt verwendete Monomere, von 0,1 bis 2,5 Gew.-%, vorzugsweise 0,2 bis 1,25 Gew.-%, stärker bevorzugt von 0,2 bis 0,8 Gew.-% und insbesondere 0,3 bis 0,7 Gew.-% Acrylamid,
(c) mehr als 8 bis weniger als 11 Gew.-%, bezogen auf insgesamt verwendete Monomere, an vollständig hydrolysiertem PVOH, einschließlich 10 bis 60 Gew.-%, bezogen auf insgesamt verwendetes PVOH (c), von E-PVOH,
wobei der E-PVOH, wie bestimmt durch NMR-Analyse, einen Ethylengehalt im Bereich von 2 bis 6 Mol-% besitzt,
wobei der vollständig hydrolysierte PVOH einen durchschnittlichen Hydrolysegrad im Bereich von 98,1 bis 99,9 Mol-%, vorzugsweise im Bereich von 98,1 bis 99,1 Mol-% aufweist, und wobei der Gewichtsmittel-Polymerisationsgrad DP_{w} von einem vollständig hydrolysierten PVOH (c) im Bereich von 500 bis 4000 liegt,
wobei die wässrige Dispersion weiterhin eine oder mehrere der Komponenten (d) bis (g) umfasst;
bis zu 3 Gewichtsteile eines koaleszierenden Mittels (d),
bis zu 2 Gewichtsteile PVOH (e), vorzugsweise verschieden von dem PVOH (c),
bis zu 5 Gewichtsteile eines Viskositätsmodifizierers (f), und
bis zu 10 Gewichtsteile Harnstoff (g).

25. Wässrige Polymerdispersion nach einem der Ansprüche 18 bis 24, wobei die wässrige Polymerdispersion einen pH-Wert oberhalb von 3,5, vorzugsweise oberhalb von 4,0, stärker bevorzugt im Bereich von 4,1 bis 9,0 und am stärksten bevorzugt im Bereich von 4,1 bis 5,4 aufweist.

26. Bindemittelformulierung, umfassend eine wässrige Polymerdispersion nach einem der Ansprüche 11 bis 25.

27. Bindemittelformulierung nach Anspruch 26, umfassend mindestens eine weitere und verschiedene Polymerdispersion, die durch Emulsionscopolymerisation von Vinylester und Ethylen in Gegenwart von PVOH erhältlich ist.

28. Bindemittelformulierung nach Anspruch 26 oder 27, die eine Wasserbeständigkeit einer Holzleimung, gemessen als D3/3-Wert gemäß DIN EN 204/205 von D3/3 von mindestens 1,5 N/mm², vorzugsweise von mindestens 2 N/mm² aufweist.

29. Verfahren zur Bereitstellung einer wässrigen Polymerdispersion nach einem der Ansprüche 11 bis 25, die folgendes bereitstellt:
- eine Wasserbeständigkeit, gemessen als D3/3-Wert, einer Holzleimung gemäß DIN EN204/205 von D3/3 von mindestens 1,5 N/mm²,
- eine Wärmebeständigkeit, gemessen als WATT 91-Wert einer Holzleimung gemäß DIN EN 14257 von mindestens 6 N/mm²,
wobei das Verfahren die Emulsionscopolymerisation von Folgendem umfasst:
(a) Vinylestermonomere(e)
(b) Comonomer(e), umfassend (Meth)acrylsäureamid(e),
(c) 2 bis weniger als 12 Gew.-% an vollständig hydrolysiertem Polyvinylalkohol
(PVOH), bezogen auf insgesamt verwendetes Monomer,
wobei der vollständig hydrolysierte Polyvinylalkohol (PVOH) einen durchschnittlichen Hydrolysegrad von über 98,00 Mol-% bis zu 99,95 Mol-% aufweist,
wobei die Polymerisation kein Comonomere umfasst, die sich von N-Alkylol(meth)-acrylsäureamid ableiten,
wobei an der Polymerisation kein teilweise hydrolysierter PVOH mit einem durchschnittlichen Hydrolysegrad von bis zu 95 Mol-% beteiligt ist.

30. Verfahren nach Anspruch 29, wobei die Polymerisation in Gegenwart von folgendem durchgeführt wird:
(h) mindestens einem Oxidationsmittel, wie aus der Gruppe von Peroxiden, die vorzugsweise Wasserstoffperoxid umfasst, ausgewählt; und
(i) mindestens einem Reduktionsmittel, wie aus der Gruppe von Weinsäure, Ascorbinsäure, Ameisensäure, Natriumerythorbat oder Gemischen davon ausgewählt.

31. Verfahren nach Anspruch 29 oder 30, umfassend die Verfahrensschritte (P1) Initiationsstart, (P2) Monomerverzögerung und (P3) Abschließen der Umwandlung, wobei
(P1) die Polymerisation bei einem pH im Bereich von 3 bis 8, vorzugsweise im Bereich von 3,2 bis 6, stärker bevorzugt im Bereich von 3,5 bis 5 und am stärksten bevorzugt im Bereich von 3,6 bis 4,5, gegebenenfalls bei einer Temperatur von weniger als 65 °C gestartet wird,
(P2) die Polymerisation um mindestens eine Monomerverzögerung, gegebenenfalls um eine Verzögerung von PVOH (c), bei einer Temperatur oberhalb von 65 °C, vorzugsweise in einem Temperaturbereich von 70 bis 95 °C, stärker bevorzugt in einem Temperaturbereich von 80 bis 95 °C fortgesetzt wird, in welchem Schritt der pH in dem Bereich von 3 bis 8, vorzugsweise in dem Bereich von 3,2 bis 6, und am stärksten bevorzugt in dem Bereich von 3,2 bis 5,5 gehalten wird,
(P3) die Polymerisation durch mindestens eine Oxidationsmittelverzögerung bei einer Temperatur oberhalb von 70 °C, vorzugsweise oberhalb von 80 °C, abgeschlossen wird.

32. Verfahren nach Anspruch 31, umfassend den zusätzlichen Schritt
(P4), nachträgliche Polymerisation, um das Restmonomer auf ein Niveau unterhalb von 0,1 Gew.-%, bezogen auf die wässrige Dispersion insgesamt, durch Zugabe eines weiteren Oxidationsmittels (j) zu verringern, das vorzugsweise von dem Oxidationsmittel (h) verschieden ist, insbesondere t-Butylhydroperoxid, und eines weiteren Reduktionsmittels (k), insbesondere Ascorbinsäure oder Natriumerythorbat.

33. Verfahren nach einem der Ansprüche 29 bis 32, wobei
- bis zu 100 Gew.-% des PVOH (c),
- nicht mehr als 50 Gew.-% des(der) Vinylestermonomers(en) (a), vorzugsweise nicht mehr als 20 Gew.-%, und am stärksten bevorzugt weniger als 10 Gew.-% des (der) Vinylestermonmers(en) in dem Reaktor zu Beginn vorgelegt werden,
- nicht mehr als 50 Gew.-% des (der) Comonomers(en) (b), vorzugsweise nicht mehr als 20 Gew.-%, stärker bevorzugt weniger als 10 Gew.-% und am stärksten bevorzugt nichts von dem (den) Comonomer(en) in dem Reaktor zu Beginn vorgelegt werden.

34. Verfahren nach einem der Ansprüche 30 bis 33, wobei
- mindestens 50 Gew.-%, vorzugsweise 100 Gew.-% des Reduktionsmittels (i) in dem Reaktor zu Beginn vorgelegt werden, und/oder
- bis zu 100 Gew.-%, vorzugsweise 90 bis 100 Gew.-%, am stärksten bevorzugt 100 Gew.-% Oxidationsmittel (h) dem Reaktor verzögert zugesetzt werden.

35. Verfahren nach einem der Ansprüche 30 bis 34, umfassend
- Wasserstoffperoxid als das Oxidationsmittel (h),
- Weinsäure als das Reduktionsmittel (i1) und gegebenenfalls Ascorbinsäure oder Natriumerythorbat als das Reduktionsmittel (i2),
wobei das gesamte Reduktionsmittel (i1) in dem Reaktor zu Beginn vorgelegt wird und das Reduktionsmittel (i2) ausgehend von jeder Zeit zwischen dem Reaktionsstart durch Oxidationsmittel (h)-Zugabe und dem Ende der Oxidationsmittel (h)-Zugabe verzögert wird,
wobei das gesamte Oxidationsmittel (h) kontinuierlich zugeführt wird, ohne eine initiale Einspritzung davon, bis die Reaktion bis zur fast vollständigen Umwandlung in Verfahrensschritt (P3) vorangetrieben wird.

36. Verfahren nach einem der Ansprüche 30 bis 35, wobei das Molverhältnis von Reduktionsmittel (i) zu Oxidationsmittel (h) im Bereich von 0,10 bis 0,80, vorzugsweise von 0,12 bis 0,48 liegt.

37. Verfahren nach einem der Ansprüche 30 bis 36, wobei die Molmenge von insgesamt verwendetem Oxidationsmittel (h) im Bereich von 0,25 bis 1,20 Mol-%, vorzugsweise von 0,25 bis 0,80 Mol-%, am stärksten bevorzugt von 0,30 bis 0,80 Mol-%, bezogen auf die Molmenge insgesamt von Vinylestermonomer(en) (a), liegt.

38. Verfahren nach einem der Ansprüche 29 bis 37, umfassend einen anschließenden Schritt (P5) der Zugabe, nachdem der nachträgliche Polymerisationsschritt (P4) abgeschlossen ist, oder beginnend, nachdem die Verzögerung(en) von Monomer (P3) abgeschlossen ist (sind), von einem oder mehreren von PVOH (e), koaleszierendem Mittel (d), Viskositätsmodifizierer (f) und von Harnstoff (g).

39. Verfahren nach einem der Ansprüche 29 bis 38, umfassend Polymerisationsschritte (P1) bis (P3) in Gegenwart von mindestens den folgenden Komponenten:
(a) 95,0 bis 99,9 Gew.-% nur von Vinylacetat, bezogen auf insgesamt verwendete Monomere,
(b) 0,1 bis 5,0 Gew.-% von Comonomer(en), insbesondere umfassend von 0,1 bis 2,5 Gew.-%, vorzugsweise 0,2 bis 1,25 Gew.-%, stärker bevorzugt 0,2 bis 0,8 Gew.-%, und insbesondere 0,3 bis 0,7 Gew.-% Acrylamid, bezogen auf insgesamt verwendete Monomere,
(c) mehr als 8 bis weniger als 11 Gew.-%, bezogen auf insgesamt verwendete Monomere von vollständig hydrolysiertem PVOH, einschließlich 10 bis 60 Gew.-%, bezogen auf insgesamt verwendetes PVOH (c), von E-PVOH,
wobei das E-PVOH, wie bestimmt durch NMR-Analyse, einen Ethylengehalt im Bereich von 2 bis 6 Mol-% aufweist,
wobei der vollständig hydrolysierte PVOH einen durchschnittlichen Hydrolysegrad im Bereich von 98,1 bis 99,9 Mol-%, vorzugsweise im Bereich von 98,1 bis 99,1 Mol-% aufweist, und wobei der Gewichtsmittel-Polymerisationsgrad DP_{w} von einem der vollständig hydrolysierten PVOH (c) im Bereich von 500 bis 4000 liegt, gegebenenfalls weniger als 2 Gew.-%, vorzugsweise 0,1 bis 1,5 Gew.-%, bezogen auf insgesamt verwendete Monomere, an Tensid,
(h) Oxidationsmittel, umfassend Peroxid, vorzugsweise Wasserstoffperoxid,
(i) Reduktionsmittel, umfassend Weinsäure, Ascorbinsäure, Natriumerythorbat, oder Gemische davon;
und einen nachträglichen Polymerisationsschritt (P4) in Gegenwart von mindestens den folgenden Komponenten:
(j) t-Butylhydroperoxid,
(k) Ascorbinsäure und/oder Natriumerythorbat,
wobei die Polymerisationschritte (P1) bis (P4) bei Temperaturen im Bereich von 45 bis 95 °C bei einem Ausgangs-pH im Bereich von 3,2 bis 5,5 und bei einem pH während des Verlaufs der Polymerisation (P2) und (P3) im Bereich von 3,2 bis 5,5 durchgeführt werden, und wobei kein Formaldehyd oder Formaldehyd-freisetzende Verbindungen zugesetzt werden.

40. Verfahren nach Anspruch 39, umfassend einen zusätzlichen Schritt (P5) der Zugabe, nachdem die nachträgliche Polymerisation (P4) abgeschlossen ist, oder beginnend nachdem die Verzögerung(en) von Monomer (P3) abgeschlossen ist (sind), von einer oder mehreren der folgenden Komponenten:
(d) ein oder mehrere koaleszierende Mittel, insbesondere Butylcarbitolacetat und/oder Propylencarbonat, oder eine Mischung von beiden,
(e) PVOH, der insbesondere E-PVOH umfasst,
(f) Viskositätsmodifizierer,
(g) Harnstoff.

41. Verwendung nach einem der Ansprüche 1 bis 10, oder der wässrigen Polymerdispersion nach einem der Ansprüche 11 bis 25 oder erhältlich durch das Verfahren nach einem der Ansprüche 29 bis 40, oder der Bindemittelformulierung nach einem der Ansprüche 26 bis 28 zur Verbesserung der Wärmbeständigkeit, gemessen als WATT 91-Wert gemäß DIN EN 14257, bei einer oder mehreren der folgenden Anwendungen:
a) Verleimen von porösen oder halb porösen Substraten miteinander oder mit anderen Substraten, wobei die porösen oder halb porösen Substrate die Gruppe umfassen, bestehend aus Holz, Papier, Pappe, Wellpappe, geschäumtem Kunststoff, Leder und Textil;
b) als einkomponentiger Holzbearbeitungsklebstoff oder Holzleim der Wasserbeständigkeitsklasse D3 gemäß DIN EN 204/205;
c) in Holzleimen für Furnierlaminierung;
d) umfassend Plastifizierer in Papier- und Verpackungsklebstoffen;
e) in Klebstoffen für Parkett- oder anderen Boden-, Wand- oder Deckenbelag;
f) in Bindemitteln für Teppiche;
g) in Bindemitteln, die für Holzfaserplatten, Lederfasermaterial, Glas- und Mineralfasermaterialien verwendet werden;
h) in Bindemitteln für aus Papier-, Kunststoff-, Glas- oder Mineralfasern hergestellte Isoliermaterialien;
i) in Bindemitteln für Zement und Gips;
j) in Bindemitteln für Textilmaterial und Vliese oder in Textilappretur.

## Revendications

1. Utilisation d'amide(s) d'acide (méth)acrylique comme comonomère(s) (b) pour fournir une résistance à la chaleur améliorée, à savoir plus grande, mesurée comme la valeur WATT 91 selon la norme DIN EN 14257, par comparaison à la résistance à la chaleur obtenue sans utiliser de dérivés d'amide(s) acrylique et/ou méthacrylique (b).
par une dispersion de polymère aqueuse dépourvue de formaldéhyde obtenue par copolymérisation par émulsion d'au moins
(a) un (des) monomère(s) d'ester de vinyle et
(b) un (des) comonomère(s) comprenant lesdits dérivés d'amide(s) acrylique et/ou méthacrylique en présence d'au moins
(c) un alcool polyvinylique entièrement hydrolysé (PVOH), ayant un degré moyen d'hydrolyse supérieur à 95,00 % en mole,
dans laquelle la polymérisation ne comprend pas de comonomères dérivés d'amides d'acide N-alkylol(méth)acrylique.

2. Utilisation selon la revendication 1, dans laquelle la résistance à la chaleur mesurée comme la valeur WATT 91 selon la norme DIN EN 14257 est d'au moins 6 N/mm².

3. Utilisation selon la revendication 1 ou 2, dans laquelle, sur la base du total des monomères utilisés, jusqu'à 99,9 % en poids, de préférence 95,0 à 99,0 % en poids d'un (de) monomère(s) d'ester de vinyle (a) sont polymérisés.

4. Utilisation selon l'une quelconque des revendications 1 à 3, dans laquelle le (les) monomère(s) d'ester de vinyle (a) comprend(nnent) des monomères choisis dans le groupe consistant en le formiate de vinyle, l'acétate de vinyle (VAC), le propionate de vinyle, le butyrate de vinyle, le pivalate de vinyle, le capronate de vinyle, le caprylate de vinyle, le laurate de vinyle, le stéarate de vinyle, le 2-éthyl-hexanoate de vinyle, le maléate de dibutyle, le maléate de dioctyle, le maléate de diisopropyle, le fumarate de diisopropyle, le versatate de vinyle (en C₉₋₁₃), de préférence le versatate de vinyle (en C₉₋₁₀), ou leurs mélanges, en particulier le (les) monomère(s) d'ester de vinyle comprend(nnent) l'acétate de vinyle.

5. Utilisation selon l'une quelconque des revendications 1 à 4, dans laquelle, sur la base du total des monomères utilisés, jusqu'à 50,0 % en poids, de préférence jusqu'à 30,0 % en poids, et de manière davantage préférée de 0,1 à 5,0 % en poids d'un (de) comonomère(s) (b), en particulier comprenant, sur la base du total des monomères utilisés, de 0,1 à 2,5 % en poids, de préférence de 0,2 à 1,25 % en poids, d'amide(s) d'acide (méth)acrylique, sont polymérisés.

6. Utilisation selon l'une quelconque des revendications 1 à 5, dans laquelle le (les) comonomère(s) (b) en plus de l'amide (des amides) d'acide (méth)acrylique comprend(nnent) des comonomères éthyléniquement insaturés choisis dans le groupe comprenant l'acide acrylique, l'acide méthacrylique, l'acide fumarique, l'acide maléique, l'anhydride d'acide maléique, l'acide crotonique, l'acide itaconique, et leurs dérivés respectifs, en particulier leurs esters, l'acrylonitrile, le méthacrylonitrile, le chlorure de triméthyl(3-acrylamido-3-diméthylpropyl)ammonium, l'acide acrylamido-2-méthacrylamido-2-méthylpropanesulfonique et son sel de métal alcalin, les alkyl vinyl éthers, la N-vinylpyrrolidone, les halogénures de vinyle, en particulier le chlorure de vinyle et le chlorure de vinylidène, le sulfonate de vinyle et ses sels de métal alcalin, le sulfonate d'allyle et ses sels de métal alcalin, l'éthylène, le propylène et leurs mélanges.

7. Utilisation selon l'une quelconque des revendications 1 à 6, dans laquelle, sur la base du total des monomères utilisés, moins de 12 % en poids, de préférence de 7 à moins de 12 % en poids, de manière davantage préférée de 8 à 11 % en poids, du PVOH entièrement hydrolysé (c) sont présents pendant la polymérisation.

8. Utilisation selon l'une quelconque des revendications 1 à 7, dans laquelle le PVOH entièrement hydrolysé (c) comprend un alcool polyvinylique non modifié ou standard (S-PVOH) et/ou un alcool polyvinylique modifié (X-PVOH), en particulier l'alcool polyvinylique modifié par éthylène (E-PVOH) et/ou l'alcool polyvinylique modifié par acétoacétyle (A-PVOH).

9. Utilisation selon l'une quelconque des revendications 1 à 8, dans laquelle le PVOH entièrement hydrolysé (c) a un degré moyen d'hydrolyse supérieur à 98,00 % en mole, de préférence dans la plage de 98,1 à 99,95 % en mole.

10. Utilisation selon l'une quelconque des revendications 1 à 9, dans laquelle la polymérisation n'implique pas un PVOH partiellement hydrolysé ayant un degré moyen d'hydrolyse jusqu'à 95 % en mole, de préférence jusqu'à 98 % en mole.

11. Dispersion de polymère aqueuse dépourvue de formaldéhyde pouvant être obtenue par copolymérisation par émulsion d'un (de) monomère(s) d'ester de vinyle (a) en présence d'un alcool polyvinylique entièrement hydrolysé (PVOH) (c) en utilisant un (des) comonomère(s) (b), le (les) comonomère(s) (b) comprenant un (des) amide(s) d'acide (méth)acrylique pour obtenir une dispersion de polymère aqueuse dépourvue de formaldéhyde fournissant une résistance à la chaleur améliorée, mesurée comme la valeur WATT 91 selon la norme DIN EN 14257 conformément à l'une quelconque des revendications 1 à 10, comprenant
2 à moins de 12 % en poids, sur la base du total des monomères utilisés, d'un alcool polyvinylique entièrement hydrolysé (PVOH) (c),
où le PVOH entièrement hydrolysé a un degré moyen d'hydrolyse supérieur à 98,00 % en mole jusqu'à 99,95 % en mole,
où la polymérisation ne comprend pas de comonomères dérivés d'amides d'acide N-alkylol(méth)acrylique,
où la polymérisation n'implique pas de PVOH partiellement hydrolysé ayant un degré moyen d'hydrolyse jusqu'à 95 % en mole,
la dispersion de polymère fournissant
- une résistance à l'eau, mesurée comme la valeur D3/3 d'une liaison bois selon la norme DIN EN 204/205 de D3/3 d'au moins 1,5 N/mm²,
- une résistance à la chaleur mesurée comme la valeur WATT 91 d'une liaison bois selon la norme DIN EN 14257 d'au moins 6 N/mm².

12. Dispersion de polymère aqueuse selon la revendication 11, comprenant
(a) jusqu'à 99,9 % en poids, de préférence de 95,0 à 99,0 % en poids, sur la base du total des monomères utilisés d'un (de) monomère(s) d'ester de vinyle,
(b) jusqu'à 50,0 % en poids, de préférence jusqu'à 30,0 % en poids, et de manière davantage préférée de 0,1 à 5,0 % en poids du (des) comonomère(s) (b), en particulier comprenant, sur la base du total des monomères utilisés, de 0,1 à 2,5 % en poids, de préférence de 0,2 à 1,25 % en poids, d'amide(s) d'acide (méth)acrylique,
(c) 2 à moins de 12 % en poids, de préférence 7 à moins de 12 % en poids, de manière davantage préférée 8 à 11 % en poids, sur la base du total des monomères utilisés, du PVOH entièrement hydrolysé,
et facultativement jusqu'à moins de 2 % en poids, de préférence de 0,1 à 1,5 % en poids sur la base du total des monomères d'agent tensioactif utilisés,
où le PVOH entièrement hydrolysé a un degré moyen d'hydrolyse dans la plage de 98,00 % en mole jusqu'à 99,95 % en mole, de préférence dans la plage de 98,1 à 99,9 % en mole, de manière davantage préférée dans la plage de 98,1 à 99,1 % en mole.

13. Dispersion de polymère aqueuse selon la revendication 11 ou 12, ne comprenant aucun PVOH partiellement hydrolysé ayant un degré d'hydrolyse jusqu'à 98 % en mole.

14. Dispersion de polymère aqueuse selon l'une quelconque des revendications 11 à 13, dans laquelle le PVOH entièrement hydrolysé (c) est un mélange de S-PVOH et de X-PVOH, en particulier E-PVOH.

15. Dispersion de polymère aqueuse selon la revendication 14, dans laquelle le mélange comprend jusqu'à 100 % en poids, sur la base du PVOH, de X-PVOH totalement utilisé, en particulier E-PVOH, de préférence jusqu'à 60 % en poids de X-PVOH, en particulier E-PVOH, et de manière préférée entre toutes, jusqu'à 50 % en poids de X-PVOH, en particulier E-PVOH.

16. Dispersion de polymère aqueuse selon l'une quelconque des revendications 11 à 15, dans laquelle X-PVOH est E-PVOH, **caractérisée par** une teneur en éthylène, telle qu'établie par analyse RMN, jusqu'à 12 % en mole, de préférence de 1 à 7 % en mole, et de manière préférée entre toutes, dans la plage de 2 à 6 % en mole.

17. Dispersion de polymère aqueuse selon l'une quelconque des revendications 11 à 16, dans laquelle la dispersion de polymère aqueuse a une teneur en matière sèche dans la plage de 30 à 70 % en poids, de préférence dans la plage de 40 à 60 % en poids, et en particulier dans la plage de 45 à 55 % en poids.

18. Dispersion de polymère aqueuse selon l'une quelconque des revendications 11 à 17, comprenant en outre un ou plusieurs des composants (d) à (g) :
(d) jusqu'à 8 parties en poids, de préférence de 1 à 4 parties en poids, et de manière préférée entre toutes, de 1,5 à 3 parties en poids d'un agent coalescent,
(e) jusqu'à 3 parties en poids, de préférence de 0,2 à 2 parties en poids, de manière préférée entre toutes de 0,5 à 1,5 partie en poids d'un PVOH ajouté ultérieurement, de préférence différent du PVOH entièrement hydrolysé (c),
(f) jusqu'à 10 parties en poids, de préférence de 0,5 à 6 parties en poids, de manière préférée entre toutes de 1 à 4 parties en poids d'un modificateur de viscosité, et
(g) jusqu'à 10 parties en poids, de préférence de 1 à 8 parties en poids, de manière préférée entre toutes de 2 à 6 parties en poids d'urée ;
les quantités étant basées sur 100 parties en poids de la dispersion de polymère aqueuse ayant une teneur en matière sèche de 30 à 70 % en poids, de préférence de 40 à 60 % en poids, en particulier d'approximativement 50 % en poids.

19. Dispersion de polymère aqueuse selon la revendication 18, dans laquelle l'agent coalescent (d) est choisi dans le groupe comprenant l'acétate de butyl carbitol, le carbonate de propylène, l'ester de butyl d'acide glycolique, l'ester de monophényl de propylène glycol, ou leurs mélanges, en particulier l'agent coalescent (d) comprend le carbonate de propylène.

20. Dispersion de polymère aqueuse selon la revendication 18 ou 19, dans laquelle le PVOH (e) consiste seulement en le PVOH entièrement hydrolysé ayant un degré d'hydrolyse d'au moins 98,00 % en mole, de préférence comprenant S-PVOH ayant un degré de polymérisation DP_{w} supérieur à 4 000.

21. Dispersion de polymère aqueuse selon la revendication 18 ou 19, dans laquelle le PVOH ultérieurement ajouté (e) comprend X-PVOH, en particulier E-PVOH.

22. Dispersion de polymère aqueuse selon l'une quelconque des revendications 18 à 21, dans laquelle le PVOH (e) ajouté ultérieurement comprend un mélange de S-PVOH et de X-PVOH, en particulier E-PVOH, où le mélange est différent du PVOH entièrement hydrolysé (c) et où le degré de polymérisation DP_{w} de l'un quelconque des composants PVOH (e) et (c) facultativement est supérieur à 2000.

23. Dispersion de polymère aqueuse selon l'une quelconque des revendications 18 à 22, dans laquelle le modificateur de viscosité (f) est choisi dans le groupe comprenant les alcools mono ou polyvalents, le triméthylolpropane, le di-triméthylolpropane, le triéthanol propane, le 3-méthyl-1,5-pentanediol, le pentaérythritol, le di-pentaérythritol, le 3-méthyl-3-méthoxy-butanol, le 2,5-diméthyl hexyne diol, la triéthanolamine, la diéthanolamine, les glycols éthers ou leurs mélanges.

24. Dispersion de polymère aqueuse selon l'une quelconque des revendications 18 à 23, comprenant 100 parties en poids d'une dispersion de polymère aqueuse de 40 à 60 % en poids de teneur en matière sèche des composants (a) à (c) :
(a) 95,0 à 99,9 % en poids, sur la base du total des monomères utilisés, seulement d'acétate de vinyle,
(b) 0,1 à 5,0 % en poids de comonomère(s), en particulier comprenant, sur la base du total des monomères utilisés, de 0,1 à 2,5 % en poids, de préférence de 0,2 à 1,25 % en poids, de manière davantage préférée de 0,2 à 0,8 % en poids, et en particulier de 0,3 à 0,7 % en poids d'acrylamide,
(c) plus de 8 à moins de 11 % en poids sur la base du total des monomères utilisés de PVOH entièrement hydrolysé, comprenant 10 à 60 % en poids de E-PVOH, sur la base du total du PVOH utilisé (c),
où le E-PVOH, comme déterminé par analyse RMN, a une teneur en éthylène dans la plage de 2 à 6 % en mole,
où le PVOH entièrement hydrolysé a un degré moyen d'hydrolyse dans la plage de 98,1 à 99,9 % en mole, de préférence dans la plage de 98,1 à 99,1 % en mole,
et où le degré moyen de polymérisation en poids DP_{w} de l'un quelconque des PVOH entièrement hydrolysés (c) est dans la plage de 500 à 4 000,
la dispersion de polymère aqueuse comprenant en outre un ou plusieurs des composants (d) à (g) :
jusqu'à 3 parties en poids d'un agent coalescent (d),
jusqu'à 2 parties en poids de PVOH (e), de préférence différent du PVOH (c),
jusqu'à 5 parties en poids d'un modificateur de viscosité (f), et
jusqu'à 10 parties en poids d'urée (g).

25. Dispersion de polymère aqueuse selon l'une quelconque des revendications 18 à 24, dans laquelle la dispersion de polymère aqueuse a une valeur pH supérieure à 3,5, de préférence supérieure à 4,0, de manière davantage préférée dans la plage de 4,1 à 9,0, et de manière particulièrement préférée dans la plage de 4,1 à 5,4.

26. Formulation de liant, comprenant une dispersion de polymère aqueuse selon l'une quelconque des revendications 11 à 25.

27. Formulation de liant selon la revendication 26, comprenant au moins une dispersion de polymère supplémentaire et différente pouvant être obtenue par copolymérisation par émulsion d'ester de vinyle et d'éthylène en présence de PVOH.

28. Formulation de liant selon la revendication 26 ou 27, fournissant une résistance à l'eau d'une liaison bois mesurée comme la valeur D3/3 selon la norme DIN EN 204/205 de D3/3 d'au moins 1,5 N/mm², de préférence d'au moins 2 N/mm².

29. Procédé de fourniture d'une dispersion de polymère aqueuse selon l'une quelconque des revendications 11 à 25, fournissant
- une résistance à l'eau mesurée comme la valeur D3/3 d'une liaison bois selon la norme DIN EN 204/205 de D3/3 d'au moins 1,5 N/mm²,
- une résistance à la chaleur mesurée comme la valeur WATT 91 d'une liaison bois selon la norme DIN EN 14257 d'au moins 6 N/mm²,
le procédé comprenant la copolymérisation par émulsion de :
(a) monomère(s) d'ester de vinyle,
(b) comonomère(s), comprenant un (des) amide(s) d'acide (méth)acrylique,
(c) 2 à moins de 12 % en poids, sur la base du total des monomères utilisés, d'alcool polyvinylique entièrement hydrolysé (PVOH),
dans lequel le PVOH entièrement hydrolysé a un degré moyen d'hydrolyse supérieur à 98,00 % en mole jusqu'à 99,95 % en mole,
dans lequel la polymérisation ne comprend pas de comonomères dérivés d'amide d'acide N-alkylol(méth)acrylique,
dans lequel la polymérisation n'implique pas de PVOH partiellement hydrolysé ayant un degré moyen d'hydrolyse jusqu'à 95 % en mole.

30. Procédé selon la revendication 29, dans lequel la polymérisation est effectuée en présence de :
(h) au moins un agent oxydant tel que choisi dans le groupe de peroxydes, de préférence comprenant le peroxyde d'hydrogène, et
(i) au moins un agent réducteur tel que choisi dans le groupe constitué de l'acide tartrique, de l'acide ascorbique, de l'acide formique, de l'érythorbate de sodium, ou leurs mélanges.

31. Procédé selon la revendication 29 ou 30, comprenant les étapes de traitement (P1) démarrage d'initiation, (P2) addition retardée de monomère et (P3) achèvement de conversion, où
(P1) la polymérisation est démarrée à un pH dans la plage de 3 à 8, de préférence dans la plage de 3,2 à 6, de manière davantage préférée dans la plage de 3,5 à 5, et de manière préférée entre toutes dans la plage de 3,6 à 4,5, facultativement à une température inférieure à 65 °C,
(P2) la polymérisation est poursuivie par au moins une addition retardée de monomère, facultativement par une addition retardée de PVOH (c) à une température supérieure à 65 °C, de préférence dans une plage de température de 70 à 95 °C, de manière davantage préférée dans une plage de température de 80 à 95 °C, étape au cours de laquelle le pH est maintenu dans la plage de 3 à 8, de préférence dans la plage de 3,2 à 6, et de manière préférée entre toutes dans la plage de 3,2 à 5,5,
(P3) la polymérisation est finie par au moins une addition retardée d'oxydant à une température supérieure à 70 °C, de préférence supérieure à 80 °C.

32. Procédé selon la revendication 31, comprenant une étape supplémentaire de
(P4) post-polymérisation pour réduire le monomère résiduel à un niveau inférieur à 0,1 % en poids sur la base du total de la dispersion de monomère aqueuse, en ajoutant un oxydant supplémentaire (j), de préférence différent de l'oxydant (h), en particulier l'hydrogéno peroxyde de t-butyle, et un agent réducteur supplémentaire (k), en particulier l'acide ascorbique ou l'érythorbate de sodium.

33. Procédé selon l'une quelconque des revendications 29 à 32, dans lequel
- jusqu'à 100 % en poids du PVOH (c),
- pas plus de 50 % en poids du (des) monomère(s) d'ester de vinyle (a), de préférence pas plus de 20 % en poids, et de manière préférée entre toutes moins de 10 % en poids du (des) monomère(s) d'ester de vinyle sont initialement chargés dans le réacteur,
- pas plus de 50 % en poids du (des) comonomère(s) (b), de préférence pas plus de 20 % en poids, de manière davantage préférée moins de 10 % en poids, et de manière préférée entre toutes aucun du (des) comonomère(s) n'est (ne sont) initialement chargé(s) dans le réacteur.

34. Procédé selon l'une quelconque des revendications 30 à 33, dans lequel
- au moins 50 % en poids, de préférence 100 % en poids, de l'agent réducteur (i), sont initialement chargés dans le réacteur, et/ou
- jusqu'à 100 % en poids, de préférence de 90 à 100 % en poids, de manière préférée entre toutes 100 % en poids de l'oxydant (h) sont ajouté de manière retardée vers le réacteur.

35. Procédé selon l'une quelconque des revendications 30 à 34, comprenant
- du peroxyde d'hydrogène comme oxydant (h),
- de l'acide tartrique comme agent réducteur (i1) et facultativement de l'acide ascorbique ou de l'érythorbate de sodium comme agent réducteur (i2),
dans lequel la totalité de l'agent réducteur (i1) est initialement chargée dans le réacteur et l'agent réducteur (i2) est ajouté de manière retardée en commençant à un moment quelconque entre la réaction démarrée par l'addition d'oxydant (h) et la fin de l'addition d'oxydant (h),
dans lequel la totalité de l'oxydant (h) est délivrée en continu, sans aucune charge initiale de celui-ci, jusqu'à ce que la réaction soit conduite pour achever pratiquement la conversion dans l'étape de traitement (P3).

36. Procédé selon l'une quelconque des revendications 30 à 35, dans lequel le rapport molaire de l'agent réducteur (i) par rapport à l'agent oxydant (h) est dans la plage de 0,10 à 0,80, de préférence de 0,12 à 0,48.

37. Procédé selon l'une quelconque des revendications 30 à 36, dans lequel la quantité molaire d'agent oxydant totalement utilisé (h) est dans la plage de 0,25 à 1,20 % en mole, de préférence de 0,25 à 0,80 % en mole, de manière préférée entre toutes de 0,30 à 0,80 % en mole, sur la base de la quantité molaire du total totale de monomère(s) d'ester de vinyle (a).

38. Procédé selon l'une quelconque des revendications 29 à 37, comprenant une étape ultérieure (P5) d'ajout après que l'étape de post-polymérisation (P4) est finie, ou de démarrage après que la (les) addition(s) retardée(s) du monomère (P3) est (sont) fini(s), d'un ou plusieurs du PVOH (e), de l'agent coalescent (d), du modificateur de viscosité (f) et de l'urée (g).

39. Procédé selon l'une quelconque des revendications 29 à 38, comprenant les étapes de polymérisation (P1) à (P3) en présence d'au moins les composants suivants :
(a) 95,0 à 99,9 % en poids, sur la base du total des monomères utilisés, seulement d'acétate de vinyle,
(b) 0,1 à 5,0 % en poids de comonomère(s), en particulier comprenant, sur la base du total des monomères utilisés, de 0,1 à 2,5 % en poids, de préférence de 0,2 à 1,25 % en poids, de manière davantage préférée de 0,2 à 0,8 % en poids, et en particulier de 0,3 à 0,7 % en poids d'acrylamide,
(c) plus de 8 à moins de 11 % en poids sur la base du total des monomères utilisés de PVOH entièrement hydrolysé, comprenant 10 à 60 % en poids de E-PVOH, sur la base du total de PVOH (c) utilisé,
dans lequel le E-PVOH, comme déterminé par analyse RMN, a une teneur en éthylène dans la plage de 2 à 6 % en mole,
dans lequel le PVOH entièrement hydrolysé a un degré moyen d'hydrolyse dans la plage de 98,1 à 99,9 % en mole, de préférence dans la plage de 98,1 à 99,1 % en mole,
et dans lequel le degré moyen de polymérisation en poids DP_{w} de l'un quelconque des PVOH entièrement hydrolysé (c) est dans la plage de 500 à 4 000,
facultativement moins de 2 % en poids, de préférence de 0,1 à 1,5 % en poids sur la base du total des monomères utilisés d'agent tensioactif,
(h) un agent oxydant comprenant du peroxyde, de préférence du peroxyde d'hydrogène,
(i) un agent réducteur comprenant de l'acide tartrique, de l'acide ascorbique, de l'érythrobate de sodium ou leurs mélanges ;
et une étape de post-polymérisation (P4) en présence d'au moins les composants suivants :
(j) l'hydrogéno peroxyde de t-butyle,
(k) l'acide ascorbique et/ou l'érythorbate de sodium,
dans lequel les étapes de polymérisation (P1) à (P4) sont réalisées à des températures dans la plage de 45 à 95 °C, à un pH de départ dans l'étape (P1) dans la plage de 3,2 à 5,5, et à un pH au cours de la polymérisation (P2) et (P3) dans la plage de 3,2 à 5,5 et dans lequel aucun composé formaldéhyde ou de libération de formaldéhyde n'est ajouté.

40. Procédé selon la revendication 39, comprenant une étape supplémentaire (P5) d'ajout après que la post-polymérisation (P4) est finie, ou commençant après que la (les) addition(s) retardée(s) de monomère(s) (P3) est (sont) fini(s), d'un ou plusieurs des composants suivants :
(d) un ou plusieurs agents coalescents, en particulier l'acétate de butyl carbitol et/ou le carbonate de propylène, ou un mélange des deux,
(e) PVOH, en particulier comprenant E-PVOH,
(f) un (des) modificateur(s) de viscosité,
(g) l'urée.

41. Utilisation selon l'une quelconque des revendications 1 à 10 ou de la dispersion de polymère aqueuse selon l'une quelconque des revendications 11 à 25 ou pouvant être obtenue par le procédé selon l'une quelconque des revendications 29 à 40 ou de la formulation de liant selon l'une quelconque des revendications 26 à 28 pour améliorer la résistance à la chaleur, mesurée comme la valeur WATT 91 selon la norme DIN EN 14257 dans une ou plusieurs des applications suivantes :
a) la liaison de substrats poreux ou semi-poreux ensemble ou à d'autres substrats, où les substrats poreux ou semi-poreux comprennent le groupe consistant en le bois, le papier, le carton, le carton ondulé, le plastique expansé, le cuir et le textile ;
b) un adhésif fonctionnant pour le bois en tant que composant ou une colle à bois de catégorie de résistance à l'eau D3 selon la norme DIN EN 204/205 ;
c) dans les colles à bois pour la stratification de placage ;
d) comprenant un plastifiant dans le papier et les adhésifs d'emballage ;
e) dans les adhésifs pour parquet ou d'autres revêtements de sol, de mur ou de plafond ;
f) dans les liants pour moquette ;
g) dans les liants utilisés pour les panneaux de fibres de bois, le matériau à fibre de cuir, les matériaux à fibres de verre et les matériaux à fibres minérales ;
h) dans les liants pour les matériaux d'isolation constitués à partir de fibres de papier, de plastique, de verre ou minérales ;
i) dans les liants pour ciment et plâtre ;
j) dans les liants pour textile et non-tissés ou dans l'apprêt de textile.
